# EUROPEAN PATENT APPLICATION

(11) **EP 3 869 443 A1**
(43) Date of publication of application: **25.08.2021**
(21) Application number: 20206546.2
(22) Date of filing: 10.05.2012
(51) Int. Cl.: G06Q 40/02, G06Q 20/22, G06Q 20/32, G06Q 20/34

(54) **SYSTEMS, DEVICES, AND METHODS FOR MOBILE PAYMENT ACCEPTANCE, MOBILE AUTHORIZATIONS, MOBILE WALLETS, AND CONTACTLESS COMMUNICATION MECHANISMS**

(30) Priority: 10.05.2011 US 201161484588 P; 10.05.2011 US 201161484566 P; 10.05.2011 US 201161484576 P; 10.05.2011 US 201161484547 P
(62) Divisional of application: 19179714.1
(71) Applicant: Dynamics Inc., Cheswick, PA 15024 (US)
(72) Inventor: MULLEN, Jeffrey, D., Glenshaw, Pennsylvania 15116 (US); RIGATTI, Christopher, J., Pittsburgh, PA Pennsylvania 15212 (US); WALLACE, Michael, T., Payson, AZ Arizona 15024 (US)
(74) Representative: Froud, Christopher Andrew

(57) **Abstract**

A mobile telephone apparatus is disclosed having antenna means for receiving telecommunications signals; interactive display means for displaying graphical indicia and receiving manual inputs; RFID antenna means for at least one of sending an RFID signal to a payment device means and receiving the RFID signal from the payment device means, said RFID signal being indicative of a payment transaction; and storage means for storing payment information for an outgoing RFID signal for transmission through said RFID antenna means. Said payment information is stored in said storage means from the payment device means, said payment information was extracted from said payment device means by said RFID antenna means when said payment device means was within the proximity of said mobile telephone apparatus, and said payment information extracted from said payment device means is stored in said storage means. The mobile telephone has processor means for providing instructions to said storage means, wherein said processor processes said received RFID signal, said processor determines that said payment information is to be communicated through said RFID antenna, and said processor causes said RFID antenna to complete said payment transaction by sending said outgoing RFID signal through said RFID antenna.

## Description

### Background of the Invention

This invention relates to mobile devices and related systems.

### Summary of the Invention

A mobile device is provided that may be used as a point-of-sale terminal. A contactless communication channel may, for example, be formed between the mobile device and a payment card to communicate payment information from the payment card to the mobile device. The mobile device may, for example, use the communicated payment information to complete a purchase transaction that may be initiated by the mobile device. Accordingly, for example, no payment information need reside on the mobile terminal to complete a payment transaction. Instead, an application may be remotely activated, or a user of a mobile device may activate an application on the mobile device, that allows the mobile device to accept payment information directly from a payment card before and/or during a payment transaction.

A mobile device may, for example, provide a browsing activity where goods and/or services may be located for purchase on a website (e.g., an Amazon or eBay website). An application may, for example, be executed on a mobile device that may communicate with a checkout application running on a website. Payment information may be exchanged directly from a user's payment card to the checkout application using the user's mobile device. In so doing, for example, a mobile device may be used as a contactless payment acceptance terminal.

A user may be provided an option of storing payment information associated with a payment card within a memory of the mobile device. Accordingly, for example, a mobile device may store payment information associated with one or more payment accounts. In so doing, for example, a mobile device may store multiple payment accounts that may be recalled from a memory of the mobile device at the user's request to complete a payment transaction.

A mobile device may detect the presence of a card that is brought within a communication distance of a contactless interface of the mobile device. For example, a card having RFID capability may communicate with an RFID device of a mobile device when the card comes within a distance (e.g., up to 2 inches) of the mobile device. Accordingly, for example, a card type (e.g., a powered card or a non-powered card) may be identified by the mobile device.

A non-powered card may, for example, communicate one, two, and/or three tracks of magnetic stripe data to a mobile device via a contactless interface of the mobile device. Accordingly, a processor of a mobile device may identify an account type (e.g., credit or debit) that may be associated with the non-powered card by inspection of magnetic stripe data (e.g., account number) received from the non-powered card.

A powered card may, for example, communicate information (e.g., information within discretionary data fields) to a contactless interface of a mobile device. In so doing, for example, the additional information may be analyzed by a processor of the mobile device to determine that a detected card is a powered card having increased capability. Accordingly, for example, a user of a powered card may select a feature (e.g., pay with credit) on the powered card and a processor of a mobile device may detect that such a feature is selected based upon an analysis of information (e.g., discretionary data) received from the powered card.

A mobile device may validate a payment card. For example, a mobile device may request entry of a PIN after a payment card is presented to the mobile device and payment information is communicated to the mobile device by the payment card. Once entered, a mobile device may, for example, access a server associated with the payment card's issuing entity to validate the PIN. Alternately, for example, a processor of a mobile device may compare the PIN entry against local memory contents of the mobile device to validate the entered PIN.

As per another example, a mobile device may validate a payment card by requiring that the physical payment card be present during a payment transaction. Accordingly, for example, a mobile device may require that a physical payment card be tapped against the mobile device so that a contactless communication channel may be formed between the payment card and the mobile device to verify the identity of the payment card. Accordingly, for example, identifying information communicated by the payment card to the mobile device may be compared against information previously stored within a memory of the mobile device that may be associated with the payment card.

One or more payment cards may, for example, be presented to a mobile device to complete a purchase transaction. Accordingly, for example, split-payment options may be offered by a mobile device. In so doing, for example, a first payment card may be tapped against a mobile device and accepted by the mobile device as a first form of partial payment, a second payment card may be tapped against a mobile device and accepted by the mobile device as a second form of partial payment, and so on. A mobile device may, for example, allow a user to select an amount for each partial payment and may settle each partial payment amount with each respective issuer of each payment card presented for partial payment.

A mobile device may provide checkout options to a user. For example, a mobile device may allow a user to associate purchase categories (e.g., groceries, auto repair, or entertainment) to purchases transacted by the mobile device so that the user may prepare a more detailed accounting of his or her expenditures. As per another example, a rewards card may be tapped against a mobile device so that rewards card information may be credited with purchases transacted by the mobile device.

A mobile device may provide receipt delivery options to a user. For example, a mobile device may allow a user to select one of many receipt delivery options (e.g., text messaging, email or autonomous delivery to accounting software executed by a processor of the mobile device). Other receipt options may be provided by a mobile device in a graphical format (e.g., a barcode) so that proof-of-purchase may be verified by a reader (e.g., a barcode reader).

Money transfers may, for example, be transacted by a mobile device. One or more payment accounts (e.g., a car account or a utility account) may be selected by a user of a mobile device to receive a payment transacted by the mobile device. Payment information may be recalled from memory and/or entered by a user of the mobile device and then communicated to network entities by the mobile device to complete payment transactions.

Person to person transfers may, for example, be transacted by a mobile device. A user of a mobile device may, for example, tap a payment card against the mobile device to communicate source account information to the mobile device where funds are to be withdrawn. A person receiving a transfer of funds may, for example, tap his or her payment card against a device (e.g., a mobile device) to communicate target account information where funds are to be deposited. A mobile device may, for example, gather source and target account information and communicate such information to network entities to complete the funds transfer transaction.

A mobile device may, for example, provide a scanning capability (e.g., via a camera) to scan images (e.g., barcodes) that may be analyzed by a processor of the mobile device. Accordingly, for example, a mobile device may be used to scan product information from a product tag (e.g., a barcode) to select an item for purchase. As items are selected for purchase, scanned information is processed and displayed by the mobile device to produce a summary of items that may be selected for purchase. The mobile device may, for example, collect payment information from a payment card via a contactless communication channel and then use the payment information to complete a purchase transaction for the items scanned by the mobile device.

A mobile device may access electronic billing information via one or more communication capabilities of the mobile device. A merchant (e.g., a restaurant) may provide access to an electronic tab generated by the merchant (e.g., a bill generated by a restaurant for a dinner for two). Items billed by the merchant may be accessed by a user of a mobile device and displayed by the mobile device to produce a summary of items billed. The mobile device may, for example, collect payment information from a payment card via a contactless communication channel and then use the payment information to complete a purchase transaction for the billed items.

Any mobile device, such as a laptop computer, a mobile telephonic device (e.g., a cellular phone), a PDA, an MP3 player, or a positioning device (e.g., a GPS) may be a point-of-sale terminal. Accordingly, for example, a mobile device may accept payment information from any payment card, communicate such payment information via a network, complete a settlement process with network entities (e.g., an issuer or a payment server) on such a network, and provide results (e.g., an electronic receipt) of the completed purchase transaction to a user of the mobile device.

A mobile device may include a contactless communication device. Accordingly, for example, a mobile device may communicate with any card having contactless communication capability. For example, a card (e.g., a non-powered card) may include a near-field communication device (e.g., an RFID tag) that may communicate with a contactless communication device of a mobile device to form a two-way communication channel between the card and the mobile device. In so doing, for example, a non-powered card may communicate one, two, and/or three tracks of magnetic stripe information to a mobile device before and/or during a purchase transaction conducted by the mobile device.

A card (e.g., a powered card) may include a near-field communication device (e.g., an RFID) that may communicate with a contactless communication device of a mobile device. A powered card may, for example, include a battery, a processor, memory, and a manual input interface (e.g., one or more buttons) that may allow a user of the powered card to programmably communicate information to a mobile device. For example, a powered payment card may include a feature associated with a button that allows a user to, for example, pay with credit or pay with debit. Accordingly, for example, a powered payment card may communicate such a payment selection within discretionary data fields of one or more tracks of magnetic stripe data.

A powered card may, for example, include circuitry to simulate touch (e.g., a capacitance change) in order to form a contactless communication channel with a mobile device. Accordingly, for example, a powered card may be pressed against a touch-sensitive display of a mobile device and information may be communicated by the powered card to the mobile device through a series of card-simulated touches that may be detected by the touch-sensitive display of the mobile device and processed by a processor of the mobile device as data communicated by the powered card.

A powered card may, for example, include a light sensor to form a contactless communication channel with a mobile device. Accordingly, for example, a powered card may be pressed against a display of a mobile device and information may be communicated from the mobile device to the powered card through a series of light pulses generated by the display of the mobile device. A frequency, pulse width, and/or a pulse intensity of light pulses may, for example, be detected by a processor of a powered card as data communicated by a mobile device.

A powered card may, for example, include a light source (e.g., an LED) to form a contactless communication channel with a mobile device. Accordingly, for example, a powered card may emit varying light pulses from an LED that may be detected by a motion-capture device (e.g., a camera) of a mobile device as data communicated by the powered card. A powered card may, for example, include sound emission capabilities that may be detected by a microphone of a mobile device as data communicated by the powered card through a contactless communication channel. A mobile device may, for example, include sound emission capabilities that may be detected by a microphone of a powered card as data communicated by the mobile device through a contactless communication channel.

A user may communicate information directly from a card to a memory location of a mobile device via a contactless communication channel between the card and the mobile device. Accordingly, for example, a mobile device may store information (e.g., payment information) associated with one or more cards (e.g., one or more payment cards) that have been presented within a proximity to the mobile device. In so doing, for example, a mobile device may be a mobile wallet having multiple accounts (e.g., payment, identification, and travel accounts) stored within a memory of the mobile wallet where each account may be recalled from a memory of the mobile wallet at the user's request to perform a function (e.g., to complete a payment transaction).

A mobile device may detect the presence of a card that is brought within a communication distance of a contactless interface of the mobile device. A card may, for example, provide RFID capability that may communicate with an RFID device of a mobile device when the card comes within a communication distance of the mobile device. Accordingly, for example, a card type may be identified by the mobile device and information associated with the card type may be communicated from the card to the mobile device. Information received by the mobile device from the card may be autonomously categorized by the mobile device in accordance with a card type and the information may be stored and displayed to a user in accordance with the categorization.

A card (e.g., a non-powered payment card) may, for example, communicate one, two, and/or three tracks of magnetic stripe data to a mobile device via a contactless interface. Accordingly, for example, a processor of a mobile device may identify a card type (e.g., a payment card) by analyzing the magnetic stripe data received from the card. A processor of a mobile device may, for example, determine an account type (e.g., credit or debit) that may be associated with the non-powered payment card by inspection of magnetic stripe data (e.g., account number) received from the non-powered card.

A powered card may, for example, communicate information to a contactless interface of a mobile device. In so doing, for example, additional information (e.g., information presented in discretionary data) may be identified by a processor of the mobile device to determine that a detected card is a powered card having increased capability. Accordingly, for example, a user of a powered card may select a feature (e.g., pay with credit) on the powered card and a processor of a mobile device may detect that such a feature is selected based upon an analysis of the information received from the powered card.

A mobile device may, for example, validate a payment card. For example, a mobile device may request entry of a PIN after a payment card is presented to the mobile device. Once a PIN is entered, a mobile device may, for example, access a server associated with the issuing entity to validate the PIN. A processor of a mobile device may, for example, compare the PIN entry against memory contents of the mobile device to locally validate the entered PIN.

Data received from a card may, for example, be encrypted. Accordingly, for example, data received from a card may be stored in an encrypted state and decrypted upon receipt of a decryption key. A decryption key may, for example, be received from a sponsoring entity of the card (e.g., a card issuer's server). Decrypted data may, for example, be destroyed such that each usage of encrypted data may require a decryption key prior to usage. Alternately, for example, decrypted data may be stored within a protected memory of the mobile device and kept for future use.

A user of a mobile device may, for example, extract physical, or real, cards (e.g., payment, identification, travel, and rewards cards) from the user's physical wallet or purse and may convert each physical card into a virtual equivalent card that resides electronically within the mobile device. Accordingly, for example, each physical card (e.g., a powered card or a non-powered card) may be brought within a proximate, or touching, relationship with a mobile device to create a contactless communication channel. Card information (e.g., cardholder data, card data, and card configuration data) may, for example, be communicated by the card to the mobile device via such a contactless communication channel. In so doing, for example, a virtual card may be created within the mobile device that is both visibly and functionally equivalent to its physical counterpart.

A non-powered card may, for example, be virtually rendered onto a display of a mobile device in a manner that resembles its physical counterpart. Card and cardholder information may, for example, be communicated by the non-powered card to the mobile device and rendered onto a virtual card that may be displayed by a processor of the mobile device. Accordingly, for example, the functionality of the physical card (e.g., a non-powered payment card) may be imparted to the virtual card by the mobile device when the mobile device communicates information (e.g., payment information) that may be associated with the non-powered payment card. As per one example, a mobile device may communicate payment information associated with a virtual card that may be displayed on a GUI of the mobile device when the mobile device is brought within a communication distance of a merchant terminal to complete a purchase transaction (e.g., an RFID device of the mobile device may communicate with an RFID device of a merchant terminal to exchange payment information between the mobile device and the merchant terminal to complete the purchase transaction). As per another example, a mobile device may communicate payment information associated with a virtual card when the mobile device accesses a network entity (e.g., a payment server) via a wireless network (e.g., a cellular network or a Wi-Fi hotspot) to complete a purchase transaction using the communicated payment information.

A powered card may, for example, be virtually rendered onto a display of a mobile device in a manner that resembles its physical counterpart. A powered card may, for example, be virtually rendered onto a display of a mobile device in a manner that provides user interface functionality that may be associated with the physical counterpart. A powered card may, for example, communicate configuration information (e.g., button placement and associated functionality, display placement and associated functionality and input/output functionality) to a processor of a mobile device and the processor may render such a configuration onto a virtual card such that the configuration of the virtual card provides substantially identical functionality as compared to its physical counterpart.

As per one example, a powered card (e.g., a powered payment card) may include one or more buttons that when activated determine a method of payment to be used to complete a transaction (e.g., pressing one button may invoke a credit payment transaction while pressing another button may invoke a debit payment transaction). Accordingly, for example, a virtual card may be rendered onto a display of a mobile device that includes the same functionality, such that when one virtual button is touched on the virtual card, a credit payment message is communicated by the mobile device and when another virtual button is touched on the virtual card, a debit payment message is communicated by the mobile device.

As per another example, a powered card may be programmed for a particular feature by pressing a button on the powered card associated with that feature. Accordingly, for example, a powered card may communicate information associated with a selected feature to a mobile device and a processor of the mobile device may render a virtual card on a GUI of the mobile device in accordance with the selected feature. In so doing, for example, a powered card may be selected as a powered payment card with a debit feature and the selected feature may be communicated to a mobile device (e.g., the debit feature may be communicated to a mobile device within a discretionary data field of a magnetic stripe message). The resulting virtual payment card rendered onto a display of the mobile device may, for example, provide a virtual payment card having a fixed payment feature (e.g., a fixed debit payment feature).

A mobile device may, for example, challenge a user of the mobile device to enter a password (e.g., a PIN) that may be associated with a card. A mobile device may, for example, require a password before a virtual card may be created and stored within the mobile device. A mobile device may, for example, allow a virtual card to be created and stored within a mobile device, but may challenge a user of the mobile device to enter a password associated with the virtual card before it can be recalled from a memory of the mobile device and used (e.g., used to complete a purchase transaction).

A user may, for example, participate in the personalization of a virtual card that may be stored within a memory of a mobile device. A mobile device may, for example, store various logos (e.g., issuer logos, network brand logos, and merchant logos) within a memory of the mobile device and may allow a user of the mobile device to use a GUI of the mobile device to personalize an appearance of a virtual card with such logos. Accordingly, for example, a user may perform drag-and-drop operations, alphanumeric entry operations, and any other operation to personalize an appearance of a virtual card stored within a memory of the mobile device.

A processor of a mobile device may, for example, organize two or more virtual cards for display on a GUI of the mobile device. A mobile device may, for example, keep track of a number of usages of one or more virtual cards and may sort such virtual cards within a list of displayed virtual cards so that a user may easily access his or her most used virtual card from a top of the displayed list. A mobile device may, for example, track a location of a user of the mobile device and organize a list of virtual cards in accordance with such a location. Accordingly, for example, a user may be shopping within a general merchandise store (e.g., Target), a processor of the user's mobile device may track the user's position to the Target store and the processor of the user's mobile device may display a virtual card (e.g., a Target gift card) at the top of a displayed list of virtual cards based upon the user's location. In so doing, for example, a virtual card most pertinent to the user's location may be sorted to the top of a displayed list of virtual cards for easy and convenient access by the user.

A user may, for example, select one virtual card from a list of virtual cards presented by a GUI of a mobile device and may perform one of many operations on the selected virtual card. A user may, for example, conduct a purchase transaction using a virtual payment card selected from a list of virtual cards. Accordingly, for example, a user may place a mobile device within a vicinity of a merchant terminal and may communicate payment information associated with a selected payment card to the merchant terminal. As per another example, payment information associated with a selected virtual card may be communicated to a network entity (e.g., a payment server or an issuer's server) by the mobile device to complete a purchase transaction.

A mobile device may, for example, receive an electronic receipt for the purchase transaction either via a communication channel established between the mobile device and the merchant terminal or via other communication channels (e.g., text messaging or email exchange with a network entity such as a payment server). A user may, for example, view documents (e.g., receipts or bank statements) that may be associated with a virtual card. Accordingly, for example, a mobile device may collect and store documents associated with a virtual payment card and may display the associated documents upon request from the user. A GUI of a mobile device may, for example, allow a user to annotate documents that may be associated with a virtual card (e.g., a user may make a note that may be electronically attached to an electronic receipt that may be associated with a virtual payment card).

Other cards (e.g., other virtual cards) may be associated with a selected virtual card and those associations may be viewed from a GUI of the mobile device. For example, a payment card may be associated with a rewards card, such that in response to a request from a user of a mobile device, a processor of the mobile device may display the associations to the payment card and may use the associated virtual cards in support of a purchase transaction (e.g., the associated rewards card may be used during a payment transaction conducted with the selected virtual payment card so that the rewards account may accrue rewards points for the purchase transaction).

A mobile device may, for example, allow a user of the mobile device to cancel an account that may be associated with a virtual card stored within the mobile device. Accordingly, for example, a virtual payment card may be stored within a mobile device and may be associated with a payment account that is administered by an issuing entity of the payment account. A mobile device may, for example, communicate with such an issuing entity to cancel a payment account that may be associated with a virtual payment card stored within the mobile device. A mobile device may, for example, negotiate with other issuing entities to determine when new payment card offers may be available and to allow a user of the mobile device to accept such payment card offers. Once accepted, a user of a mobile device may conduct other transactions with the newly accepted payment card offers (e.g., account balance(s) associated with existing virtual cards may be transferred to the newly accepted payment card via a request made by the mobile device and an issuing server).

Any mobile device, such as a laptop computer, a mobile telephonic device (e.g., a cellular phone), a PDA, an MP3 player, or a positioning device (e.g., a GPS) may be a mobile wallet. Accordingly, for example, a mobile device may accept payment and other information from any payment card, store and display such information as a virtual card on a GUI of the mobile device, communicate such payment information via a wired and/or a wireless network, complete a settlement process with network entities (e.g., an issuer or a payment server) on such a network, and provide results (e.g., an electronic receipt) of the completed purchase transaction to a display of the mobile device.

A mobile device may include a contactless communication device. Accordingly, for example, a mobile device may communicate with any card having contactless communication capability. For example, a card (e.g., a non-powered card) may include a near-field communication device (e.g., an RFID tag) that may communicate with a contactless communication device of a mobile device to form a two-way communication channel between the card and the mobile device. In so doing, for example, a non-powered card may communicate one, two, and/or three tracks of magnetic stripe information to a mobile device before and/or during a purchase transaction conducted by the mobile device.

A card (e.g., a powered card) may include a near-field communication device (e.g., an RFID) that may communicate with a contactless communication device of a mobile device. A powered card may, for example, include a battery, a processor, memory, and a manual input interface (e.g., one or more buttons) that may allow a user of the powered card to programmably communicate information to a mobile device. For example, a powered payment card may include a feature associated with a button that allows a user to, for example, pay with credit or pay with debit. Accordingly, for example, a powered payment card may communicate such a payment selection within discretionary data fields of one or more tracks of magnetic stripe data.

A powered card may, for example, include circuitry to simulate touch (e.g., a capacitance change) in order to form a contactless communication channel with a mobile device. Accordingly, for example, a powered card may be pressed against a touch-sensitive display of a mobile device and information may be communicated by the powered card to the mobile device through a series of card-simulated touches that may be detected by the touch-sensitive display of the mobile device and processed by a processor of the mobile device as data communicated by the powered card.

A powered card may, for example, include a light sensor to form a contactless communication channel with a mobile device. Accordingly, for example, a powered card may be pressed against a display of a mobile device and information may be communicated from the mobile device to the powered card through a series of light pulses generated by the display of the mobile device. A frequency, pulse width, and/or a pulse intensity of light pulses may, for example, be detected by a processor of a powered card as data communicated by a mobile device.

A powered card may, for example, include a light source (e.g., an LED) to form a contactless communication channel with a mobile device. Accordingly, for example, a powered card may emit varying light pulses from an LED that may be detected by a motion-capture device (e.g., a camera) of a mobile device as data communicated by the powered card. A powered card may, for example, include sound emission capabilities that may be detected by a microphone of a mobile device as data communicated by the powered card through a contactless communication channel. A mobile device may, for example, include sound emission capabilities that may be detected by a microphone of a powered card as data communicated by the mobile device through a contactless communication channel.

A mobile device may be used as an authorization terminal to conduct transactions (e.g., purchase transactions) using the mobile device. Purchase transactions may, for example, be completed by a mobile device using payment information stored within a memory of the mobile device. In order to conduct a purchase transaction, a processor of a mobile device may, for example, first require security credentials to authorize a purchase transaction. Security credentials may, for example, be any type of information that may be communicated to a mobile device by a contactless device using a contactless communication channel (e.g., an RFID communication channel).

Security credentials may, for example, be payment information that may be communicated to a processor of a mobile device by a payment card (e.g., a powered or a non-powered payment card). Accordingly, for example, if payment information communicated to a processor of a mobile device by a physical payment card matches payment information previously stored within a memory of the mobile device, the mobile device may authorize the purchase transaction.

As per an example, a mobile device may receive payment information (e.g., a payment account number and an expiration date) from a payment card via a contactless communication channel and may store such payment information within a memory of the mobile device for future use. Prior to conducting a requested purchase transaction, a processor of a mobile device may first require that a physical payment card be used to authorize the purchase transaction. Accordingly, for example, the same physical payment card that was used to originally communicate payment information to a processor of the mobile device may be required to once again communicate payment information in order to authorize the purchase transaction. Upon verification that the newly communicated payment information matches at least a portion of payment information contained within a memory of the mobile device, the mobile device may authorize the payment transaction.

A powered card may, for example, communicate security credentials that may contain a dynamic security code and other information (e.g., at least a portion of a payment account number or a cardholder's name). Accordingly, for example, an application executed by a processor of a mobile device may synchronize with a dynamic security code generation algorithm that may be executed by a processor of the powered card. In so doing, for example, a processor of the mobile device may generate a dynamic security code in accordance with the security code generation algorithm and may compare the generated dynamic security code to a security code received from a powered card during authorization of a purchase transaction. If a match exists, for example, the purchase transaction may be authorized by the mobile device.

A mobile device may, for example, communicate security credentials received from a physical card via a contactless communication channel to a network entity (e.g., an authorization server). Accordingly, for example, the authorization server may analyze the received security credentials and may either confirm or deny that the security credentials are authentic. A message may, for example, be communicated from the authorization server to the mobile device to either authorize or deny the purchase transaction.

A mobile device may, for example, arrange security credentials (e.g., payment information) stored within a memory of the mobile device as one or more virtual payment cards that may be provided on a display of the mobile device. Accordingly, for example, a user of a mobile device may select one or more virtual cards from a displayed list of virtual cards for use during a purchase transaction. In so doing, for example, a user may retrieve a physical payment card from his or her wallet that corresponds to the virtual payment card selected for use and may communicate (e.g., via a contactless communication channel) payment information from the physical payment card to a processor of the mobile device. Upon verification that the communicated payment information matches at least a portion of payment information stored within a memory of the mobile device, a processor of the mobile device may authorize the purchase transaction using the stored payment information.

A physical payment card may, for example, be used as a master physical payment card to authorize purchase transactions that are to be completed by the mobile device using stored payment information that does not match payment information received from the physical payment card. For example, a master physical payment card may be associated with a particular issuer and a mobile device may store several virtual cards within a memory of the mobile device having the same issuer. Upon receipt of payment information from the master physical payment card, a processor of a mobile device may authorize purchase transactions using one or more virtual cards stored within a memory of the mobile device that may share the same issuer as the issuer of the master physical payment card.

Other devices (e.g., RFID enabled keys) may, for example, communicate security credentials via a contactless communication channel to a processor of a mobile device to authorize other transactions (e.g., non-purchase transactions) that may be conducted by the mobile device. Accordingly, for example, a processor of a mobile device may communicate commands to a wireless device (e.g., a user's car) to perform certain functions (e.g., start the engine of the user's car). In so doing, for example, a user may present an ignition key to the mobile device to communicate security credentials (e.g., a key code matched to the user's car) from the ignition key to the mobile device to authorize the requested function. Upon verification that the key code matches the key code of the user's car, for example, a processor of the mobile device may authorize the requested function and may communicate the associated command to the user's car to execute the requested function.

Any function may, for example, be authorized to be performed by a processor of a mobile device. Accordingly, for example, any decision to perform a function by a mobile device may be authorized by a processor of the mobile device. In so doing, for example, any function (e.g., checking a balance of a banking account or transitioning from paper bank statements to e-statements) that may be performed by a processor of a mobile device may be authorized by the processor upon verification that security credentials (e.g., a bank account number) communicated to the processor from a contactless communication device (e.g., a bank card associated with the bank account) matches at least a portion of security credentials (e.g., banking information) that may be stored within a memory of the mobile device.

Any mobile device, such as a laptop computer, a mobile telephonic device (e.g., a cellular phone), a PDA, an MP3 player, or a positioning device (e.g., a GPS) may be an authorization terminal. Accordingly, for example, any mobile device may accept payment information from any physical payment card, store such payment information within a memory of the mobile device, require that the same (or associated) physical payment card communicate payment information to a processor of the mobile device, and complete a purchase transaction with network entities (e.g., an issuer or a payment server) upon verification that the communicated payment information matches at least a portion of payment information stored within a memory of the mobile device.

A mobile device may include a contactless communication device. Accordingly, for example, a mobile device may communicate with any card having contactless communication capability. For example, a card (e.g., a non-powered card) may include a near-field communication device (e.g., an RFID tag) that may communicate with a contactless communication device of a mobile device to form a two-way communication channel between the card and the mobile device. In so doing, for example, a non-powered card may communicate one, two, and/or three tracks of magnetic stripe information to a processor of a mobile device before and/or during a purchase transaction conducted by the mobile device.

A card (e.g., a powered card) may include a near-field communication device (e.g., an RFID) that may communicate with a contactless communication device of a mobile device. A powered card may, for example, include a battery, a processor, memory, and a manual input interface (e.g., one or more buttons) that may allow a user of the powered card to programmably communicate information to a mobile device. For example, a powered payment card may include a feature associated with a button that allows a user to, for example, pay with credit or pay with debit. Accordingly, for example, a powered payment card may communicate such a payment selection within discretionary data fields of one or more tracks of magnetic stripe data.

A powered card may, for example, include circuitry to simulate touch (e.g., a capacitance change) in order to form a contactless communication channel with a mobile device. Accordingly, for example, a powered card may be pressed against a touch-sensitive display of a mobile device and information may be communicated by the powered card to the mobile device through a series of card-simulated touches that may be detected by the touch-sensitive display of the mobile device and processed by a processor of the mobile device as data communicated by the powered card.

A powered card may, for example, include a light sensor to form a contactless communication channel with a mobile device. Accordingly, for example, a powered card may be pressed against a display of a mobile device and information may be communicated from the mobile device to the powered card through a series of light pulses generated by the display of the mobile device. A frequency, pulse width, and/or a pulse intensity of light pulses may, for example, be detected by a processor of a powered card as data communicated by a mobile device.

A powered card may, for example, include a light source (e.g., an LED) to form a contactless communication channel with a mobile device. Accordingly, for example, a powered card may emit varying light pulses from an LED that may be detected by a motion-capture device (e.g., a camera) of a mobile device as data communicated by the powered card. A powered card may, for example, include sound emission capabilities that may be detected by a microphone of a mobile device as data communicated by the powered card through a contactless communication channel. A mobile device may, for example, include sound emission capabilities that may be detected by a microphone of a powered card as data communicated by the mobile device through a contactless communication channel.

A card may include a dynamic magnetic communications device, which may take the form of a magnetic encoder or a magnetic emulator. A magnetic encoder, for example, may be utilized to modify information that is located on a magnetic medium, such that a magnetic stripe reader may then be utilized to read the modified magnetic information from the magnetic medium. A magnetic emulator, for example, may be provided to generate electromagnetic fields that directly communicate data to a read-head of a magnetic stripe reader. A magnetic emulator, for example, may communicate data serially to a read-head of the magnetic stripe reader. A magnetic emulator, for example, may communicate data in parallel to a read-head of the magnetic stripe reader.

All, or substantially all, of the front surface, as well as the rear surface, of a card may be implemented as a display (e.g., bi-stable, non bi-stable, LCD, or electrochromic display). Electrodes of a display may be coupled to one or more touch sensors, such that a display may be sensitive to touch (e.g., using a finger or a pointing device) and may be further sensitive to a location of the touch. The display may be sensitive, for example, to objects that come within a proximity of the display without actually touching the display.

A dynamic magnetic stripe communications device may be implemented on a multiple layer board (e.g., a two-layer flexible printed circuit board). A coil for each track of information that is to be communicated by the dynamic magnetic stripe communications device may then be provided by including wire segments on each layer and interconnecting the wire segments through layer interconnections to create a coil. For example, a dynamic magnetic stripe communications device may include two coils such that two tracks of information may be communicated to two different read-heads included in a read-head housing of a magnetic stripe reader. A dynamic magnetic communications device may include, for example, three coils such that three tracks of information may be communicated to three different read-heads included in a read-head housing of a magnetic stripe reader.

Input and/or output devices may be included on a card, for example, to facilitate data exchange with the card. For example, an integrated circuit (IC) may be included on a card and exposed from the surface of the card. Such a chip (e.g., an EMV chip) may communicate information to a chip reader (e.g., an EMV chip reader). A contactless device (e.g., one or more RFID antennas and one or more associated RFID chips) may be included in a card, for example, to exchange information with an RFID device.

One or more detectors may be provided in a card, for example, to sense the presence of an external object, such as a person or device, which in turn, may trigger the initiation of a communication sequence with the external object. The sensed presence of the external object may then be communicated to a processor of the card, which in turn may direct the exchange of information between a card and the external object. Accordingly, timing aspects of the information exchange between an external object and the various I/O devices provided on a card may also be determined by circuitry (e.g., a processor) provided on a card.

The sensed presence of the external object or device may include the type of object or device that is detected and, therefore, may then determine the type of communication that is to be used with the detected object or device. For example, a detected object may include a determination that the object is a read-head housing of a magnetic stripe reader. Such an identifying detection, for example, may activate a dynamic magnetic stripe communications device so that information may be communicated to the read-head of the magnetic stripe reader. Information may be communicated by a dynamic magnetic stripe communications device, for example, by re-writing magnetic information on a magnetic medium that is able to be read by a magnetic stripe reader or electromagnetically communicating data to the magnetic stripe reader.

As per another example, a detected object may include a determination that the object is an RFID enabled device. Such an identifying detection, for example, may cause RFID data to be communicated by a processor of a card to an RFID chip of a card. The RFID data may be temporarily contained within the RFID chip until the RFID data is communicated to a detected RFID device by an RFID antenna on the card. The RFID data may, for example, be erased from the RFID chip after being communicated to the RFID device.

A card may, for example, be an assembly of multiple printed circuit boards, electronics, one or more RFID antennas, and one or more associated RFID chips. An RFID antenna may, for example, be fabricated on one printed circuit board and an associated RFID chip may, for example, be attached to a separate printed circuit board. Communications (e.g., RFID data transfer between the RFID chip and the RFID antenna) may, for example, be transferred between separate printed circuit boards via conductive paths established between the separate printed circuit boards. An RFID antenna and an associated RFID chip may, for example, reside on the same printed circuit board so as to reduce a number of conductive traces that may be required between separate printed circuit boards.

A card assembly may, for example, be laminated such that all printed circuit boards, electronic circuitry and components are covered in a polymer. For example, an electronics package may be provided between two layers of polymer and a liquid polymer may be introduced between these layers and hardened to form a card. A laminated card assembly may, for example, be devoid of electrical contacts on either surface of the laminated card. A laminated card assembly may, for example, provide electrical contacts (e.g., EMV chip contacts) on one or more surfaces of a laminated card assembly.

A mobile device, such as a laptop computer, a mobile telephonic device (e.g., a cellular phone), a PDA, an MP3 player, or a positioning device (e.g., a GPS) may include one or more RFID antennas and associated RFID chips. Accordingly, for example, any mobile device may establish an RFID communication channel with any other RFID enabled device (e.g., an RFID enabled card). A computing device, such as a desktop computer, may be an RFID enabled device. Accordingly, for example, any RFID enabled device (e.g., an RFID enabled card or an RFID enabled mobile device) may establish an RFID communication channel with any RFID enabled computing device.

### Brief Description of the Drawings

The principles and advantages of the present invention can be more clearly understood from the following detailed description considered in conjunction with the following drawings, in which the same reference numerals denote the same structural elements throughout, and in which:
FIG. 1 is an illustration of a mobile devices constructed in accordance with the principles of the present invention;
FIG. 2 is an illustration of a network topology constructed in accordance with the principles of the present invention;
FIG. 3 is an illustration of a mobile payment system constructed in accordance with the principles of the present invention;
FIG. 4 is an illustration of a display screen constructed in accordance with the principles of the present invention;
FIG. 5 is an illustration of a display screen constructed in accordance with the principles of the present invention;
FIG. 6 is an illustration of a display screen constructed in accordance with the principles of the present invention;
FIG. 7 is an illustration of a display screen constructed in accordance with the principles of the present invention;
FIG. 8 is an illustration of a display screen constructed in accordance with the principles of the present invention;
FIG. 9 is an illustration of a display screen constructed in accordance with the principles of the present invention;
FIG. 10 is an illustration of a display screen constructed in accordance with the principles of the present invention;
FIG. 11 is an illustration of a display screen constructed in accordance with the principles of the present invention;
FIG. 12 is an illustration of a display screen constructed in accordance with the principles of the present invention;
FIG. 13 is an illustration of a display screen constructed in accordance with the principles of the present invention;
FIG. 14 is an illustration of a display screen constructed in accordance with the principles of the present invention;
FIG. 15 is an illustration of a display screen constructed in accordance with the principles of the present invention;
FIG. 16 is an illustration of a display screen constructed in accordance with the principles of the present invention;
FIG. 17 is an illustration of a display screen constructed in accordance with the principles of the present invention;
FIG. 18 is an illustration of a display screen constructed in accordance with the principles of the present invention;
FIG. 19 is an illustration of a display screen constructed in accordance with the principles of the present invention;
FIG. 20 is an illustration of a display screen constructed in accordance with the principles of the present invention;
FIG. 21 is an illustration of a display screen constructed in accordance with the principles of the present invention;
FIG. 22 is an illustration of a mobile funds transfer system constructed in accordance with the principles of the present invention;
FIG. 23 is an illustration of a mobile payment system constructed in accordance with the principles of the present invention;
FIG. 24 is an illustration of a mobile payment system constructed in accordance with the principles of the present invention;
FIG. 25 is an illustration of a mobile payment system constructed in accordance with the principles of the present invention;
FIG. 26 is a flow chart of processes constructed in accordance with the principles of the present invention;
FIG. 27 is an illustration of a mobile devices constructed in accordance with the principles of the present invention;
FIG. 28 is an illustration of a network topology constructed in accordance with the principles of the present invention;
FIG. 29 is an illustration of a mobile wallet system constructed in accordance with the principles of the present invention;
FIG. 30 is an illustration of a display screen constructed in accordance with the principles of the present invention;
FIG. 31 is an illustration of a display screen constructed in accordance with the principles of the present invention;
FIG. 32 is an illustration of a mobile wallet system constructed in accordance with the principles of the present invention;
FIG. 33 is an illustration of a display screen constructed in accordance with the principles of the present invention;
FIG. 34 is an illustration of a display screen constructed in accordance with the principles of the present invention;
FIG. 35 is an illustration of a display screen constructed in accordance with the principles of the present invention;
FIG. 36 is an illustration of a display screen constructed in accordance with the principles of the present invention;
FIG. 37 is an illustration of a display screen constructed in accordance with the principles of the present invention;
FIG. 38 is an illustration of a display screen constructed in accordance with the principles of the present invention;
FIG. 39 is an illustration of a display screen constructed in accordance with the principles of the present invention;
FIG. 40 is an illustration of a display screen constructed in accordance with the principles of the present invention;
FIG. 41 is an illustration of a mobile wallet system constructed in accordance with the principles of the present invention;
FIG. 42 is an illustration of a mobile wallet system constructed in accordance with the principles of the present invention;
FIG. 43 is an illustration of a display screen constructed in accordance with the principles of the present invention;
FIG. 44 is an illustration of a display screen constructed in accordance with the principles of the present invention;
FIG. 45 is an illustration of a mobile wallet system constructed in accordance with the principles of the present invention;
FIG. 46 is an illustration of a display screen constructed in accordance with the principles of the present invention;
FIG. 47 is an illustration of a display screen constructed in accordance with the principles of the present invention;
FIG. 48 is an illustration of a display screen constructed in accordance with the principles of the present invention;
FIG. 49 is an illustration of a display screen constructed in accordance with the principles of the present invention;
FIG. 50 is an illustration of a mobile application constructed in accordance with the principles of the present invention;
FIG. 51 is a flow chart of processes constructed in accordance with the principles of the present invention;
FIG. 52 is an illustration of mobile devices constructed in accordance with the principles of the present invention;
FIG. 53 is an illustration of a network topology constructed in accordance with the principles of the present invention;
FIG. 54 is an illustration of a mobile authorization system constructed in accordance with the principles of the present invention;
FIG. 55 is an illustration of a display screen constructed in accordance with the principles of the present invention;
FIG. 56 is an illustration of a display screen constructed in accordance with the principles of the present invention;
FIG. 57 is an illustration of a display screen constructed in accordance with the principles of the present invention;
FIG. 58 is an illustration of a mobile authorization system constructed in accordance with the principles of the present invention;
FIG. 59 is an illustration of a mobile authorization system constructed in accordance with the principles of the present invention;
FIG. 60 is an illustration of a display screen constructed in accordance with the principles of the present invention;
FIG. 61 is a flow chart of processes constructed in accordance with the principles of the present invention;
FIG. 62 is an illustration of cards constructed in accordance with the principles of the present invention;
FIG. 63 is an illustration of a network topology constructed in accordance with the principles of the present invention;
FIG. 64 is an illustration of mobile devices constructed in accordance with the principles of the present invention;
FIG. 65 is an illustration of a card constructed in accordance with the principles of the present invention;
FIG. 66 is an illustration of a card constructed in accordance with the principles of the present invention;
FIG. 67 is an illustration of a card constructed in accordance with the principles of the present invention;
FIG. 68 is an illustration of a card constructed in accordance with the principles of the present invention;
FIG. 69 is an illustration of a card constructed in accordance with the principles of the present invention;
FIG. 70 is an illustration of a card constructed in accordance with the principles of the present invention;
FIG. 71 is an illustration of a system constructed in accordance with the principles of the present invention;
FIG. 72 is an illustration of a system constructed in accordance with the principles of the present invention; and
FIG. 73 is an illustration of process flow charts constructed in accordance with the principles of the present invention.

### Detailed Description of the Invention

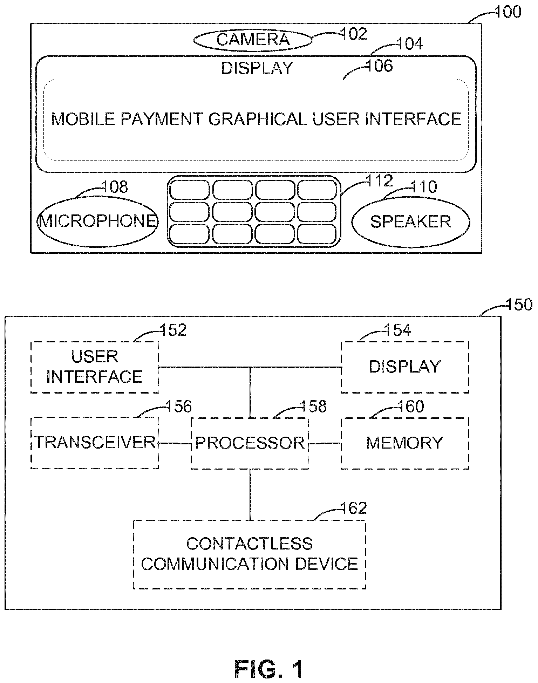

FIG. 1 shows mobile device 100. Mobile device 100 may be any mobile device, such as a mobile telephonic device (e.g., cell phone), a PDA, an electronic tablet, an MP3 player, or a locating device (e.g., a GPS device). Accordingly, mobile device 100 may be operated in a mobile environment while a user of mobile device 100 goes about his or her daily activities (e.g., driving, shopping, walking, dining, and exercising). In addition, for example, mobile device 100 may perform multiple functions simultaneously (e.g., a person may carry on a conversation while at the same time browsing and purchasing products on the internet).

Mobile device 100 may include audio processing devices (e.g., microphone 108 and speaker 110). Accordingly, for example, mobile device 100 may receive voice commands from a user via microphone 108 and may process such commands to perform a function. For example, a user may place mobile device 100 into a desired operational mode by speaking a command into microphone 108 that is associated with the desired operational mode. In so doing, for example, mobile device 100 may engage in hands-free operation by receiving voice commands via microphone 108 and performing functions associated with the received voice commands.

Mobile device 100 may receive data input via microphone 108. For example, a voice-band modem may generate signals in a voice-band frequency range that may be received by microphone 108. A processor of mobile device 100 may interpret the received audible information as data signals and may process the data signals as, for example, data values and/or control data input.

Mobile device 100 may include camera 102. Camera 102 may capture one or more frames of video data and store the video data within a memory of mobile device 100. Accordingly, for example, a processor of mobile device 100 may receive one or more frames of video information via camera 102 and may process the video information as data values and/or control data input. In so doing, for example, mobile device 100 may receive optical information that is sensed by camera 102 during a series of one or more video capture events that produce one or more frames of video information. The one or more frames of video information may contain one or more data elements (e.g., pixels) having properties (e.g., color, intensity, or contrast) that may be interpreted by a processor of mobile device 100 as data values and/or control data.

Mobile device 100 may include manual input interface 112. Manual input interface 112 may, for example, include keys and/or buttons that may be sensitive to manual input, such as a touch or an application of pressure. Accordingly, for example, a user of mobile device 100 may enter information into mobile device 100 via manual interface 112 to cause a processor of mobile device 100 to enter a particular mode of operation. Manual interface 112 may, for example, be used for data entry (e.g., dialing a phone number or entering data as may be requested by mobile device 100) during a particular mode of operation of mobile device 100.

Mobile device 100 may include display 104. Display 104 may provide visible information that may be utilized by a user during interaction with mobile device 100. A portion or all of display 104 may be touch sensitive such that objects making contact with display 104 or objects coming within a proximity of display 104 may be detected by a processor of mobile device 100. Accordingly, for example, mobile payment graphical user interface 106 may be provided by display 104 so that graphical information may be displayed to solicit and/or receive data entry from a user. In so doing, for example, touch-sensitive graphical user interface devices such as radio buttons, textual input boxes, virtual buttons, pull-down menus, and navigational tools may be used for data entry to initiate, change, and/or support functions performed by mobile device 100.

FIG. 1 shows architecture 150. User interface 152 may, for example, be included within architecture 150 to allow user interaction with architecture 150. For example, a dedicated key pad or keyboard may be included within user interface 152 to allow alphanumeric data entry into architecture 150.

Architecture 150 may include one or more displays 154. Display 154 may, for example, be touch-sensitive. Accordingly, for example, display 154 may be utilized for alphanumeric data entry using virtual buttons that may be rendered onto touch-sensitive portions of display 154. In so doing, for example, touching virtual buttons that may be associated with alphabetic and numeric characters of display 154 may be detected by processor 158 as alphanumeric data entry.

Alphanumeric entry boxes may, for example, be rendered onto display 154. A user may, for example, activate a cursor within such an alphanumeric entry box by touching an area within the alphanumeric entry box. A user may utilize user interface 152 and/or a virtual keypad rendered onto display 154 to select alphanumeric characters to be placed within the alphanumeric entry box in accordance with a character position identified by an activated cursor within the alphanumeric entry box. In so doing, for example, processor 158 may receive alphanumeric characters as typed into a alphanumeric entry box of display 154 and may use such alphanumeric characters as data input.

Display 154 may, for example, provide data output from architecture 150. For example, display 154 may communicate data using a series of light pulses. Accordingly, for example, processor 158 may cause one or more portions of display 154 to produce light pulses having varying characteristics (e.g., duration, intensity, and frequency) that may communicate information via such light pulses. In so doing, for example, a device that may be sensitive to light pulses may receive information communicated by display 154 via light pulses having varying characteristics. Display 154 may, for example, communicate data using visual information that may be substantially static (e.g., a barcode).

Architecture 150 may include one or more transceivers 156. Transceiver 156 may communicate information to and/or may receive information from one or more devices. Transceiver 156 may, for example, communicate via a wireless interface with one or more cellular stations of a mobile network. Accordingly, for example, transceiver 156 may allow a mobile device (e.g., mobile device 100 of FIG. 1) to establish a communications channel with an associated cellular station. In so doing, for example, a mobile device (e.g., mobile device 100 of FIG. 1) may exchange information (e.g., voice, text, data, or multimedia) with one or more terrestrial networks (e.g., the internet or a payment network) via an associated cellular station. As per another example, transceiver 156 may exchange information with one or more other mobile devices via one or more associated cellular stations.

Transceiver 156 may, for example, communicate via a wireless interface with one or more mobile devices directly. Accordingly, for example, transceiver 156 may communicate with another mobile device without first accessing a mobile network via a cellular station of the mobile network. As per another example, transceiver 156 may, for example, communicate via a wireless interface with one or more network devices (e.g., a wireless access point) directly. Accordingly, for example, a mobile device (e.g., mobile device 100 of FIG. 1) may directly connect to a wired and/or a wireless network via any one or more wireless standards (e.g., Bluetooth or Wi-Fi) to exchange information with other devices that may be connected to the wired and/or wireless network. In so doing, for example, a wired and/or wireless network may be accessed by a mobile device without first accessing a mobile network via a cellular station of a mobile network.

Architecture 150 may include contactless communication device 162, which may communicate via any one or more contactless communication methodologies, such as for example, near field communications (e.g., RFID), Bluetooth, touch simulation, light pulsing (e.g., via an LED), and electromagnetic data communication (e.g., via a dynamic magnetic stripe communications device). Accordingly, for example, contactless communication device 162 may be compatible with any contactless device, such as for example, an RFID enabled payment card and a contactless reader (e.g., a magnetic stripe reader or an NFC reader).

A non-powered card may, for example, communicate with contactless communications device 162. Contactless communication device 162 may, for example, establish a carrier field (e.g., an RF field) that may be modulated by a device (e.g., an RFID tag) of a non-powered payment card. In so doing, for example, an RFID tag of a non-powered payment card may derive operational power from an RF field provided by contactless communications device 162 and may communicate information (e.g., one, two, and/or three tracks of magnetic stripe data) to contactless communication device 162 by modulating the RF field produced by contactless communications device 162.

A powered card may, for example, communicate with contactless communication device 162. A powered card may, for example, include a processor, a battery, a memory, wireless communications devices (e.g., a dynamic magnetic stripe communications device or RFID) and other electronics (e.g., buttons) that may allow a user to interact with the powered card to perform one or more functions. Accordingly, for example, a powered card may be used to communicate specific information to contactless communication device 162 by selective interaction with the buttons of the powered card. In so doing, for example, a powered card may be used to interactively communicate magnetic stripe information (e.g., one, two, and/or three tracks of magnetic stripe data) to contactless communication device 162 by sending a signal to a processor of a powered card (e.g., by pressing a button on the powered card) to initiate such communications.

Contactless communication device 162 may receive variable data sets from a powered card based upon, for example, manual input provided to a powered card. For example, a button associated with an on-line purchase may be pressed on the powered card that causes a variable data set (e.g., account number and expiration date) to be communicated from the powered card to contactless communication device 162.

Discretionary data may, for example, be communicated by a powered card based upon which button was pressed on the powered card. In so doing, for example, a security code (e.g., "111") may be communicated within a discretionary data field when a button associated with a particular feature (e.g., pay with credit) is pressed on the powered card. As per another example, a different security code (e.g., "222") may be communicated within a discretionary data field when a button associated with a different feature (e.g., pay with debit) is pressed on the powered card. Accordingly, for example, processor 158 may identify what type of device may be in communication with contactless communication device 162 by analyzing the data communicated to contactless communication device 162.

Architecture 150 may include memory 160 and/or processor 158 may include internal memory. Accordingly, for example, application code may be stored within memory 160 and/or processor 158 and executed by processor 158 in support of functions performed by architecture 150. For example, an application (e.g., a graphical user interface) may be executed by architecture 150 and displayed onto display 154, which may be used to interact with a user of a mobile device (e.g., mobile device 100 of FIG. 1). Persons skilled in the art will appreciate that executable application code may be communicated to architecture 150 via any one or more interfaces of architecture 150 (e.g., user interface 152, display 154, transceiver 156, and/or contactless communication device 162).

Application data (e.g., payment card data) may be stored within memory 160 and accessed by processor 158 during operation. For example, payment card data may be stored within memory 160 and recalled by processor 158 during a financial transaction being conducted by a mobile device (e.g., mobile device 100 of FIG. 1). Once recalled, processor 158 may communicate the payment card data via transceiver 156 and/or contactless communication device 162 to complete a financial transaction.

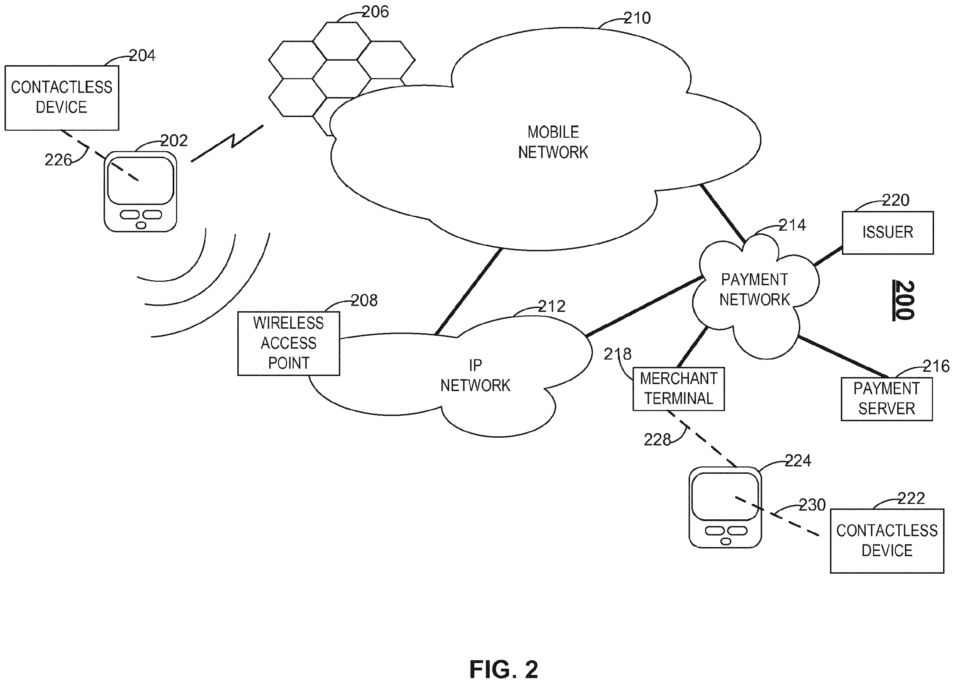

FIG. 2 shows network topology 200 that may include, for example, mobile device 202 (e.g., a mobile telephonic device, a PDA, an electronic tablet, a laptop, a GPS unit, or an MP3 player). Mobile device 202 may, for example, include a contactless interface that may initiate, sustain, and/or terminate communication channel 226 between contactless device 204 and mobile device 202. Contactless device 204 and mobile device 202 may communicate via channel 226 using any number of contactless mediums, which may include for example, visible, audible, capacitive, electromagnetic, magnetic, and/or RF mediums.

Mobile device 202 may provide one or more transceivers that may communicate with one or more wired networks (e.g., IP network 212 and/or payment network 214) and/or one or more wireless networks (e.g., mobile network 210). Mobile device 202 may, for example, communicate with a cellular station over a wireless radio interface (e.g., a GSM air interface) that may be used by mobile device 202 to communicate information (e.g., voice and data) to cellular network access infrastructure 206 (e.g., one or more GSM base transceiver stations, base station controllers, and mobile switching centers). Persons skilled in the art will appreciate that cellular network access infrastructure 206 may utilize any multiple access architecture, such as for example, a code-division multiple access architecture and/or a time-division multiple access architecture.

Mobile device 202 may, for example, communicate with wireless access point 208 over a wireless interface (e.g., a Bluetooth interface or a Wi-Fi interface). Accordingly, for example, mobile device 202 may access one or more wired networks (e.g., IP network 212 and/or payment network 214) and/or one or more wireless networks (e.g., mobile network 210) without the need to first gain access to cellular network access infrastructure 206.

Contactless device 204 may, for example, be a powered card or a non-powered card (e.g., a powered payment card or a non-powered payment card). Accordingly, for example, payment information (e.g., a payment account number and a card expiration date) may be communicated from contactless device 204 to mobile device 202 in support of a financial transaction being conducted by mobile device 202. In so doing, for example, items for purchase on IP network 212 (e.g., the internet) may be accessed by a browser of mobile device 202 via an access point (e.g., wireless access point 208 or cellular network access infrastructure 206). Mobile device 202 may, for example, complete a purchase transaction by first obtaining required payment information from contactless device 204 and then communicating such payment information to network entities (e.g., payment server 216 and/or issuer 220).

Payment server 216 may, for example, contact issuer 220 via a network (e.g., payment network 214) with payment information received from mobile device 202 for authorization of a purchase. Once authorized, payment transaction information may be recorded onto a receipt that may be delivered to mobile device 202 via any one or more delivery options (e.g., via a short messaging service of mobile network 210 or an email delivery service of IP network 212).

A payment receipt may, for example, be provided to mobile device 202 as a proof-of-purchase object (e.g., a barcode) that may be provided to a display of mobile device 202 and read by other computing equipment (e.g., a barcode scanner) for proof-of-purchase confirmation.

A mobile device (e.g., mobile device 224) may, for example, include a contactless communication device (e.g., an RFID) that may initiate, sustain, and/or terminate contactless communication channel 228 with merchant terminal 218. Accordingly, for example, mobile device 224 may communicate payment information to merchant terminal 218 to complete a financial transaction. In so doing, for example, mobile device 224 may first receive payment information via contactless communication channel 230 from contactless device 222 (e.g., a non-powered card), temporarily store the received payment information within a memory of mobile device 224, and forward the payment information onto merchant terminal 218 to complete a financial transaction. As per another example, mobile device 224 may provide previously stored financial information associated with one or more payment cards (e.g., one or more non-powered payment cards). Accordingly, for example, payment information may be recalled from a memory of mobile device 224 and communicated to merchant terminal 218 via contactless communication channel 228 to complete a financial transaction using merchant terminal 218.

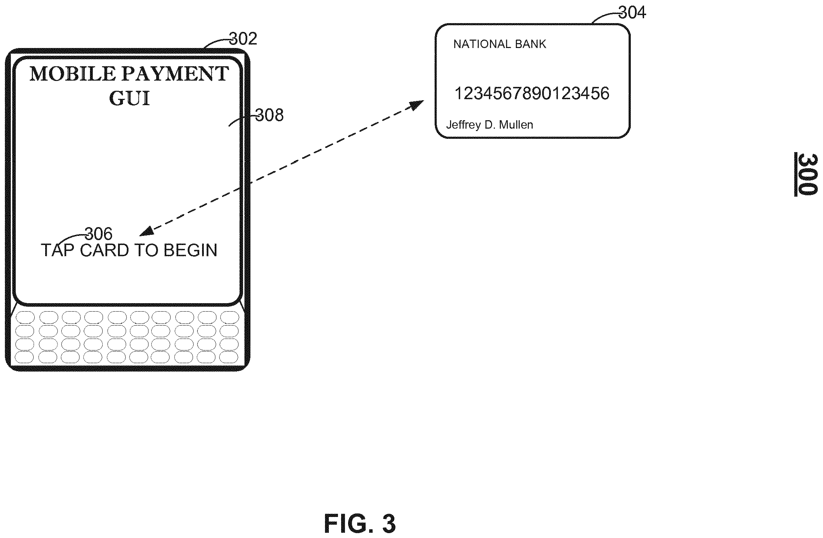

FIG. 3 shows system 300, which may include mobile device 302 and payment card 304. Mobile device 302 may, for example, be a laptop computer, a PDA, a mobile telephonic device (e.g., a smartphone), an MP3 player, a GPS, or any other mobile device. Display 308 may be a touch-sensitive display (e.g., sensitive to a change in capacitance). Payment card 304 may, for example, be a powered payment card or a non-powered payment card.

Mobile device 302 and payment card 304 may each include a contactless communication device (e.g., RFID) that may communicate via a contactless communication channel that may be formed between mobile device 302 and payment card 304 after coming into proximity to one another. Payment card 304 may, for example, be tapped onto display 308 of mobile device 302 to establish a proximity relationship that forms a communication channel between payment card 304 and mobile device 302. As per another example, payment card 304 may be brought within a proximity distance (e.g., up to two inches) of mobile device 302 to establish a contactless communication channel between mobile device 302 and payment card 304.

A processor of mobile device 302 may, for example, execute application code that may generate a graphical user interface (GUI) onto display 308 of mobile device 302. Message 306 of a GUI may invite a user of mobile device 302 to begin a mobile payment by tapping a payment card against display 308. As per another example, by tapping payment card 304 against mobile device 302, mobile device 302 may autonomously determine that a mobile payment is desired and then generate a mobile payment GUI onto display 302.

Mobile device 302 may, for example, autonomously determine a type of card that may be tapped against it. For example, a processor of mobile device 302 may receive payment card data that may be indicative of a non-powered payment card (e.g., payment card data received from a non-powered card may not provide a security code associated with the card). As per another example, a processor of mobile device 302 may receive data that may be indicative of a powered card (e.g., payment card data received may contain a dynamically generated security code). Payment card data received from a powered card may, for example, include a dynamic security code that may change depending upon a type of transaction being conducted (e.g., debit or credit transaction).

As per another example, payment card 304 may be a powered payment card that may include electronics to simulate a human touch (e.g., payment card 304 may generate a change in capacitance that may be sensed by display 308). Through a series of simulated touches, payment card 304 may communicate a series of data bits to display 308, which may then be processed by a processor of mobile device 302. In so doing, for example, a contactless communication channel may be established where data is transferred from payment card 304 to mobile device 302 via a series of simulated touches.

Payment card 304 may, for example, include a light sensor. Accordingly, for example, payment card 304 may be sensitive to light pulses generated within a region of display 308. The light sensor of payment card 304 may receive a series of light pulses, which may be construed by a processor of payment card 304 as data generated by mobile device 302. In so doing, for example, payment card 304 may receive an optical data stream represented by a series of light pulses generated by display 308. As such, a two-way communication channel may be formed, where simulated touches may generate a data stream from payment card 304 to mobile device 302 and light pulses may generate a data stream from mobile device 302 to payment card 304.

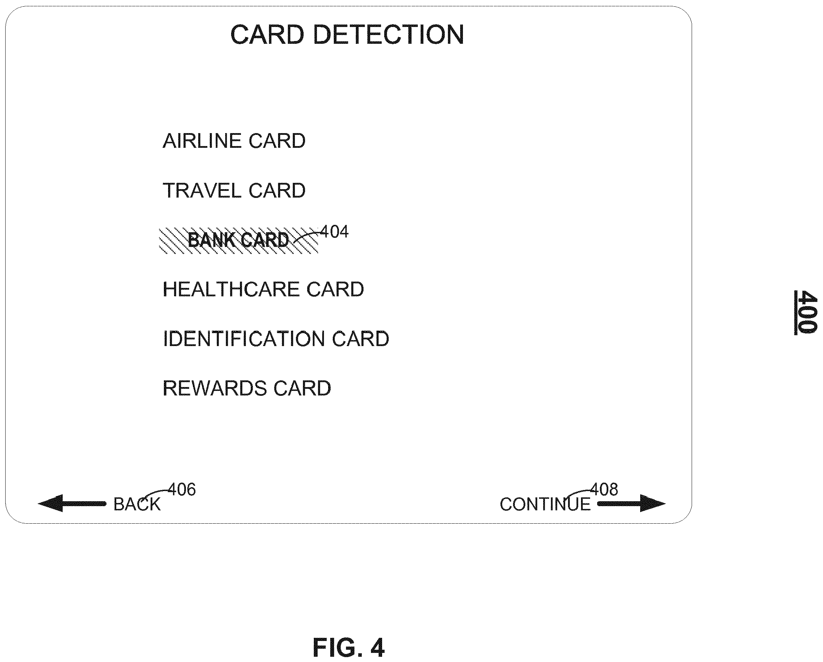

FIG. 4 shows GUI 400, that may be generated by a processor of a mobile device and provided onto a display of the mobile device. GUI 400 may, for example, generate results of a card detection operation that may be performed by a processor of a mobile device. For example, card information may be exchanged between a card and a mobile device via a contactless communication channel that may identify a type of card that is being presented to the mobile device. Any type of card may be detected by a processor of a mobile device, such as for example, an airline card, a travel card, a bank card, a healthcare card, an identification card, and a loyalty rewards card. A card number communicated to a mobile device may, for example, be indicative of a card type (e.g., bank card 404) that is presented to a mobile device. Accordingly, for example, a processor of a mobile device may identify a card type presented to the mobile device by analyzing a card number received from the card and may indicate the identified card type via GUI 400 (e.g., the identified card type may be generated onto GUI 400 having a different graphical presentation than the other card types listed).

A GUI may, for example, provide navigation aids. A GUI may, for example, provide navigation aids that may be touch sensitive. For example, GUI 400 may include navigation aids 406 and 408 to enable a user to revert to a previous GUI or advance to a subsequent GUI. Accordingly, for example, a user may touch an area on a display of a mobile device that displays a navigation aid to activate the touched navigation aid. In so doing, for example, a user may touch navigation aid 406 to revert to the previous GUI or a user may touch navigation aid 408 to advance to the next GUI.

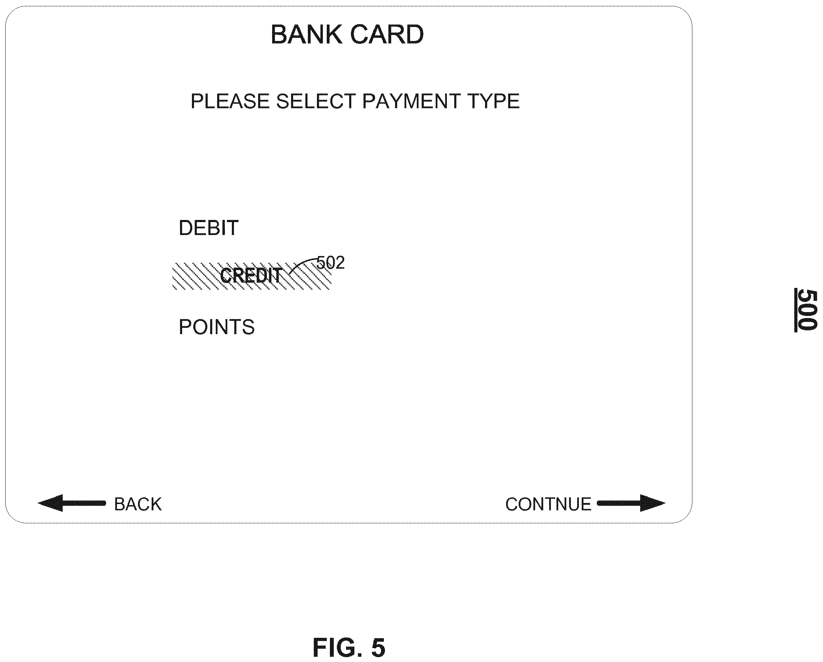

FIG. 5 shows GUI 500, that may be generated by a processor of a mobile device and provided onto a display of the mobile device. GUI 500 may, for example, generate results of a payment card detection operation that may be performed by a processor of a mobile device. A non-powered payment card may, for example, communicate a single payment card number that may be associated with a number of payment options (e.g., debit, credit, or points). Accordingly, for example, GUI 500 may be generated to allow a user an opportunity to select which payment option (e.g., credit option 502) from a number of payment options is to be used to settle a payment transaction. Once identified, a payment option selection (e.g., credit option 502) may be communicated by a mobile device to an issuer of the payment card to settle the transaction using the selected payment option.

As per another example, a powered payment card may include a user interface to allow a user to select from a number of payment options. A button on a powered payment card may, for example, be associated with one payment method (e.g., pay with credit) and another button may, for example, be associated with another payment method (e.g., pay with points). Data associated with the selected payment method may be communicated from a powered payment card to a mobile device. Accordingly, for example, a processor of a mobile device may detect the payment method communicated by a powered payment card (e.g., as communicated within a discretionary data field) and may autonomously generate a graphical representation of the payment method selected (e.g., GUI 500 may autonomously generate a graphical representation that credit method 502 was selected).

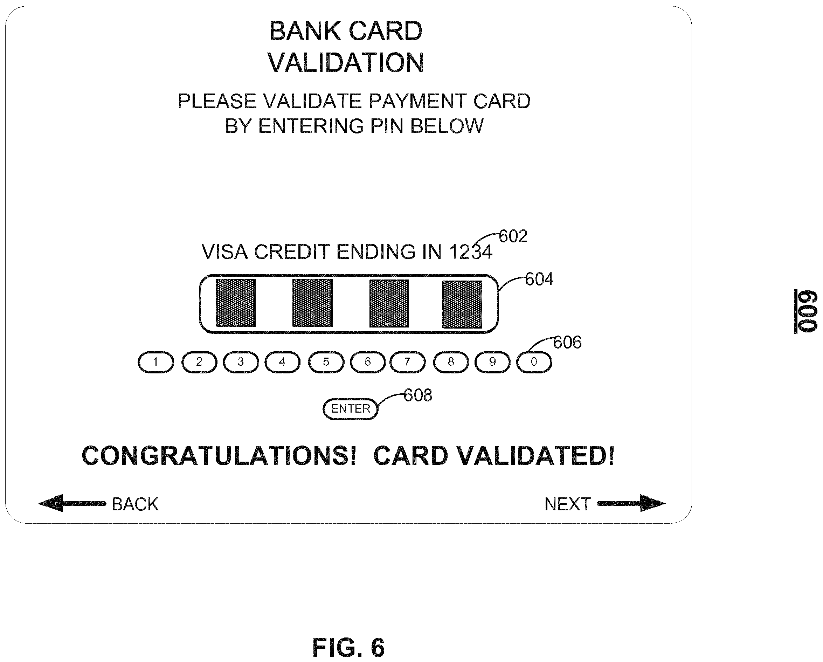

FIG. 6 shows GUI 600 that may be generated by a processor of a mobile device and provided onto a display of the mobile device. GUI 600 may, for example, include a bank card validation screen as may be generated by a processor of a mobile device. A mobile device may, for example, challenge a user of the mobile device to enter a PIN that may be associated with a payment card (e.g., VISA credit 602) that was previously presented to the mobile device for payment. GUI 600 may, for example, generate virtual pin pad 606 that may include touch-sensitive buttons having alphanumeric indicia associated with each button. A user may touch one or more buttons of pin pad 606 that may correspond to respective characters of a PIN and an indication of the user's selection may appear within area 604. Characters displayed within area 604 may, for example, be hidden for security purposes.

Activation of virtual button 608 may, for example, cause a processor of a mobile device to compare a PIN entered by a user of the mobile device to a PIN that may be associated with the payment card presented to the mobile device for payment. The PIN may, for example, be stored within protected memory of the mobile device, so that a processor of the mobile device may locally determine the validity of the PIN entered. Alternately, for example, the mobile device may communicate the PIN to the issuing bank for a remote validation of the PIN entered. Persons skilled in the art will appreciate that a user interface (e.g., a keypad or keyboard) of a mobile device may be used instead of virtual pin pad 606 to enter the one or more characters of a PIN.

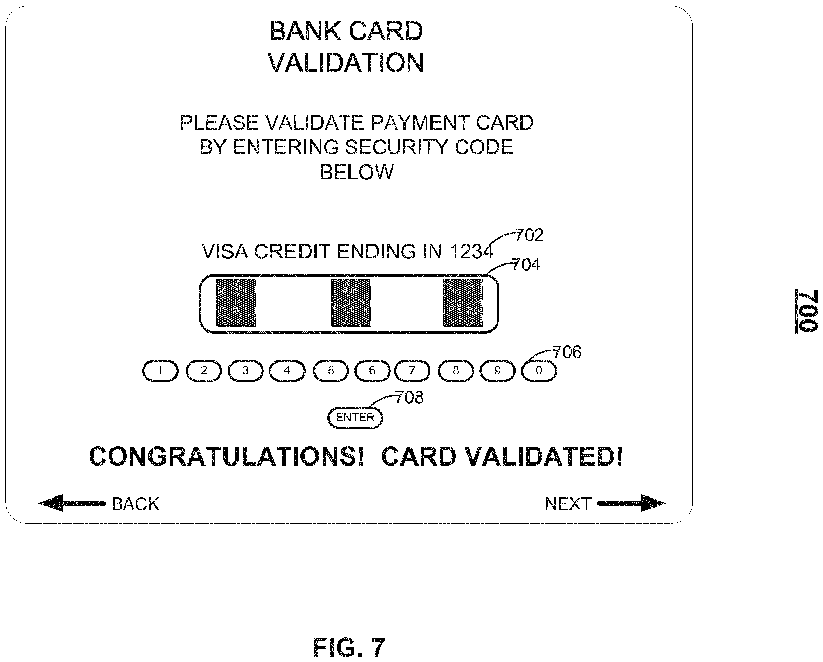

FIG. 7 shows GUI 700 that may be generated by a processor of a mobile device and provided onto a display of the mobile device. GUI 700 may, for example, include a bank card validation screen as may be generated by a processor of a mobile device. A mobile device may, for example, challenge a user of the mobile device to enter a security code that may be associated with a payment card (e.g., VISA credit 702) that was previously presented to the mobile device for payment. Such a security code (e.g., a CVV code) may, for example, be printed on the back of the payment card.

GUI 700 may, for example, generate virtual pin pad 706 that may include touch-sensitive buttons having alphanumeric indicia associated with each button. A user may touch one or more buttons of pin pad 706 that may correspond to respective characters of a security code and an indication of the user's selection may appear within area 704. Characters displayed within area 704 may, for example, be hidden for security purposes.

Activation of virtual button 708 may, for example, cause a processor of a mobile device to compare a security code entered by a user of the mobile device to a security code that may be associated with the payment card presented to the mobile device for payment. The security code may, for example, be stored within protected memory of the mobile device, so that a processor of the mobile device may locally determine the validity of the security code entered. Alternately, for example, the mobile device may communicate the security code to the issuing bank for a remote validation of the security code entered. Persons skilled in the art will appreciate that a user interface (e.g., a keypad or keyboard) of a mobile device may be used instead of virtual pin pad 706 to enter the one or more characters of a security code.

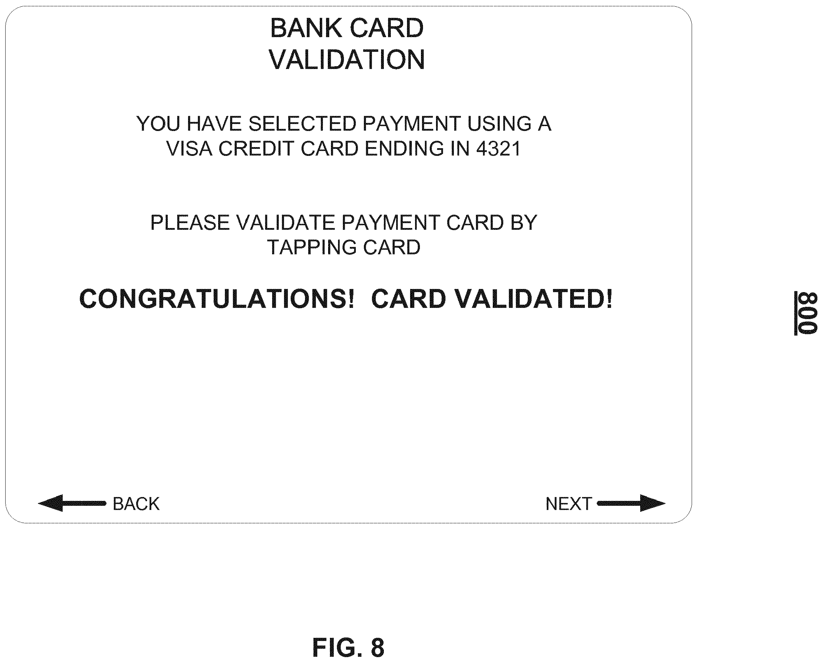

FIG. 8 shows GUI 800 that may be generated by a processor of a mobile device and provided onto a display of the mobile device. GUI 800 may, for example, include a bank card validation screen as may be generated by a processor of a mobile device. A mobile device may, for example, maintain memory of one or more payment cards previously presented to the mobile device for payment. A mobile device may, for example, allow a user to store payment information within the mobile device that may be associated with a payment card to be used at some point in the future.

Accordingly, for example, a user may recall payment information previously stored in memory of a mobile device in order to complete a purchase transaction using the mobile device. In order to validate that a user of a mobile device is actually the owner of payment information recalled from memory of the mobile device, GUI 800 may challenge the user to present the physical payment card whose associated payment information was recalled from memory. In so doing, for example, GUI 800 may prevent a fraudulent user of a mobile device from authorizing a purchase using payment information stored in memory of the mobile device that is not owned by the fraudulent user.

A user may, for example, be required to present a physical payment card to GUI 800 by placing (or tapping) the physical payment card within a proximity of a display of a mobile device that is generating GUI 800. In so doing, for example, a contactless communication channel (e.g., an RFID communication channel) may be established between the physical payment card and the mobile device, such that payment information may be communicated from the physical payment card to the mobile device. Upon verification that the communicated payment information matches payment information stored in memory of the mobile device, the payment information may be validated and authorized to be communicated from the mobile device to a network entity (e.g., a payment server or the issuer of the payment card) for settlement of the purchase transaction.

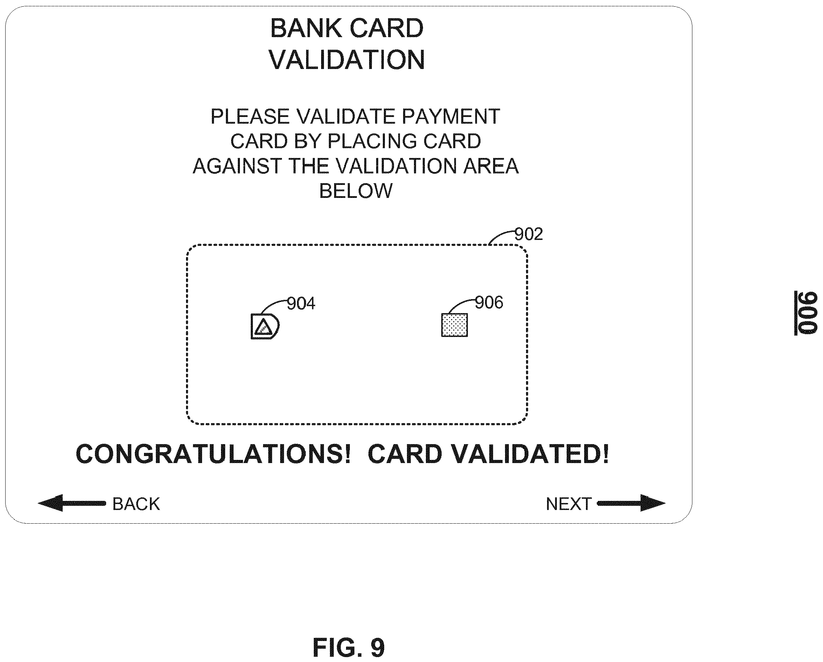

FIG. 9 shows GUI 900 that may be generated by a processor of a mobile device and provided onto a display of the mobile device. GUI 900 may, for example, include validation area 902 as generated by a processor of a mobile device. Validation area 902 may, for example, include one or more data exchange areas (e.g., data exchange areas 904 and 906). Icon 904 may, for example, be generated by GUI 900 within an area of a display of a mobile device that may be sensitive to touch (e.g., an area that may be sensitive to a capacitance change). Area 906 may, for example, be generated by GUI 900 within an area of a display of a mobile device that may generate pulses of light.

A powered payment card may be validated for use by a mobile device through an exchange data with the powered payment card via data exchange areas 904 and 906. For example, a powered payment card may be pressed against validation area 902 so that a touch simulation device of the powered payment card aligns with data exchange area 904 and a light sensing device aligns with data exchange area 906. Accordingly, for example, the powered payment card may communicate information to a processor of a mobile device by simulating a series of touches in data exchange area 904 and data may be communicated to the powered payment card by a processor of the mobile device by generating a series of light pulses in data exchange area 906. In so doing, for example, a mobile device and a powered payment card may exchange validation information so that payment card information stored within the mobile device may be validated for use.

A mobile device may, for example, include a motion capture device (e.g., a camera) and a powered payment card may, for example, include a light source (e.g., an LED). Accordingly, for example, information (e.g., validation information) may be exchanged between a mobile device and a powered payment card such that information communicated by the powered payment card may be communicated as a series of light pulses while the camera of the mobile device captures the series of light pulses. A processor of the mobile device may construe the series of light pulses as information that may be used, for example, as validation information.

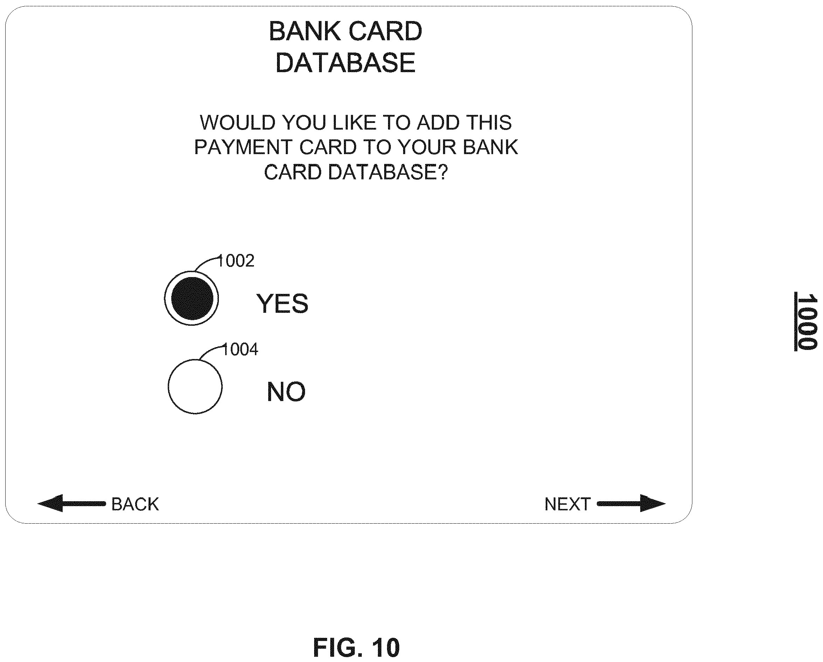

FIG. 10 shows GUI 1000 that may be generated by a processor of a mobile device and provided onto a display of the mobile device. GUI 1000 may be generated, for example, after payment card information has been communicated by either of a non-powered payment card or a powered payment card to a mobile device. A user of a mobile device may, for example, elect whether to store such payment card information within a memory location of the mobile device. If a user chooses not to store payment information received from a payment card (e.g., as elected by selection of radio button 1004), a mobile device may delete all payment information previously received from a payment card after the payment information is used to complete a purchase transaction. Accordingly, a user wishing to use the same payment card to complete a payment transaction in the future is required to present the payment card to the mobile device so that the payment card may communicate payment card information to the mobile device in order to complete the payment transaction. If a user chooses to store payment information received from a payment card (e.g., as elected by selection of radio button 1002), a mobile device may store a portion of, or all, payment information previously received from a payment card in accordance with a user's preference.

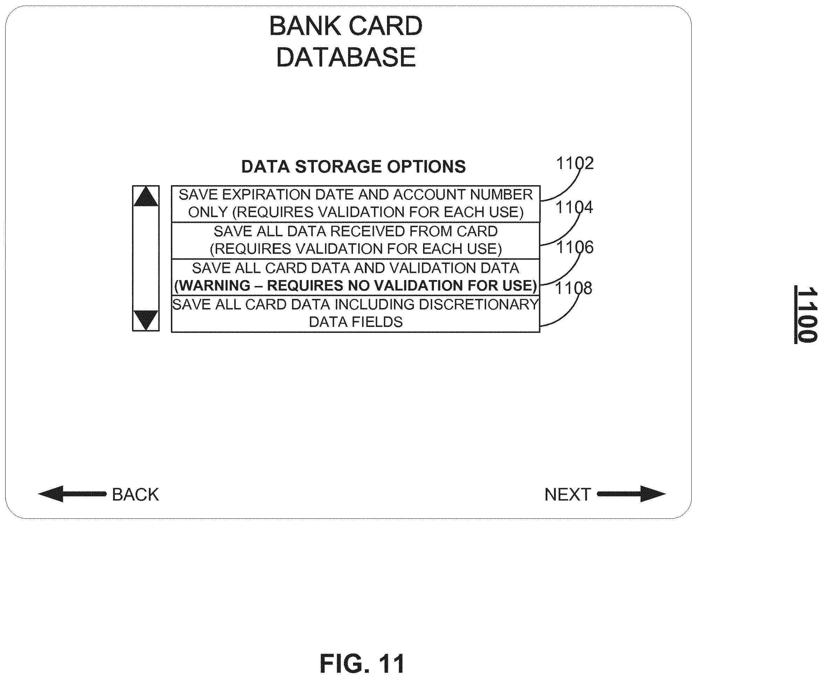

FIG. 11 shows GUI 1100 that may be generated by a processor of a mobile device and provided onto a display of the mobile device. GUI 1100 may, for example, offer storage options to a user of a mobile device that has elected to store a portion of, or all, payment card information previously communicated to the mobile device by a non-powered card or a powered card. A data storage option may, for example, be selected by a user of a mobile device (e.g., by touching a portion of text box 1102) that stores only a portion (e.g., an expiration date and payment card account number) of the payment card information into a memory of the mobile device. Accordingly, for example, a payment card may communicate one, two, and/or three tracks of magnetic stripe data to a mobile device, but the only payment information stored within a memory of the mobile device upon selection of text box 1102 is the expiration date and the payment card account number. All remaining information that may have been communicated by the payment card to the mobile device may be deleted by the mobile device.

Selection of text box 1104 may, for example, cause all payment information communicated by a payment card to a mobile device to be stored within a memory of the mobile device. Accordingly, for example, a mobile device may use a portion or all of the payment information stored within its memory to complete a purchase transaction. However, payment card validation information (e.g., a PIN or security code) may still be required to be entered by a user of the mobile device before the mobile device may complete a purchase transaction with the stored payment information.

Selection of box 1106 may, for example, cause all payment information communicated by a payment card to a mobile device to be stored within a memory of the mobile device. All validation information (e.g., a PIN or security code) that may be entered by a user of the mobile device to validate payment information received from a payment card may also be stored within a memory of the mobile device. Accordingly, for example, a mobile device may use a portion or all of the payment information, including validation information, stored within its memory to complete a purchase transaction.

Selection of box 1108 may, for example, cause all payment information, including discretionary data fields, communicated by a payment card to a mobile device to be stored within a memory of the mobile device. A powered payment card may, for example, allow a user of the powered payment card to select one or more options that may be associated with the powered payment card. A powered payment card may, for example, communicate indicia associated with the one or more selected options within discretionary data fields of magnetic stripe data that may be communicated to a mobile device.

For example, a user of a powered payment card may elect to pay for a purchase using rewards points by pressing a button on the powered payment card that is associated with a rewards points payment option. Accordingly, for example, a powered payment card may insert a rewards points payment code within a discretionary data field of a first, a second and/or a third track of magnetic stripe data and may communicate all track data, including the discretionary data field, to a mobile device. In so doing, for example, a processor of a mobile device may detect such a payment code within a discretionary data field and may store payment information within a memory of the mobile device that is indicative of the rewards points payment code contained within the discretionary data field.

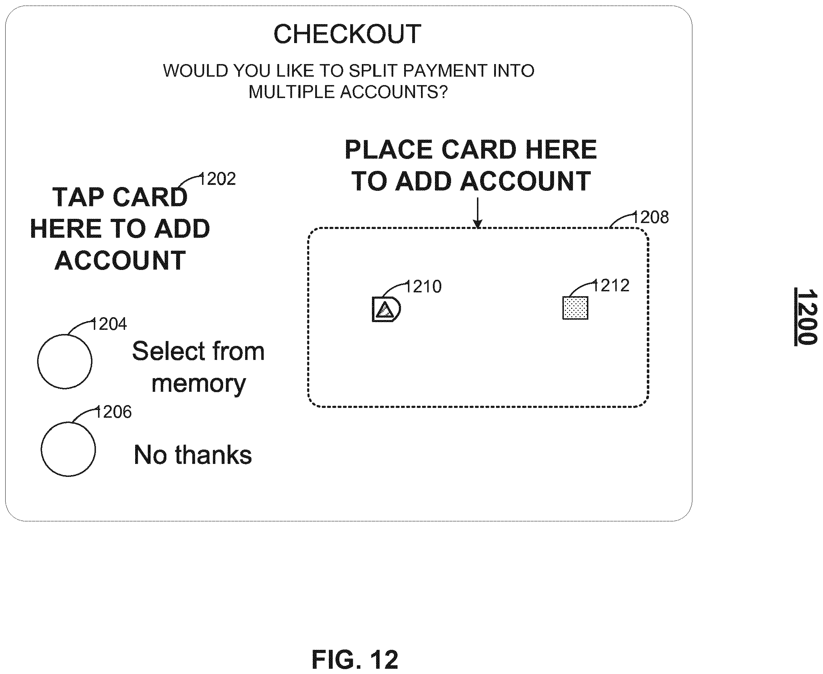

FIG. 12 shows GUI 1200 that may be generated by a processor of a mobile device and provided onto a display of the mobile device. GUI 1200 may, for example, offer a split-payment option to a user of a mobile device, such that the user may elect to split payment for a selected purchase between two or more payment accounts. The mobile device may, for example, communicate payment information for each of the selected split-payment accounts to respective network entities (e.g., issuer and payment servers) of the selected split-payment accounts in order to settle the amounts owing on each of the selected split-payment accounts.

A user may, for example, select option 1202 (e.g., by tapping a payment card against a display of a mobile device or by presenting a payment card within proximity to the mobile device). In so doing, for example, a contactless communication channel (e.g., an RFID communication channel) may be established between the payment card and the mobile device so that payment information associated with the payment card may be communicated by the payment card to the mobile device and used as a split-payment account for a selected purchase.

An alternate contactless communication channel may be established, for example, by pressing a payment card against portion 1208. Accordingly, for example, a payment card may communicate payment information associated with the payment card to a processor of a mobile device by simulating a series of touches at a location within portion 1208 (e.g., at icon 1210) and the processor of the mobile device may communicate information to the payment card by generating a series of light pulses at a location within portion 1208 (e.g., at location 1212). In so doing, for example, payment information associated with the payment card may be received by a processor of a mobile device and used as a split-payment account to partially cover the purchase price of a selected purchase.

Other contactless communication channels may be established. For example, a processor of a payment card may communicate payment information to a mobile device by generating a series of light pulses (e.g., via an LED of the payment card), which may be captured by a camera of the mobile device and construed by a processor of the mobile device as payment information. As per another example, a payment card may communicate payment information using audible sounds that may be received by a microphone of a mobile device and construed by a processor of the mobile device as payment information.

A payment account may, for example, be selected from a memory of the mobile device (e.g., by selecting radio button 1204). Associated payment information may, for example, be selectively retrieved from a memory of the mobile device and used by the mobile device as a split-payment account in partial payment for a selected purchase. Alternately, for example, a split-payment option may be declined by a user of a mobile device (e.g., by selecting radio button 1206).

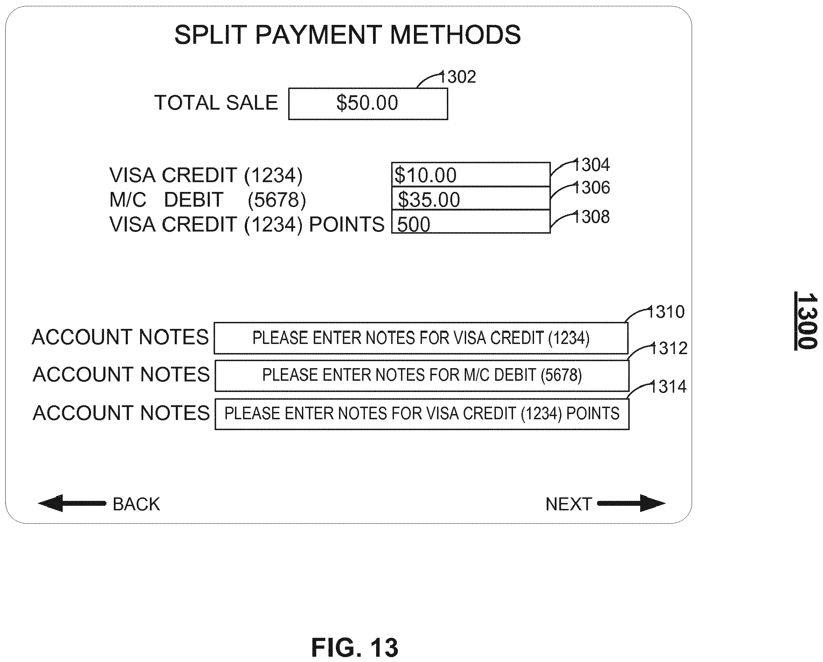

FIG. 13 shows GUI 1300 that may be generated by a processor of a mobile device and provided onto a display of the mobile device. GUI 1300 may, for example, provide a summary of split-payment methods that may have been selected by a user of a mobile device. Portion 1302, for example, may display an amount owing for a particular selected purchase. Portions 1304-1308 may, for example, include an alphanumeric entry box to allow a user of a mobile device to input payment amounts (e.g., currency or points) that he or she wishes to apply towards a total amount owing as may be displayed in portion 1302. Portions 1304-1308 may, for example, include those payment accounts that a user of a mobile device previously selected as split-payment accounts.

Accordingly, for example, a user may elect to charge $10 against a VISA credit account, $35 against a M/C debit account, and 500 rewards points earned by the VISA credit account towards full payment of a $50 amount owing for a particular selected purchase. In so doing, for example, a mobile device may communicate with selected network entities (e.g., issuer and payment servers) to provide transaction information associated with each split-payment account selected, so that each amount owing may be settled.

Portions 1310-1314 may, for example, include alphanumeric entry boxes to allow a user of a mobile device to make comments on each account selected as a split-payment account. Accordingly, for example, a mobile device may communicate notes that may be entered by a user within portions 1310-1314 to, for example, a payment server. In so doing, for example, receipts and/or account statements that may be generated by a network entity (e.g., an issuer or a payment server) may include such notes so that a user of a mobile device, upon receipt of such receipts and/or account statements, may be reminded of his or her thought process when such a split-payment was transacted.

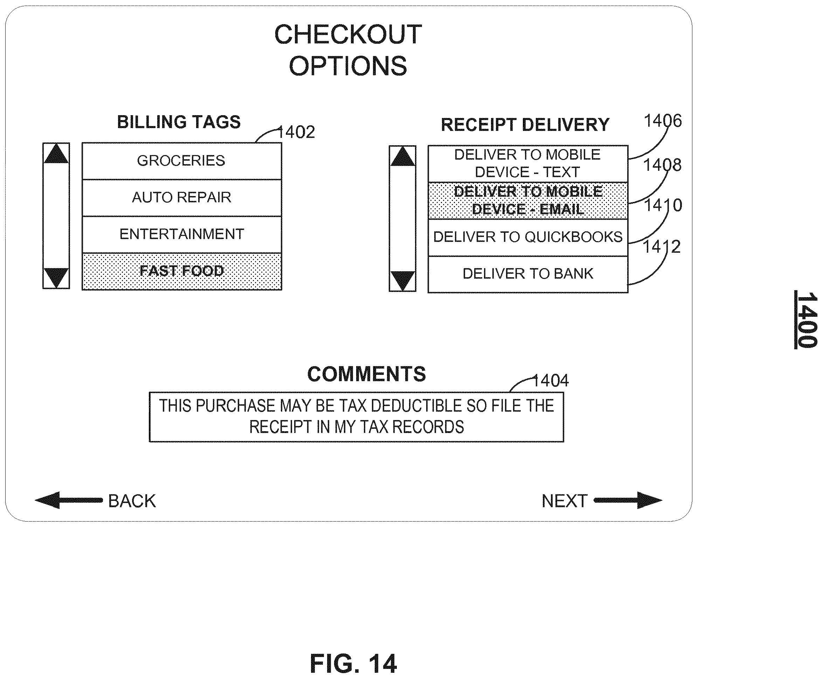

FIG. 14 shows GUI 1400 that may be generated by a processor of a mobile device and provided onto a display of the mobile device. GUI 1400 may, for example, offer checkout options to a user of a mobile device to allow a level of integration between the user and one or more issuers of associated payment accounts used by the mobile device in settlement of a selected purchase.

For example, a user may utilize billing tag list 1402 to categorize a selected purchase into one of many purchase categories. A user's physical presence may, for example, be at a fast-food establishment where the user may select a food purchase from the fast-food establishment's website using a browser of the user's mobile device. Payment information used to settle a transaction associated with the selected food purchase may be collected and/or generated by the mobile device and forwarded onto a payment server and/or an associated issuer for settlement. In addition, the mobile device may forward a billing tag selected from billing tag list 1402 to the associated issuer, so that the associated issuer may label the selected transaction on a billing statement using the selected billing tag. In so doing, for example, a user may customize an accounting of the issuer's billing statement by using a mobile device to communicate payment information and billing tags associated with selected purchases to track expenditures within the various purchase categories of billing tag list 1402.

A user of a mobile device may select receipt delivery options for each purchase that may be transacted using a mobile device. For example, a receipt delivery list may be generated by a processor of a mobile device so that a user of the mobile device may select a receipt delivery option. Accordingly, for example, the selected receipt delivery option along with payment information may be communicated by a mobile device to a payment server and the payment server (or other entity) may direct a delivery of the receipt based upon the receipt delivery option received.

A user may, for example, request delivery of a purchase receipt via text messaging (e.g., by selecting receipt delivery option 1406). In so doing, for example, a mobile device may complete a purchase transaction with an entity of a payment network (e.g., a payment server) and may further request that the payment server deliver a receipt to the mobile device in a text message format. Accordingly, for example, in addition to providing payment information to the payment server, a mobile device may also provide a text message address (e.g., an SMS text message address) to the payment server. In so doing, for example, the mobile device may receive a receipt of the completed purchase transaction from the payment server via a text message at the text message address provided by the mobile device.

As per another example, a multimedia message (e.g., an MMS message containing rich content) may be received by a mobile device from a payment server in the form of, for example, a graphical image (e.g., barcode), such that the barcode may be used as a proof-of-purchase (e.g., proof-of-purchase of an airline ticket and an associated barcode that gains access by the user of the mobile device to a particular seating assignment on the airplane.)

A receipt (e.g., a receipt received via multimedia messaging) may, for example, provide rewards to a user of the mobile device for completing payment transactions via a mobile device. For example, a mobile device may communicate indicia to a payment server that identifies a payment transaction as a mobile payment transaction. The communicated mobile payment indicia may, for example, trigger a payment server to not only provide a receipt for the purchase transaction to the mobile device, but also to provide a multimedia game that may be executed by the mobile device. As per an example, an animated trivia question may be communicated to a mobile device via an MMS message upon completion of a mobile payment transaction. Upon successfully answering the animated trivia question, a user of the mobile device may receive another MMS message that contains a coupon for free merchandise from the merchant whose goods were just purchased. As per another example, a receipt received from a payment server may itself contain coupons for discounted or free merchandise without requiring that a user of the mobile device perform any further actions beyond completing a mobile payment purchase with a mobile device.

A user may, for example, request delivery of a purchase receipt via email (e.g., by selecting receipt delivery option 1408). In so doing, for example, an email address associated with the user may be provided by the mobile device to a payment server in addition to any required payment information that may be required to complete a purchase transaction. Accordingly, for example, a payment server may address a receipt to an email address received from a mobile device during a mobile payment transaction.

A user may, for example, request delivery of a purchase receipt (e.g., by selecting receipt delivery option 1410) via a format that may be compatible with an accounting software package (e.g., QuickBooks). For example, a mobile device may allow a user to categorize a particular purchase within a particular expense account (e.g., an office supply expense account) during a purchase transaction. Once the purchase transaction is completed, an electronic receipt may be communicated to the mobile device that may be tagged with the categorized expense account (e.g., the accounting software package may have its own address that receipts may be delivered to). In so doing, for example, an accounting software package that may be executing on the mobile device may autonomously access the electronic receipt from its own address and may autonomously enter the expense in the correct category so that all purchases made by the mobile device may be correctly accounted for within the accounting software package.

A user may, for example, request delivery of a purchase receipt (e.g., by selecting receipt delivery option 1412) via a format that may be compatible with the bank that issued the selected payment account. Accordingly, for example, a payment server may forward a receipt of the purchase transaction to the issuing bank and the issuing bank may format the receipt for delivery with the user's month-end account statement.

A user may, for example, enter comments about a purchase transaction that may be included within a receipt. For example, a user may enter comments 1404 that may remind the user to include the receipt within his or her tax records because the purchase may be deemed as tax deductible. Accordingly, for example, comments 1404 may accompany payment information communicated by a mobile device to a payment server. In so doing, for example, a payment server may add comments 1404 to a receipt generated by the payment server and may forward the receipt with the added comments to the user of the mobile device as dictated by the receipt delivery options requested by the user of the mobile device.

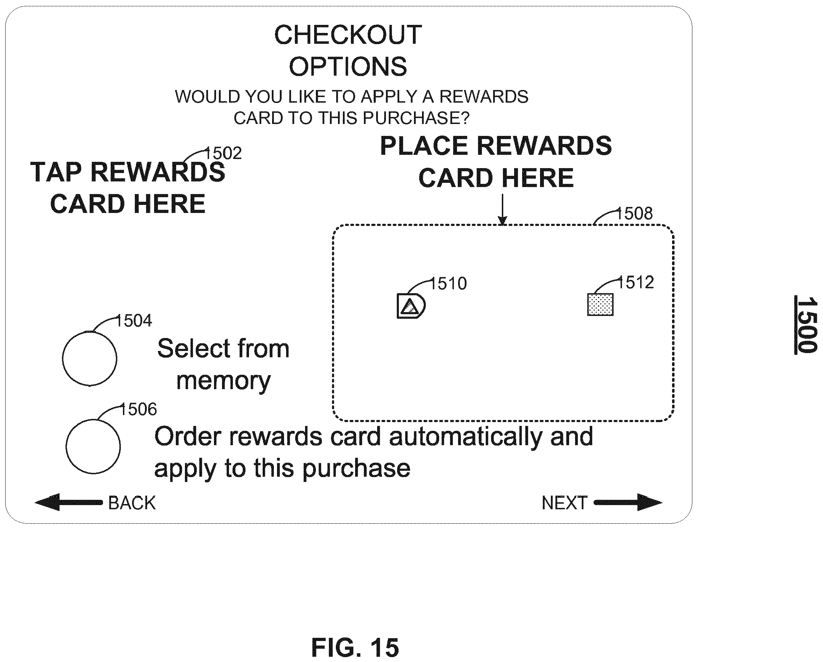

FIG. 15 shows GUI 1500 that may be generated by a processor of a mobile device and provided onto a display of the mobile device. GUI 1500 may, for example, offer a check-out option to a user of a mobile device, such that the user may elect to apply a rewards card to a selected purchase in order for the rewards card to accrue points for the purchase. The mobile device may, for example, submit rewards card information and transaction information to respective issuers of the rewards account so that the respective issuers may credit the rewards account accordingly.

A user may, for example, select option 1502 (e.g., by tapping a rewards card against a display of a mobile device or by presenting a rewards card within proximity to the mobile device). In so doing, for example, a contactless communication channel (e.g., an RFID communication channel) may be established between the rewards card and the mobile device so that information associated with the rewards card may be communicated by the rewards card to the mobile device.

An alternate contactless communication channel may be established, for example, by pressing a rewards card against portion 1508. Accordingly, for example, a rewards card may communicate information associated with the rewards card to a processor of a mobile device by simulating a series of touches within portion 1508 (e.g., at icon 1510) and the processor of the mobile device may communicate information to the rewards card by generating a series of light pulses within portion 1508 (e.g., at location 1512). In so doing, for example, rewards information associated with the rewards card may be received by a mobile device and communicated to an issuer of the rewards card so that the rewards account may be updated with the purchase transaction information.

Other contactless communication channels may be established. For example, a processor of a rewards card may communicate rewards information to a mobile device by generating a series of light pulses (e.g., via an LED of the rewards card), which may be captured by a camera of the mobile device and construed by a processor of the mobile device as rewards information. As per another example, a payment card may communicate payment information using audible sounds that may be received by a microphone of a mobile device and construed by a processor of the mobile device as payment information.

A rewards account may, for example, be selected from a memory of the mobile device (e.g., by selecting radio button 1504). Associated rewards information may, for example, be selectively retrieved from a memory of the mobile device and communicated by the mobile device to an issuer of the rewards account so that the rewards account may be credited with the selected purchase.

A user of a mobile device may, for example, place an order for a rewards card by selecting radio button 1506. Accordingly, for example, a mobile device may communicate payment information to a payment server to complete a purchase transaction and may also communicate a request that a rewards account be created. A payment server may, for example, forward the rewards account creation request to an issuer of a rewards account along with details of the purchase transaction, so that the issuer may first create the rewards account and may then credit the account according to the purchase transaction. Accordingly, for example, an electronic version of a newly created rewards card (e.g., a graphical representation of a newly created rewards card) may, for example, be communicated to a mobile device which may, for example, include a barcode representation of the rewards account information. In addition, rewards card information may, for example, be added to a memory of a mobile device for future access.

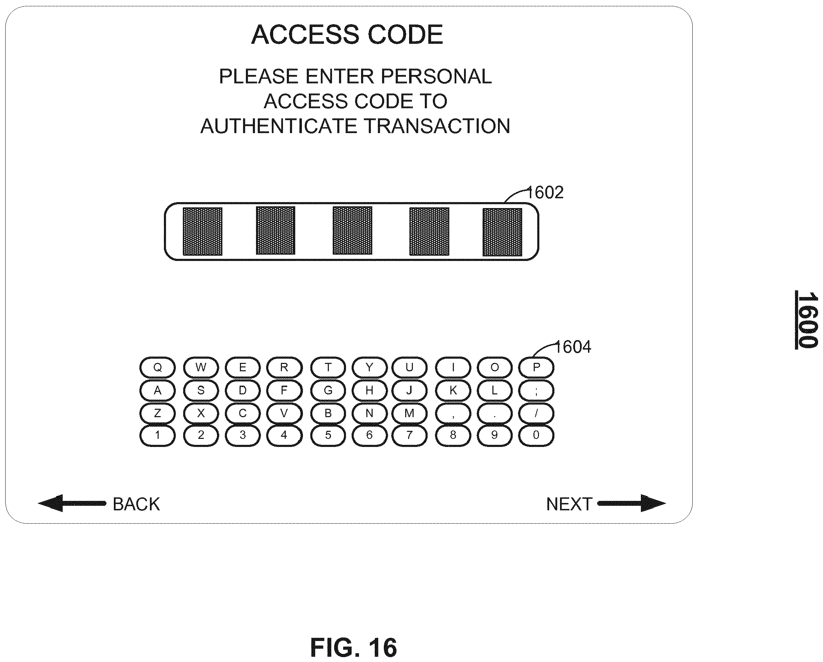

FIG. 16 shows GUI 1600 that may be generated by a processor of a mobile device and provided onto a display of the mobile device. GUI 1600 may, for example, challenge a user of a mobile device to enter an access code that may be required to authenticate a purchase transaction. GUI 1600 may, for example, include virtual keyboard 1604 to allow a user of a mobile device to enter such an access code. Alternately, for example, a manual input interface of a mobile device (e.g., a keyboard or a keypad) may be used to enter such an access code.

As a user of a mobile device enters each character of an access code, portion 1602 may reflect such entry. Such entries may, for example, be reflected within portion 1602 as protected characters (e.g., the actual value of each character may be blocked out) to protect the security and safety of the entered access code. Once an entered access code is verified and authenticated by a mobile device, the mobile device may complete the requested purchase transaction.

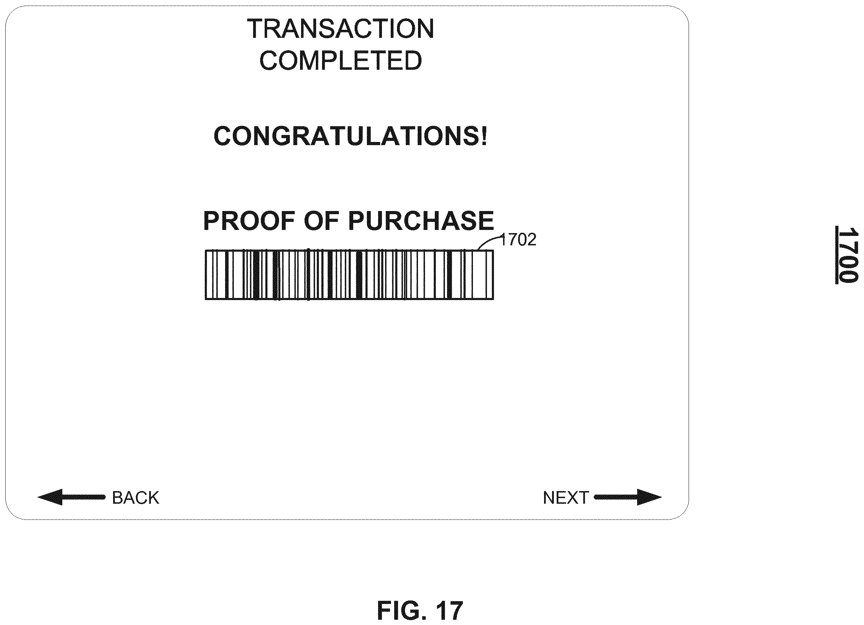

FIG. 17 shows GUI 1700 that may be generated by a processor of a mobile device and provided onto a display of the mobile device. GUI 1700 may, for example, include portion 1702 that may display a graphical representation of a proof-of-purchase (e.g., a barcode). Such a proof-of-purchase may be communicated to a mobile device via a network entity (e.g., a payment server) upon completion of a purchase transaction by the mobile device.

Accordingly, for example, portion 1702 may graphically display a proof-of-purchase that may be recognized by a reader (e.g., a barcode reader). In so doing, for example, a system that may include a barcode reader may verify the validity of a proof-of-purchase barcode, which may then allow a user of a mobile device displaying such a barcode to enjoy the goods and/or services purchased by the user via the mobile device as acknowledged by the verified barcode. As per one example, such a verified barcode may allow entry onto an airplane having a seat assignment that is encoded within the barcode. As per another example, a user may have made an on-line purchase of an appliance using his or her mobile device and may have requested pick-up of the purchased appliance at an appliance inventory warehouse. Upon arrival at the appliance inventory warehouse, a user may retrieve an electronic proof-of-purchase (e.g., a barcode) from a memory of the mobile device that was received by the user's mobile device upon completion of the appliance purchase transaction. A reader (e.g., a barcode reader) at the appliance inventory warehouse may read the user's barcode directly from a display of the user's mobile device, verify that a purchase was completed by the user's mobile device, and may authorize the appliance for pickup by the user.

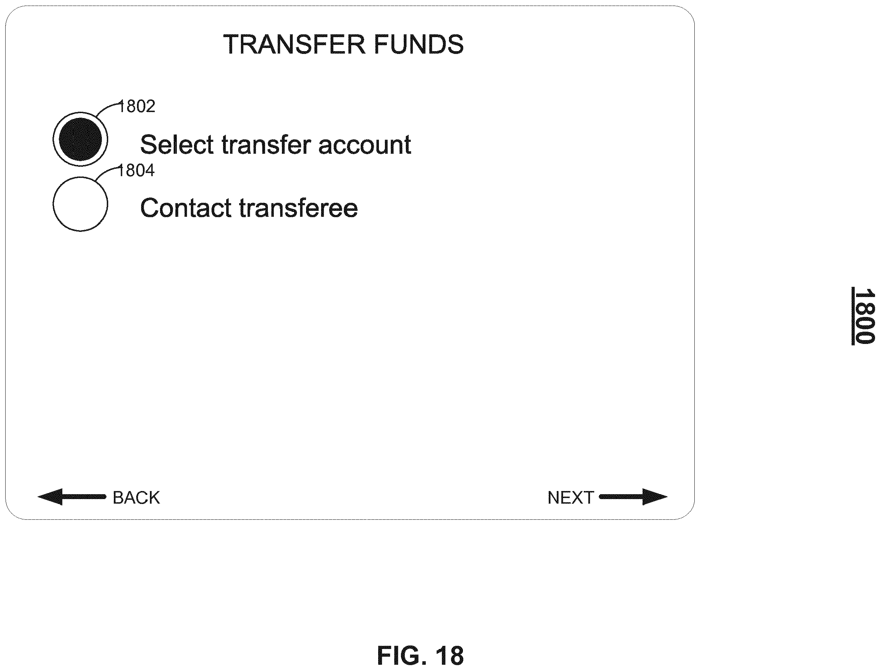

FIG. 18 shows GUI 1800 that may be generated by a processor of a mobile device and provided onto a display of the mobile device. GUI 1800 may, for example, enable a funds transfer to one or more financial accounts. GUI 1800 may, for example, enable a transfer of funds (e.g., by selecting radio button 1802) directly from one or more financial accounts into one or more financial accounts. GUI 1800 may, for example, generate a communication channel with a recipient of a funds transfer (e.g., by selecting radio button 1804) and may allow the recipient to interactively determine the financial account that is to receive the transferred funds.

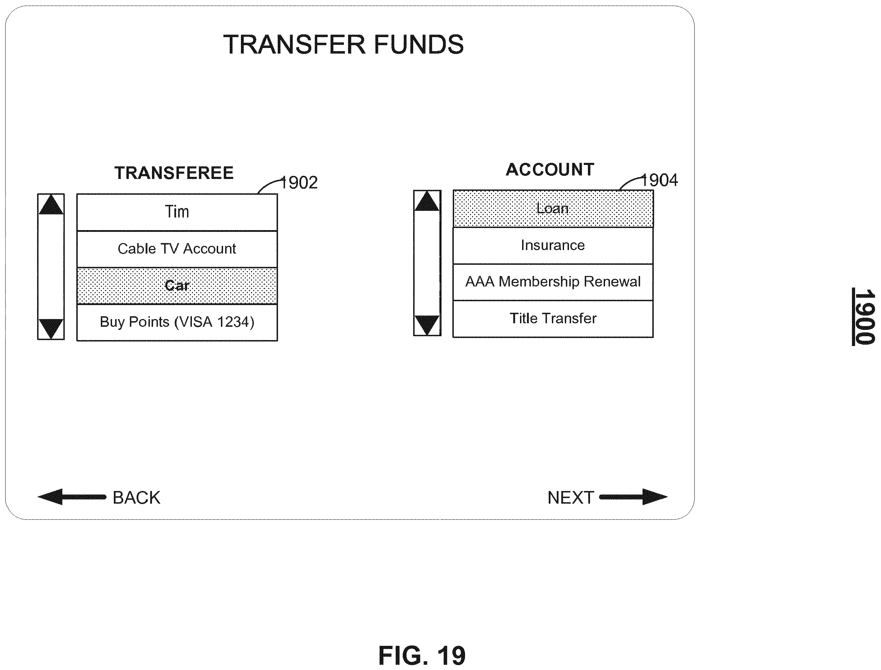

FIG. 19 shows GUI 1900 that may be generated by a processor of a mobile device and provided onto a display of the mobile device. GUI 1900 may, for example, enable a funds transfer to one or more accounts. GUI 1900 may, for example, allow a user of a mobile device to select an object (e.g., by selecting an entry within menu list 1902) that may be associated with the funds transfer. GUI 1900 may, for example, allow a user to select an account (e.g., by selecting an entry within menu list 1904) that may be associated with the object selected within menu list 1902.

Accordingly, for example, a mobile device may include a memory within which a user may enter one or more potential recipients of a funds transfer. A processor of a mobile device may, for example, list each potential recipient of a funds transfer within menu list 1902. A user of a mobile device may, for example, select a recipient of a funds transfer by activating (e.g., touching) an entry within menu list 1902 that corresponds to the selected recipient. As per an example, a user's funds transfer recipient list, as may be reflected by menu list 1902, may include persons, financial accounts, inanimate objects, or any other type of object.

Once a selected funds transfer recipient is selected within menu list 1902, menu list 1904 may be populated. Accordingly, for example, a mobile device may include a memory within which a user may enter one or more accounts that may be associated with one or more potential recipients of a funds transfer. A processor of a mobile device may, for example, list each account in menu list 1904 that may be associated with the selected recipient of menu list 1902. A user of a mobile device may, for example, select an account for a funds transfer by activating (e.g., touching) an entry within menu list 1904 that corresponds to the selected account. As per an example, a user's funds transfer account list, as may be reflected by menu list 1904, may include any account that may be associated with the selected recipient of menu list 1902.

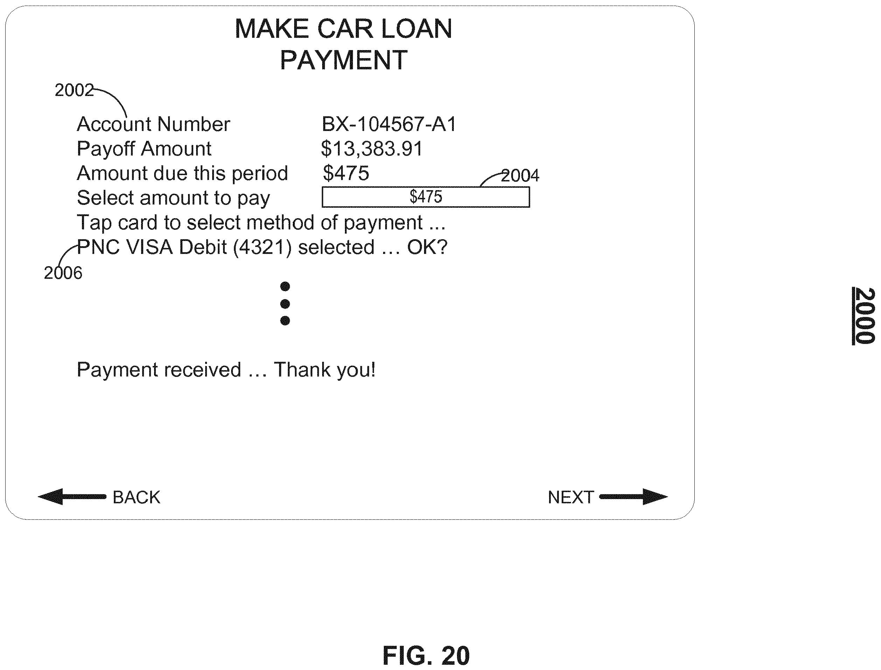

FIG. 20 shows GUI 2000 that may be generated by a processor of a mobile device and provided onto a display of the mobile device. GUI 2000 may, for example, enable a funds transfer from a source account (e.g., an account associated with a payment card that is tapped against a display of a mobile device) to a target account (e.g., a car loan account). Portion 2002 may, for example, list account details that may be associated with a target account (e.g., an account number associated with a car loan, the payoff amount, and the amount due). Portion 2002 may, for example, include details that may be associated with a target account that a mobile device has collected from a network entity (e.g., a bank) via a network connection between the mobile device and the network entity.

Portion 2004 (e.g., an alphanumeric entry box) may, for example, allow a user of a mobile device to enter an amount to be transferred (e.g., an amount that is equal to the minimum amount due on an installment payment agreement). GUI 2000 may, for example, request an identification of a source account from which the amount will be transferred. As per an example, a user of a mobile device may tap a payment card against a display of the mobile device to establish a contactless communication channel between the payment card and the mobile device within which payment information may be communicated from the payment card to the mobile device. As per another example, a payment card may communicate payment information to a mobile device via a series of touch simulations (e.g., changes in capacitance generated by a payment card that may be detected by a touch-sensitive display of a mobile device). A series of light pulses, or audible information, for example, may be communicated by the payment card to the mobile device in order to communicate payment information.

GUI 2000 may, for example, display a summary of payment information that may have been received by a mobile device from a payment card via a contactless communication channel. For example, portion 2006 may be displayed by GUI 2000 to allow a user of a mobile device to confirm the identity of a payment account from which an amount of money will be transferred. Once confirmed, the mobile device may communicate with network entities (e.g., an issuer of the source account and a bank associated with the target account) to complete the money transfer.

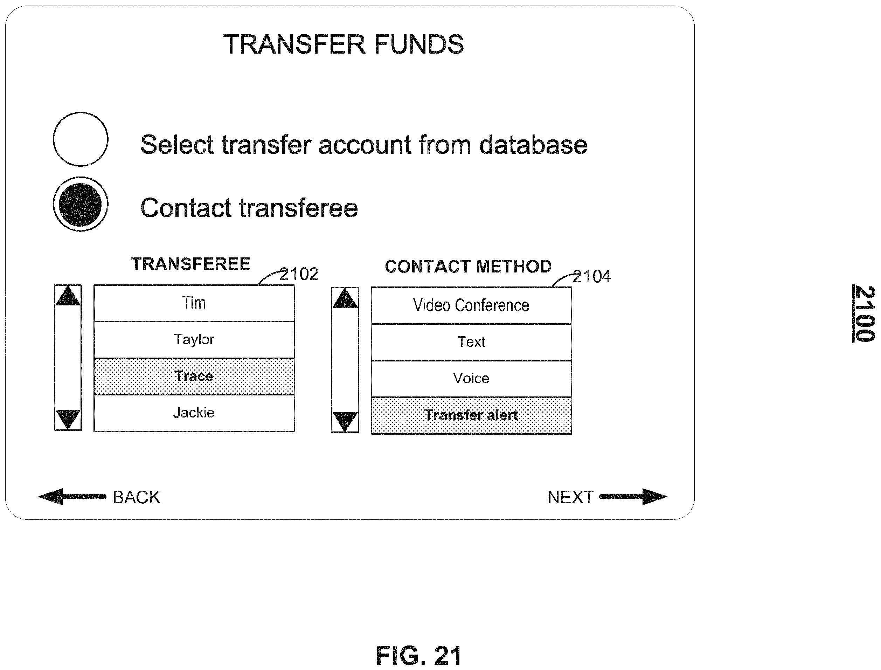

FIG. 21 shows GUI 2100 that may be generated by a processor of a mobile device and provided onto a display of the mobile device. GUI 2100 may, for example, enable a funds transfer to an account associated with a person. A recipient may, for example, interactively select an account into which the funds will be transferred. Accordingly, for example, contact list 2102 may be displayed by GUI 2100 as a list of potential recipients of a money transfer. Contact method list 2104 may, for example, by displayed by GUI 2100 as a list of methods that may be used to contact the recipient as selected within contact list 2102. In so doing, for example, a person within contact list 2102 (e.g., Trace) may be selected by a user of a mobile device to be the recipient of a funds transfer and the recipient may be contacted, for example, in accordance with a method selected in contact method list 2104 (e.g., transfer alert).

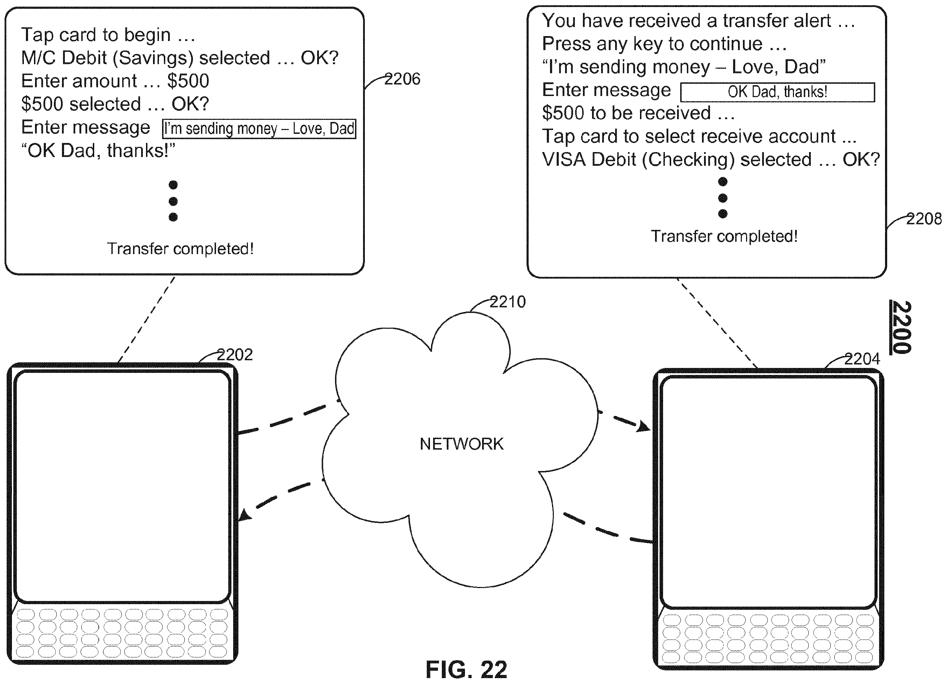

FIG. 22 shows system 2200, which may include mobile device 2202, receiving device 2204, and network 2210. Mobile device 2202 may be a device used to coordinate a money transfer and receiving device 2204 may be a device used to coordinate receipt of a money transfer. Receiving device may, for example, be a mobile device. Receiving device, for example, may not be a mobile device (e.g., a desktop computer). Devices 2202-2204 may communicate via network 2210, which may include any combination of cellular network resources, wireless network resources, and/or wired network resources.

Mobile device 2202 may, for example, include a processor that may render money transfer GUI 2206 onto a display of mobile device 2202. GUI 2206 may, for example, pause while a user of mobile device 2202 selects a payment account from which a money transfer may be withdrawn. Accordingly, for example, mobile device 2202 may wait until a payment card is brought within a proximity to, or a touch relationship with, mobile device 2202 (e.g., a payment card may be tapped onto a display of mobile device 2202). Alternately, for example, a payment card may communicate with mobile device 2202 using any number of contactless methods (e.g., using light, sound, capacitive, magnetic or electromagnetic communication). In so doing, for example, mobile device 2202 may establish a contactless communication channel with a payment card in which payment information is communicated from the payment card to mobile device 2202 and is summarized onto GUI 2206 for review by a user of mobile device 2202. A user of mobile device 2202 may enter an amount of money for transfer, may verify a money amount for transfer, and may enter a message to be communicated to receiving device 2204.

Mobile device 2202 may communicate payment information received from a payment card along with information received from a user of mobile device 2202 to a network entity (e.g., an issuer) where, for example, authorization of the transfer amount from the account selected is performed. Once authorized, mobile device 2202 may communicate a transfer alert along with a transfer alert message to receiving device 2204. Receiving device 2204 may, for example, present a transfer alert along with the associated transfer alert message onto GUI 2208. A user of receiving device 2204 may respond to the transfer alert message received from mobile device 2202 by sending an acknowledgment message to mobile device 2202 via network 2210.

A user of receiving device 2204 may, for example, be asked to enter account information that is to be used as the receiving account for the money transfer. Accordingly, for example, a user of receiving device 2204 may provide such account information any number of ways. For example, a payment card associated with a receiving account may be brought within a proximity, or a touching, relationship to receiving device 2204. In so doing, for example, a contactless communication channel (e.g., an RFID channel) may be formed to communicate such information. Alternately, a payment card may communicate with receiving device 2204 using any number of contactless methods (e.g., using light, sound, capacitive, magnetic or electromagnetic communication). A user of receiving device 2204 may verify the receive account information as it may be displayed onto GUI 2208.

Receiving device 2204 may, for example, communicate information associated with a receiving account to mobile device 2202 via network 2210. Accordingly, for example, mobile device 2202 may coordinate the money transfer via network 2210 with network entities (e.g., an issuer of the account used to provide money to transfer and an issuer of the account used to receive money for transfer). Once the money transfer is completed, an acknowledgment message may be displayed onto GUI 2206 by a processor of mobile device 2202 and an acknowledgment message may be communicated by mobile device 2202 to receiving device 2204 and then displayed onto GUI 2208 by a processor of receiving device 2204.

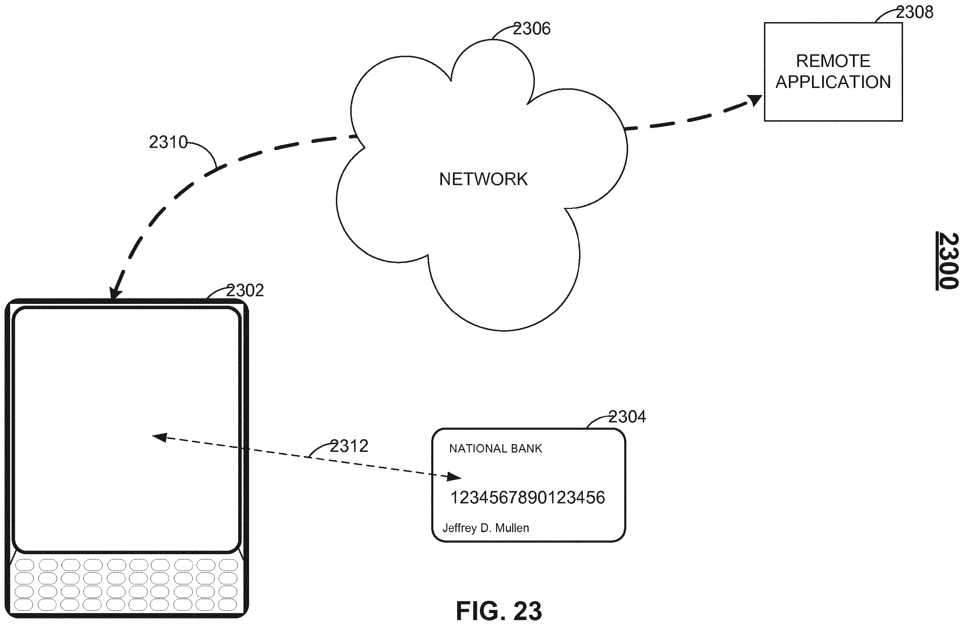

FIG. 23 shows system 2300, which may include a mobile device 2302, a powered or non-powered payment card 2304, a remote application 2308 and network 2306. Mobile device 2302 may, for example, access remote application 2308 via network 2306 in order to complete a purchase transaction. Accordingly, for example, payment card 2304 may communicate payment information to mobile device 2302 via contactless communication channel 2312 and mobile device 2302 may communicate the payment information to remote application 2308 via communication channel 2310 to complete the purchase transaction.

Contactless communication channel 2312 may be any type of contactless communication channel, such as for example, an RF, capacitive, audible, visible, electromagnetic, or magnetic communication channel. Contactless communication channel 2312 may be a two-way communication channel, where mobile device 2302 may communicate with payment card 2304 in order to, for example, enhance data communication between mobile device 2302 and payment card 2304.

As per one example, payment card 2304 may communicate payment information (e.g., one, two, and/or three tracks of magnetic stripe data) to mobile device 2302 after payment card 2304 is tapped against mobile device 2302. Remote application 2308 may, for example, be an on-line payment application that does not require a fully populated magnetic stripe message to complete a purchase transaction, but may only require a subset of a fully populated magnetic stripe message (e.g., account number and expiration date). Accordingly, for example, mobile device 2302 may filter payment information received from payment card 2304 to only include the subset of information that may be required by remote application 2308 and may communicate only the filtered payment information to remote application 2308 to complete the purchase transaction.

In general, for example, mobile device 2302 may filter payment information received from payment card 2304 into a filtered subset of payment data that may be required by remote application 2308 to complete a purchase transaction. In so doing, for example, mobile device 2302 may customize a payment message to remote application 2308 that includes only the filtered subset of data that is needed by remote application 2308 to complete the purchase transaction.

As per another example, mobile device 2302 may query payment card 2304 via contactless communication channel 2312 for only a subset of payment information that may be required by remote application 2308 to complete a purchase transaction. Accordingly, for example, a processor of payment card 2304 may receive the request and may only supply the requested payment information via contactless communication channel 2312 instead of communicating a complete magnetic stripe message.

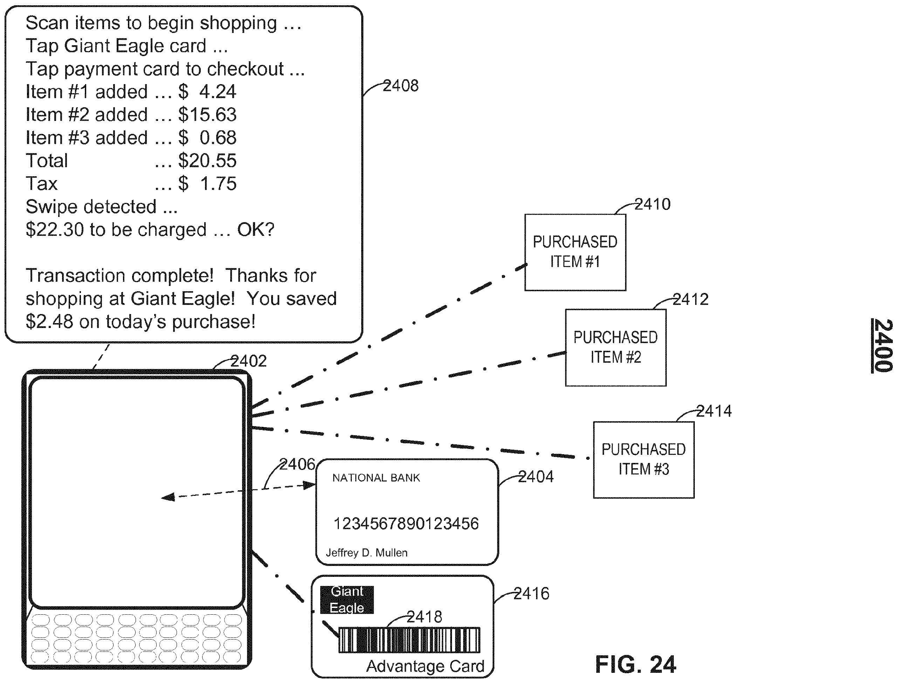

FIG. 24 shows system 2400, which may include a mobile device 2402, a payment card 2404, a rewards card 2416, and items to be purchased 2410-2414. Mobile device 2402 may, for example, include a scanning device (e.g., a camera) that may be used to capture images (e.g., barcode images). Accordingly, for example, a user of mobile device 2402 may activate an application within mobile device 2402 that generates GUI 2408 and that activates a camera to capture barcode images. A processor of mobile device 2402 may, for example, analyze captured barcode images to extract information from the barcode images and construe the extracted information as data input. Accordingly, for example, a camera of mobile device 2402 may be used to scan barcodes of items that the user wishes to purchase and a processor of mobile device 2402 may analyze the scanned information to keep a running total of items selected for purchase. In so doing, for example, a user of mobile device 2402 may wander through a shopping market while scanning barcode labels of items for purchase (e.g., items 2410-2414).

Mobile device 2402 may access a network (e.g., a local Wi-Fi hotspot) within a shopping market to determine those items that may be offered at a discount to rewards members of the shopping market. Accordingly, for example, a user may scan barcode image 2418 of rewards card 2416 to obtain an instant credit for discounted items for purchase. As per another example, rewards card 2416 may establish a contactless communication channel with mobile device 2402 so that rewards card 2416 may communicate rewards account information to mobile device 2402 via any one of a number of contactless communication mediums (e.g., RF, capacitive, audible, visible, electromagnetic, or magnetic communication mediums).

Once a user of mobile device 2402 finishes shopping, the user may present payment card 2404 to mobile device 2402 for payment. Accordingly, for example, contactless communication channel 2406 (e.g., an RF, capacitive, audible, visible, electromagnetic, or magnetic communication channel) may be created and payment information may be communicated from payment card 2404 to mobile device 2402 so that mobile device 2402 may complete the purchase transaction with a network entity (e.g., an issuer of payment card 2404).

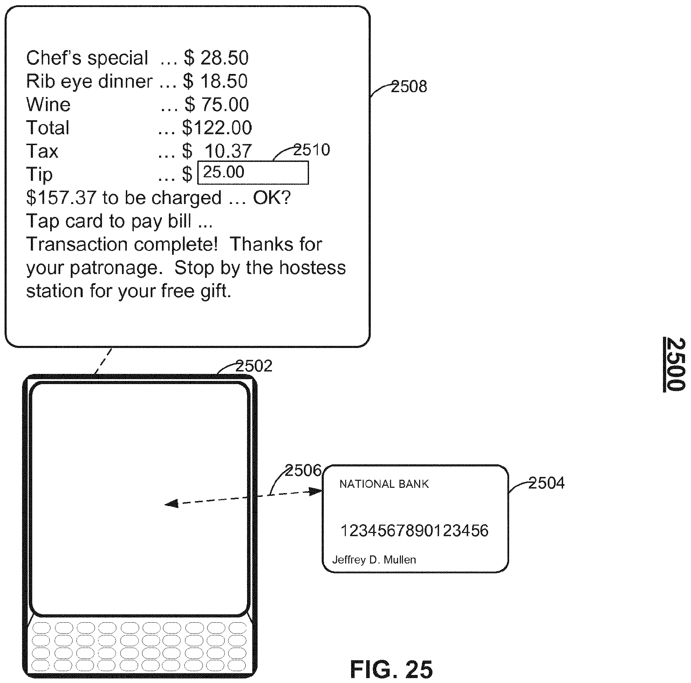

FIG. 25 shows system 2500, which may include mobile device 2502 and payment card 2504. Mobile device 2502 may interact with a merchant establishment (e.g., a restaurant) to gain entry into a user's tab at the merchant's establishment (e.g., a food and alcohol bill generated by the restaurant). Accordingly, for example, a user may monitor each item on the bill, enter an additional amount into the bill (e.g., a tip), and then pay the bill all from the convenience of the user's mobile device 2502.

Interaction with a merchant establishment may be accomplished any number of ways. For example, mobile device 2502 may access a local Wi-Fi hotspot and may communicate information (e.g., an email address or text messaging address) to the merchant that identifies a user of mobile device 2502. Accordingly, for example, a merchant may send a message (e.g., an email or text message) to the user-supplied address that may contain a link to the user's bill. A user may, for example, click on the link, enter a pass code to gain entry to the user's bill, and then monitor the bill being generated onto a display of mobile device 2502 via GUI 2508.

As per another example, mobile device 2502 may place a phone call to a merchant's phone number to establish a communication channel (e.g., a data call) between the merchant server and mobile device 2502. The merchant server may, for example, render GUI 2508 onto a display of mobile device 2502 so that a user of mobile device 2502 may directly interact with the merchant server.

GUI 2508 may be rendered onto a display of mobile device 2502 to allow a user to remotely interact with his or her bill. For example, a user's meal tab at a restaurant may be itemized by GUI 2508 and an alphanumeric entry box (e.g., box 2510) may allow the user to enter additional data (e.g., add a tip to the bill). A user may, for example, review a total to be charged, verify such a total, and then present payment card 2504 to mobile device 2502 to settle the total amount. In so doing, for example, contactless communication channel 2506 may receive payment information from payment card 2504 via any number of contactless communication mediums (e.g., RF, capacitive, audible, visible, electromagnetic, or magnetic communication mediums) and may communicate such payment information to a network entity (e.g., an issuer of payment card 2504) to complete a purchase transaction for the total amount of the user's bill.

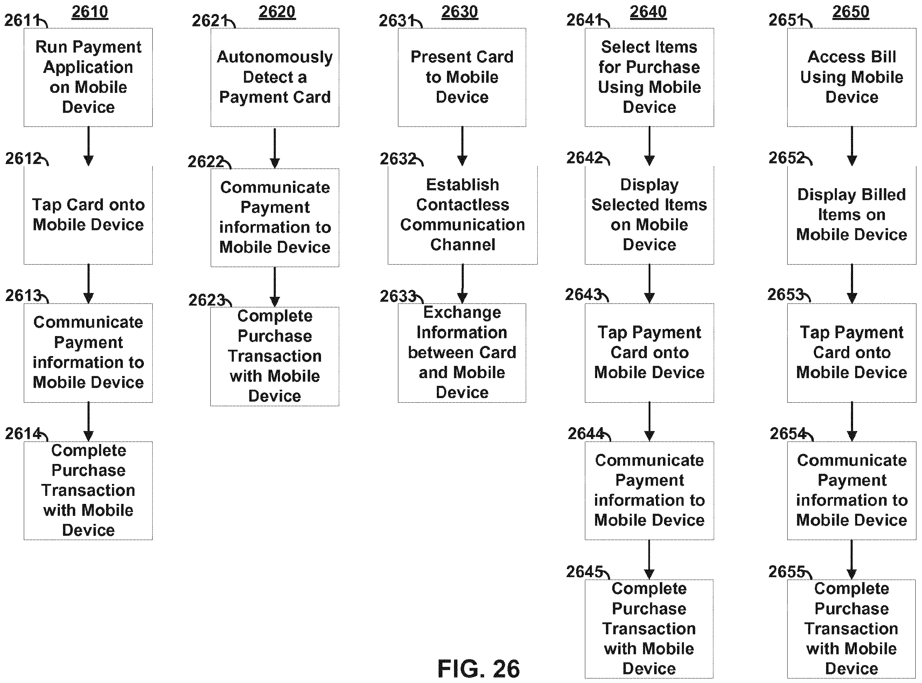

FIG. 26 shows flow charts for process sequences 2610-2650. Process sequence 2610 may, for example, execute a payment application on a mobile device (e.g., as in step 2611) to request a user of the mobile device to present a payment card to the mobile device. In step 2612, a user may present a payment card (e.g., tap a payment card onto a display of a mobile device) to begin a payment transaction. In step 2613, a contactless communication channel (e.g., an RF, capacitive, audible, visible, electromagnetic, or magnetic communication channel) may be generated between a payment card and a mobile device to communicate payment information from the payment card to the mobile device. In step 2614, a purchase may be completed by a mobile device by communicating received payment information to network entities to settle a payment transaction.

Process sequence 2620 may, for example, autonomously detect that a payment card is in a touching or a proximity relationship to a mobile device (e.g., as in step 2621). In step 2622, a contactless communication channel (e.g., an RF, capacitive, audible, visible, electromagnetic, or magnetic communication channel) may be generated between a payment card and a mobile device to communicate payment information from the payment card to the mobile device. In step 2623, a purchase may be completed by a mobile device by communicating received payment information to network entities to settle a payment transaction.

Step 2631 of sequence 2630 may include presenting a card to a mobile device. A card may, for example, be a powered card or a non-powered card. In steps 2632 and 2633, a contactless communication channel may be established between a card and a mobile device and information may be exchanged between the card and the mobile device.

A card may, for example, include a near-field communication device (e.g., an RFID) that may communicate with a contactless communication device of a mobile device to form a two-way communication channel between the card and the mobile device. A card may, for example, include circuitry to simulate touch (e.g., a capacitance change) in order to form a contactless communication channel with a mobile device. Accordingly, for example, a card may be pressed against a touch-sensitive display of a mobile device and information may be communicated by the card to the mobile device through a series of card-simulated touches that may be detected by the touch-sensitive display of the mobile device.

A card may, for example, include a light sensor to form a contactless communication channel with a mobile device. Accordingly, for example, a card may be pressed against a display of a mobile device and information may be communicated from the mobile device to the card through a series of light pulses generated by the display of the mobile device. A frequency, pulse width, and/or a pulse intensity of light pulses may, for example, be detected by a processor of a card as data communicated by a mobile device.

A card may, for example, include a light source (e.g., an LED) to form a contactless communication channel. Accordingly, for example, a card may emit varying light pulses from an LED that may be detected by a motion-capture device (e.g., a camera) of a mobile device as data communicated by the card. A card may, for example, include sound emission capabilities that may be detected by a microphone of a mobile device as data communicated by the card through a contactless communication channel. A mobile device may, for example, include sound emission capabilities that may be detected by a microphone of a card as data communicated by the mobile device through a contactless communication channel.

Step 2641 of sequence 2640 may include selecting items for purchase using a mobile device. A mobile device may, for example, include a scanning device (e.g., a camera) that may be used by a mobile device to capture images of barcodes that may be associated with items for purchase (e.g., grocery items in a grocery store). Accordingly, for example, a mobile device may collect images of barcodes and a processor of the mobile device may analyze the images to retrieve information (e.g., item description and cost) of each item scanned. Each item's description, cost and other information may, for example, be displayed on a GUI that may be generated by a processor and presented to a display of the mobile device as in step 2642. A payment card may, for example, be presented to the mobile device (e.g., as in step 2643) and payment information may be exchanged between the payment card and the mobile device (e.g., as in step 2644) via a contactless communication channel (e.g., an RF, capacitive, audible, visible, electromagnetic, or magnetic communication channel). In step 2645, a mobile device may communicate received payment information to network entities (e.g., a payment server and/or an issuer) to complete the transaction.

In step 2651 of sequence 2650, for example, a mobile device may remotely access an electronic bill. For example, a merchant (e.g., a restaurant) may provide access to a bill (e.g., a restaurant tab for food and beverages) to a patron of the merchant via that patron's mobile device. As per one example, a merchant may provide a link to a bill via a message (e.g., an email message or a text message) that may be sent by the merchant to the patron's mobile device or that may be sent by the patron's mobile device to the merchant. The patron may click on the link and may be taken to a website that may provide access to the patron's tab via a browser that may be executing on the patron's mobile device. As per another example, a data call between a patron's mobile device and a merchant may execute an application (e.g., locally on the patron's mobile device and/or remotely on a merchant's server) to allow a patron to review his or her bill.

Each item on the patron's bill may, for example, include a description, cost and other information and may be displayed on a GUI that may be generated by a processor and presented to a display of the mobile device as in step 2652. A payment card may, for example, be presented to the mobile device (e.g., as in step 2653) and payment information may be exchanged between the payment card and the mobile device (e.g., as in step 2654) via a contactless communication channel (e.g., an RF, capacitive, audible, visible, electromagnetic, or magnetic communication channel). In step 2655, a mobile device may communicate received payment information to network entities (e.g., a payment server and/or an issuer) to complete the transaction.

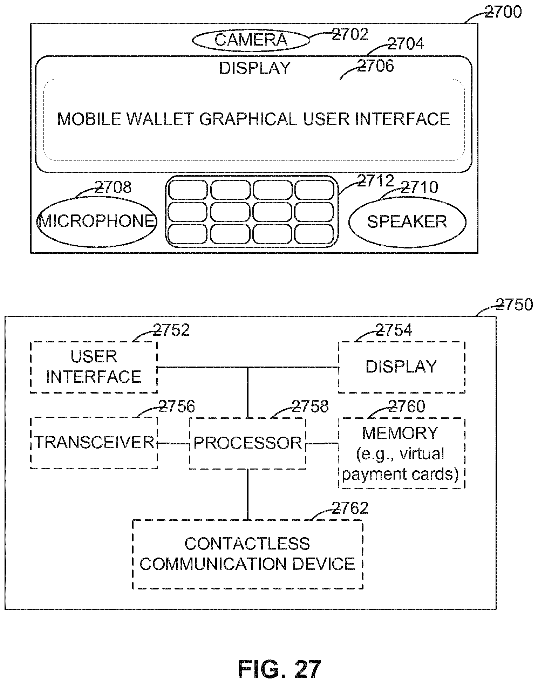

FIG. 27 shows mobile device 2700. Mobile device 2700 may be any mobile device, such as a mobile telephonic device (e.g., cell phone), a PDA, an electronic tablet, an MP3 player, or a locating device (e.g., a GPS device). Accordingly, for example, mobile device 2700 may be operated in a mobile environment while a user of mobile device 2700 goes about his or her daily activities (e.g., driving, shopping, walking, dining, and exercising). In addition, for example, mobile device 2700 may perform multiple functions simultaneously (e.g., a person may carry on a conversation while at the same time browsing and purchasing products on the internet).

Mobile device 2700 may include audio processing devices (e.g., microphone 2708 and speaker 2710). Accordingly, for example, mobile device 2700 may receive voice commands from a user via microphone 2708 and may process such commands to perform a function. For example, a user may place mobile device 2700 into a desired operational mode by speaking a command into microphone 2708 that is associated with the desired operational mode. In so doing, for example, mobile device 2700 may engage in hands-free operation by receiving voice commands via microphone 108 and performing functions associated with the received voice commands.

Mobile device 2700 may receive data input via microphone 2708. For example, a voice-band modem may generate signals in a voice-band frequency range that may be received by microphone 2708. A processor of mobile device 2700 may interpret the received audible information as data signals and may process the data signals as, for example, data values and/or control data input.

Mobile device 2700 may include camera 2702. Camera 2702 may capture one or more frames of video data and store the video data within a memory of mobile device 2700. Accordingly, for example, a processor of mobile device 2700 may receive one or more frames of video information via camera 2702 and may process the video information as data values and/or control data input. In so doing, for example, mobile device 2700 may receive optical information that is sensed by camera 2702 during a series of one or more video capture events that produce one or more frames of video information. The one or more frames of video information may contain one or more data elements (e.g., pixels) having properties (e.g., color, intensity, or contrast) that may be interpreted by a processor of mobile device 2700 as data values and/or control data.

Mobile device 2700 may include manual input interface 2712. Manual input interface 2712 may, for example, include keys and/or buttons that may be sensitive to manual input, such as a touch or an application of pressure. Accordingly, for example, a user of mobile device 2700 may enter information into mobile device 2700 via manual interface 2712 to cause a processor of mobile device 2700 to enter a particular mode of operation. Manual interface 2712 may, for example, be used for data entry (e.g., dialing a phone number or entering data as may be requested by mobile device 2700) during a particular mode of operation of mobile device 2700.

Mobile device 2700 may include display 2704. Display 2704 may provide visible information that may be utilized by a user during interaction with mobile device 2700. A portion or all of display 2704 may be touch sensitive such that objects making contact with display 2704 or objects coming within a proximity of display 2704 may be detected by a processor of mobile device 2700. Accordingly, for example, mobile wallet graphical user interface 2706 may be provided by display 2704 so that graphical information may be displayed to solicit and/or receive data entry from a user. In so doing, for example, touch-sensitive graphical user interface devices such as radio buttons, textual input boxes, virtual buttons, pull-down menus, and navigational tools may be used for data entry to initiate, change, and/or support functions performed by mobile device 2700.

Display 2704 may, for example, display graphical objects that may interact with a user of mobile device 2700. Accordingly, for example, a virtual card (e.g., a virtual payment card) may be rendered onto display 2704 having interactive components associated with such a virtual payment card. In so doing, for example, a virtual payment card displayed by display 2704 may itself include a virtual user interface (e.g., one or more virtual buttons) that may be sensitive to touch or proximity. Such virtual buttons may be associated with a feature (e.g., one or more tracks of magnetic stripe information may be communicated by the mobile device when a button is activated). In so doing, for example, a feature activated on a virtual payment card displayed by display 2704 may cause mobile device 2700 to behave like a payment card (e.g., one or more tracks of magnetic stripe information may be communicated by mobile device 2700 when a virtual button of a virtual payment card of display 2704 is activated).

FIG. 27 shows architecture 2750. User interface 2752 may, for example, be included within architecture 2750 to allow user interaction with architecture 2750. For example, a dedicated key pad or keyboard may be included within user interface 2752 to allow alphanumeric data entry into architecture 2750.

Architecture 2750 may include one or more displays 2754. Display 2754 may, for example, be touch-sensitive. Accordingly, for example, display 2754 may be utilized for alphanumeric data entry using virtual buttons that may be rendered onto touch-sensitive portions of display 2754. In so doing, for example, touching virtual buttons that may be associated with alphabetic and numeric characters of display 2754 may be detected by processor 2758 as alphanumeric data entry.

Alphanumeric entry boxes may, for example, be rendered onto display 2754. A user may, for example, activate a cursor within such an alphanumeric entry box by touching an area within the alphanumeric entry box. A user may utilize user interface 2752 and/or a virtual keypad rendered onto display 2754 to select alphanumeric characters to be placed within the alphanumeric entry box having a character position identified, for example, by an activated cursor within the alphanumeric entry box. In so doing, for example, processor 2758 may receive alphanumeric characters as typed into a alphanumeric entry box of display 2754 and may use such alphanumeric characters as data input.

Display 2754 may, for example, render a virtual representation of a card (e.g., one or more virtual payment cards stored within memory 2760). Accordingly, for example, information (e.g., payment card number, cardholder name, bank logos and issuer identification) may be stored within memory 2760 and rendered onto display 2754 as a virtual representation of a card. In so doing, for example, virtual interactive objects (e.g., buttons, displays, light sources and light sensors) that may be associated with a virtual card on display 2754 may be utilized through interaction with display 2754 just as if the virtual card were physically present.

Display 2754 may, for example, provide data output from architecture 2750. For example, display 2754 may communicate data using a series of light pulses. Accordingly, for example, processor 2758 may cause one or more portions of display 2754 to produce light pulses having varying characteristics (e.g., duration, intensity, and frequency) that may communicate information via such light pulses. In so doing, for example, a device that may be sensitive to light pulses may receive information communicated by display 2754 via light pulses having varying characteristics. Display 2754 may, for example, communicate data using visual information that may be substantially static (e.g., a barcode).

Architecture 2750 may include one or more transceivers 2756. Transceiver 2756 may communicate information to and/or may receive information from one or more devices. Transceiver 2756 may, for example, communicate via a wireless interface with one or more cellular stations of a mobile network. Accordingly, for example, transceiver 2756 may allow a mobile device (e.g., mobile device 2700 of FIG. 27) to establish a communications channel with an associated cellular station. In so doing, for example, a mobile device (e.g., mobile device 2700 of FIG. 27) may exchange information (e.g., voice, text, data, or multimedia) with one or more terrestrial networks (e.g., the internet or a payment network) via an associated cellular station. As per another example, transceiver 2756 may exchange information with one or more other mobile devices via one or more associated cellular stations.

Transceiver 2756 may, for example, communicate via a wireless interface with one or more mobile devices directly. Accordingly, for example, transceiver 2756 may communicate with another mobile device without first accessing a mobile network via a cellular station of the mobile network. As per another example, transceiver 2756 may, for example, communicate via a wireless interface with one or more network devices (e.g., a wireless access point) directly. Accordingly, for example, a mobile device (e.g., mobile device 2700 of FIG. 27) may directly connect to a wired and/or a wireless network via any one or more wireless standards (e.g., Bluetooth or Wi-Fi) to exchange information with other devices that may be connected to the wired and/or wireless network. In so doing, for example, a wired and/or wireless network may be accessed by a mobile device without first accessing a mobile network via a cellular station of a mobile network.

Architecture 2750 may include contactless communication device 2762, which may communicate via any one or more contactless communication methodologies, such as for example, near field communications (e.g., RFID), Bluetooth, touch simulation, light pulsing (e.g., via an LED), and electromagnetic data communication (e.g., via a dynamic magnetic stripe communications device). Accordingly, for example, contactless communication device 2762 may be compatible with any contactless device, such as for example, an RFID enabled payment card and a contactless reader (e.g., a magnetic stripe reader or an NFC reader).

A non-powered card may, for example, communicate with contactless communications device 2762. Contactless communication device 2762 may, for example, establish a carrier field (e.g., an RF field) that may be modulated by a device (e.g., an RFID tag) of a non-powered payment card. In so doing, for example, an RFID tag of a non-powered payment card may derive operational power from an RF field provided by contactless communications device 2762 and may communicate information (e.g., one, two, and/or three tracks of magnetic stripe data) to contactless communication device 2762 by modulating the RF field produced by contactless communications device 2762.

A powered card may, for example, communicate with contactless communication device 2762. A powered card may, for example, include a processor, a battery, a memory, wireless communications devices (e.g., a dynamic magnetic stripe communications device or RFID) and other electronics (e.g., buttons, displays, light sources and light sensors) that may allow a user to interact with the powered card to perform one or more functions. Accordingly, for example, a powered card may be used to communicate specific information to contactless communication device 2762 by selective interaction with the buttons of the powered card. In so doing, for example, a powered card may be used to interactively communicate magnetic stripe information (e.g., one, two, and/or three tracks of magnetic stripe data) to contactless communication device 2762 by sending a signal to a processor of a powered card (e.g., by pressing a button on the powered card) to initiate such communications.

Contactless communication device 2762 may receive variable data sets from a powered card based upon, for example, manual input provided to a powered card. For example, a button associated with an on-line purchase may be pressed on the powered card that causes a variable data set (e.g., account number and expiration date) to be communicated from the powered card to contactless communication device 2762.

Discretionary data may, for example, be communicated by a powered card based upon which button was pressed on the powered card. In so doing, for example, a security code (e.g., "111") may be communicated within a discretionary data field when a button associated with a particular feature (e.g., pay with credit) is pressed on the powered card. As per another example, a different security code (e.g., "222") may be communicated within a discretionary data field when a button associated with a different feature (e.g., pay with debit) is pressed on the powered card. Accordingly, for example, processor 2758 may identify what type of device may be in communication with contactless communication device 2762 by analyzing the data communicated to contactless communication device 2762.

Architecture 2750 may include memory 2760 and/or processor 2758 may include internal memory. Accordingly, for example, application code may be stored within memory 2760 and/or processor 2758 and executed by processor 2758 in support of functions performed by architecture 2750. For example, an application (e.g., a mobile wallet graphical user interface) may be executed by architecture 2750 and displayed onto display 2754, which may be used to interact with a user of a mobile device (e.g., mobile device 2700 of FIG. 27). Persons skilled in the art will appreciate that executable application code may be communicated to architecture 2750 via any one or more interfaces of architecture 2750 (e.g., user interface 2752, display 2754, transceiver 2756, and/or contactless communication device 2762).

Application data (e.g., virtual payment card data) may be stored within memory 2760 and accessed by processor 2758 during operation. For example, payment card data may be stored within memory 2760 and recalled by processor 2758 during a financial transaction being conducted by a mobile device (e.g., mobile device 2700 of FIG. 27). Once recalled, processor 2758 may communicate the payment card data via transceiver 2756 and/or contactless communication device 2762 to complete a financial transaction.

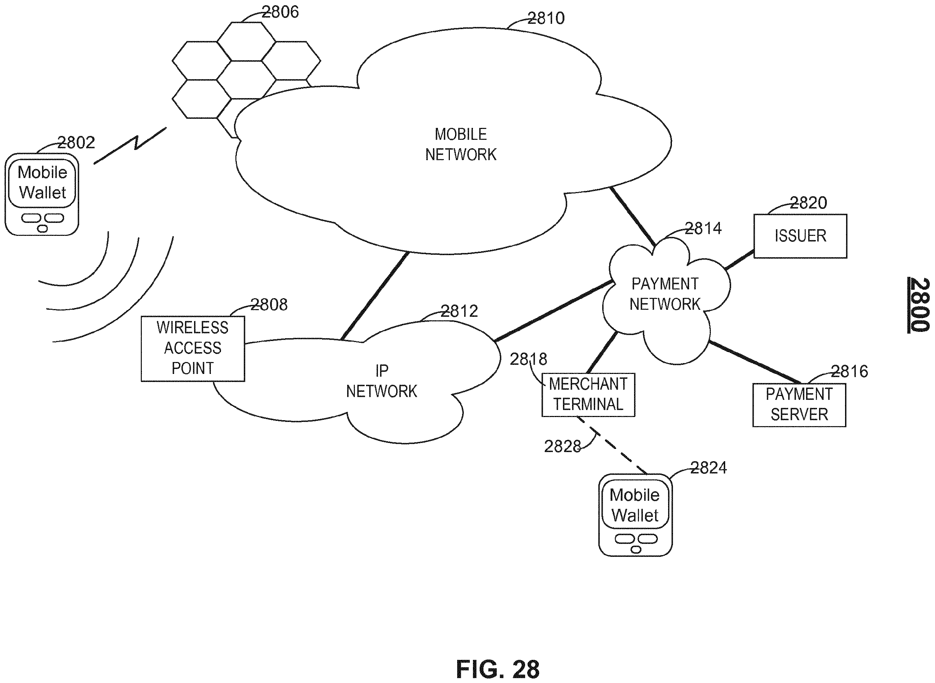

FIG. 28 shows network topology 2800 that may include, for example, mobile wallet 2802 (e.g., a mobile telephonic device, a PDA, an electronic tablet, a laptop, a GPS unit, or an MP3 player). Mobile wallet 2802 may, for example, include a contactless interface that may initiate, sustain, and/or terminate a communication channel between a contactless device (e.g., an RFID enabled payment card) and mobile wallet 2802. A contactless device and mobile wallet 2802 may communicate using any number of contactless mediums, which may include for example, visible, audible, capacitive, electromagnetic, magnetic, and/or RF mediums.

Mobile wallet 2802 may provide one or more transceivers that may communicate with one or more wired networks (e.g., IP network 2812 and/or payment network 2814) and/or one or more wireless networks (e.g., mobile network 2810). Mobile wallet 2802 may, for example, communicate with a cellular station over a wireless radio interface (e.g., a GSM air interface) that may be used by mobile wallet 2802 to communicate information (e.g., voice and data) to cellular network access infrastructure 2806 (e.g., one or more GSM base transceiver stations, base station controllers, and mobile switching centers). Persons skilled in the art will appreciate that cellular network access infrastructure 2806 may utilize any multiple access architecture, such as for example, a code-division multiple access architecture and/or a time-division multiple access architecture.

Mobile wallet 2802 may, for example, communicate with wireless access point 2808 over a wireless interface (e.g., a Bluetooth interface or a Wi-Fi interface). Accordingly, for example, mobile wallet 2802 may access one or more wired networks (e.g., IP network 2812 and/or payment network 2814) and/or one or more wireless networks (e.g., mobile network 2810) without the need to first gain access to cellular network access infrastructure 2806.

Any contactless device (e.g., a powered payment card or a non-powered payment card) may, for example, communicate with mobile wallet 2802 via a contactless medium. Accordingly, for example, payment information (e.g., a payment account number and a card expiration date) may be communicated from a contactless device to mobile wallet 2802. In so doing, for example, items for purchase on IP network 2812 (e.g., the internet) may be accessed by a browser of mobile wallet 2802 via an access point (e.g., wireless access point 2808 or cellular network access infrastructure 2806). Mobile wallet 2802 may, for example, complete a purchase transaction by first obtaining required payment information from a contactless device, storing such payment information and communicating such payment information to network entities (e.g., payment server 2816 and/or issuer 2820).

Payment server 2816 may, for example, contact issuer 2820 via a network (e.g., payment network 2814) with payment information received from mobile wallet 2802 for authorization of a purchase. Once authorized, payment transaction information may be recorded onto a receipt that may be delivered to mobile wallet 2802 via any one or more delivery options (e.g., via a short messaging service of mobile network 2810 or an email delivery service of IP network 2812). Mobile wallet 2802 may allow a user to associate purchase categories (e.g., groceries, auto repair, or entertainment) to purchases transacted by the mobile wallet so that the user may receive a more detailed accounting of his or her expenditures on his or her receipt. Accordingly, for example, a user may enjoy a higher degree of integration such that a user may customize a level of detail provided on a receipt via mobile wallet 2802.

A payment receipt may, for example, be provided to mobile wallet 2802 as a proof-of-purchase object (e.g., a barcode) that may be provided to a display of mobile wallet 2802 and read by other computing equipment (e.g., a barcode scanner) for proof-of-purchase confirmation.

A mobile wallet (e.g., mobile wallet 2824) may, for example, include a contactless communication device (e.g., an RFID) that may initiate, sustain, and/or terminate contactless communication channel 228 with merchant terminal 2818. Accordingly, for example, mobile wallet 2824 may communicate payment information to merchant terminal 2818 to complete a financial transaction. In so doing, for example, mobile wallet 2824 may first receive payment information via a contactless communication channel from one or more contactless devices (e.g., a non-powered card), store the received payment information within a memory of mobile wallet 2824, and forward the payment information onto merchant terminal 2818 to complete a financial transaction. Accordingly, for example, payment information may be recalled from memory within mobile wallet 2824, optionally authenticated and authorized by a user of mobile wallet 2824 and communicated to merchant terminal 2818 via contactless communication channel 2828 to complete a financial transaction using merchant terminal 2818. An electronic receipt may, for example, be generated by merchant terminal 2818 and communicated to mobile wallet 2824 via contactless communication channel 2828.

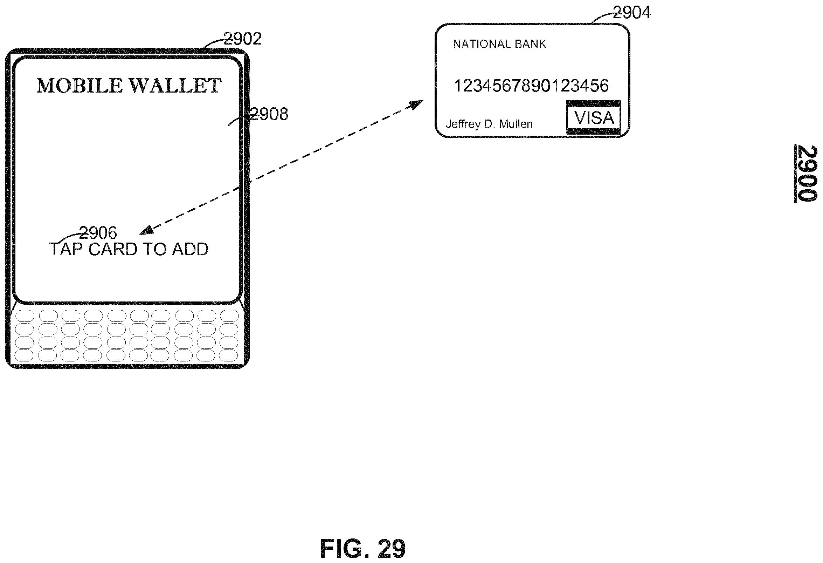

FIG. 29 shows system 2900, which may include mobile wallet 2902 and payment card 2904. Mobile wallet 2902 may, for example, be a laptop computer, a PDA, a mobile telephonic device (e.g., a smartphone), an MP3 player, a GPS, or any other mobile device. Display 2908 may be a touch-sensitive display (e.g., sensitive to a change in capacitance). Payment card 2904 may, for example, be a powered payment card or a non-powered payment card.

Mobile wallet 2902 and payment card 2904 may each include a contactless communication device (e.g., RFID) that may communicate via a contactless communication channel that may be formed between mobile wallet 2902 and payment card 2904 after coming into proximity to one another. Payment card 2904 may, for example, be tapped onto display 2908 of mobile wallet 2902 to establish a proximity relationship that forms a communication channel between payment card 2904 and mobile wallet 2902. As per another example, payment card 2904 may be brought within a proximity distance (e.g., up to two inches) of mobile wallet 2902 to establish a contactless communication channel between mobile wallet 2902 and payment card 2904.

A processor of mobile wallet 2902 may, for example, execute application code that may generate a graphical user interface (GUI) onto display 2908 of mobile wallet 2902. Message 2906 of such a GUI may invite a user of mobile wallet 2902 to begin storage of card information (e.g., payment card information) by tapping one or more cards (e.g., one or more payment cards) against display 2908. As per another example, by tapping a card (e.g., payment card 2904) against mobile wallet 2902, a processor of mobile wallet 2902 may autonomously determine that card information associated with the tapped card is to be stored within a memory of mobile wallet 2902 and a processor of mobile wallet 2902 may then generate a mobile wallet GUI onto display 2908 to autonomously download the card information and engage a user of mobile wallet 2902 to administer any other activities that may be associated with such an information download.

A processor of mobile wallet 2902 may, for example, autonomously determine a type of card that may be tapped against it. For example, a processor of mobile wallet 2902 may receive payment card data that may be indicative of a non-powered payment card (e.g., payment card data received from a non-powered card may not provide a security code associated with the card). As per another example, a processor of mobile wallet 2902 may receive data that may be indicative of a powered card (e.g., payment card data received may contain a dynamically generated security code). Payment card data received from a powered card may, for example, include a dynamic security code that may change depending upon a type of transaction being conducted (e.g., debit or credit transaction).

As per another example, payment card 2904 may be a powered payment card that may include electronics to simulate a human touch (e.g., payment card 2904 may generate a change in capacitance that may be sensed by display 2908). Through a series of simulated touches, payment card 2904 may communicate a series of data bits to display 2908, which may then be processed by a processor of mobile wallet 2902. In so doing, for example, a contactless communication channel may be established where data is transferred from payment card 2904 to mobile wallet 2902 via a series of simulated touches.

Payment card 2904 may, for example, include a light sensor. Accordingly, for example, payment card 2904 may be sensitive to light pulses generated within a region of display 2908. The light sensor of payment card 2904 may receive a series of light pulses, which may be construed by a processor of payment card 2904 as data generated by mobile wallet 2902. In so doing, for example, payment card 2904 may receive an optical data stream represented by a series of light pulses generated by display 2908. As such, a two-way communication channel may be formed, where simulated touches may generate a data stream from payment card 2904 to mobile wallet 2902 and light pulses may generate a data stream from mobile device 2902 to payment card 2904.

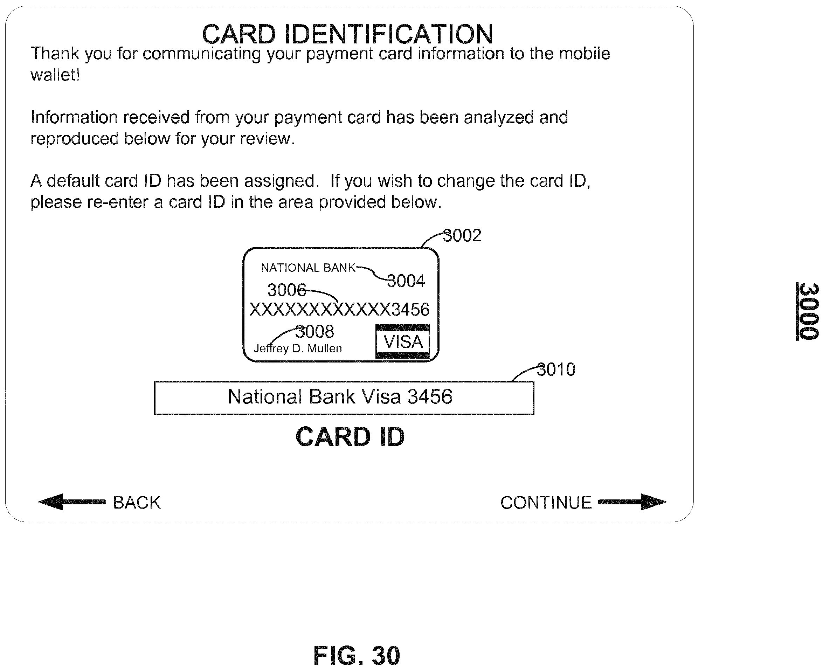

FIG. 30 shows GUI 3000, that may be generated by a processor of a mobile device and provided onto a display of the mobile device. GUI 3000 may, for example, provide a summary information screen that provides virtual card 3002 and associated identifying information. Virtual card 3002, for example, may be a virtual representation of a physical card that may have been tapped against a display of a mobile device to form a contactless communication channel between the physical card and a mobile device.

Card (e.g., payment card) information (e.g., track 1 and track 2 magnetic stripe data) may be communicated to the mobile device via a contactless communication channel and such information may be displayed within virtual card 3002 as summary information that may be associated with the physical payment card. A payment card number communicated to a mobile device within a magnetic stripe message may, for example, include issuer identification as well as an issuing network identifier. Accordingly, for example, a processor of a mobile device may analyze the payment card number received from a physical payment card and may render a portion or all of the identifying information associated with the payment card number onto virtual card 3002. In so doing, for example, issuer identification 3004 as well as a logo representative of an issuing network identifier may be rendered onto virtual card 3002. Additionally, a portion or all of payment card number 3006 as well as cardholder's information (e.g., cardholder's name 3008) may be rendered onto virtual card 3002.

A portion or all of the card information received from a physical card may be stored within a memory of a mobile device. Alternately, for example, a portion or all of the card information received from a physical card may be collected by a mobile device and communicated by the mobile device to a remote server for storage and/or validation purposes. In so doing, for example, instead of storing payment card information within a memory of a mobile device, card identification 3010 may, for example, be stored within a mobile device and used as an index identifier to look up payment information that may be stored within a remote server. A processor of a mobile device may generate card identification 3010 and may display card identification 3010 within an alphanumeric entry box. In so doing, for example, a user of a mobile device may either accept, or change, card identification 3010 to a value that may later be used to remind the user of which physical payment card is associated with card identification 3010 and to recall payment information associated with card identification 3010 that may be remotely stored.

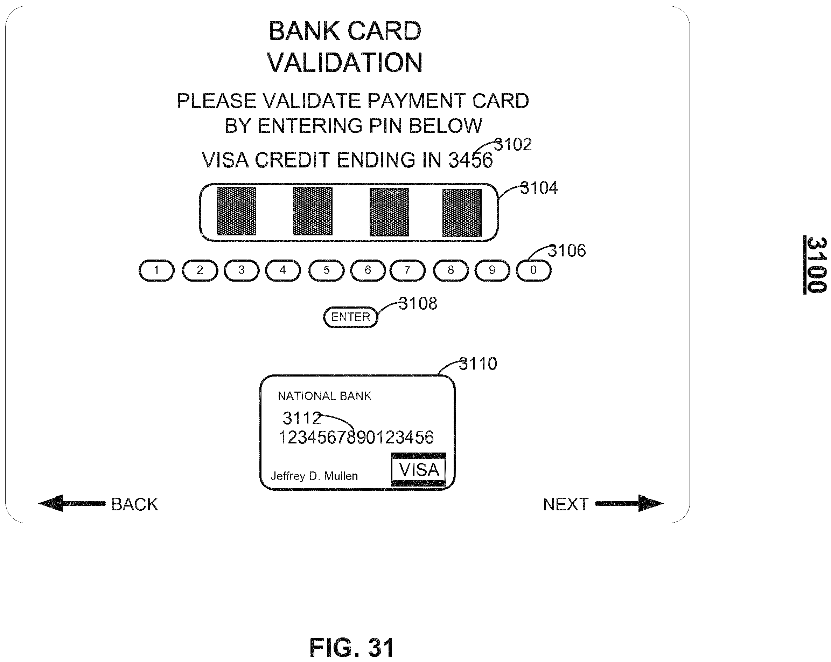

FIG. 31 shows GUI 3100, that may be generated by a processor of a mobile device and provided onto a display of the mobile device. GUI 3100 may, for example, include a bank card validation screen as may be generated by a processor of a mobile device. GUI 3100 may, for example, challenge a user of the mobile device to enter a PIN that may be associated with a payment card (e.g., VISA credit 3102) that was previously presented to the mobile device so that payment information may be uploaded from the payment card to the mobile device via a contactless communication channel generated between the payment card and the mobile device. GUI 3100 may, for example, generate virtual pin pad 3106 that may include touch-sensitive buttons having alphanumeric indicia associated with each button. A user may touch one or more buttons of pin pad 3106 that may correspond to respective characters of a PIN and an indication of the user's selection may appear within area 3104. Characters displayed within area 3104 may, for example, be hidden for security purposes.

Activation of virtual button 3108 may, for example, cause a processor of a mobile device to compare a PIN entered by a user of the mobile device to a PIN that may be associated with the payment card presented to the mobile device for storage. The PIN may, for example, be stored within protected memory of the mobile device, so that a processor of the mobile device may locally determine the validity of the PIN entered. Alternately, for example, the mobile device may communicate the PIN to, for example, the issuing bank for a remote validation of the PIN entered. Persons skilled in the art will appreciate that a user interface (e.g., a keypad or keyboard) of a mobile device may be used instead of virtual pin pad 3106 to enter the one or more characters of a PIN.

Upon validation that the correct PIN was entered, virtual card 3110 may be displayed. In particular, for example, account number 3112 may be fully populated within virtual card 3110 to indicate to a user of the mobile device that the PIN was correctly entered and to allow the user to compare account number 3112 against an account number printed on the physical payment card of which virtual card 3110 is a representation. Persons skilled in the art will appreciate that virtual payment cards may be stored within a mobile wallet without first requiring a user to validate the payment card using a PIN entry. An alternate form of validation (e.g., a security code) may, for example, be required for validation. As per another example, no validation may be required to store a virtual payment card onto a mobile wallet.

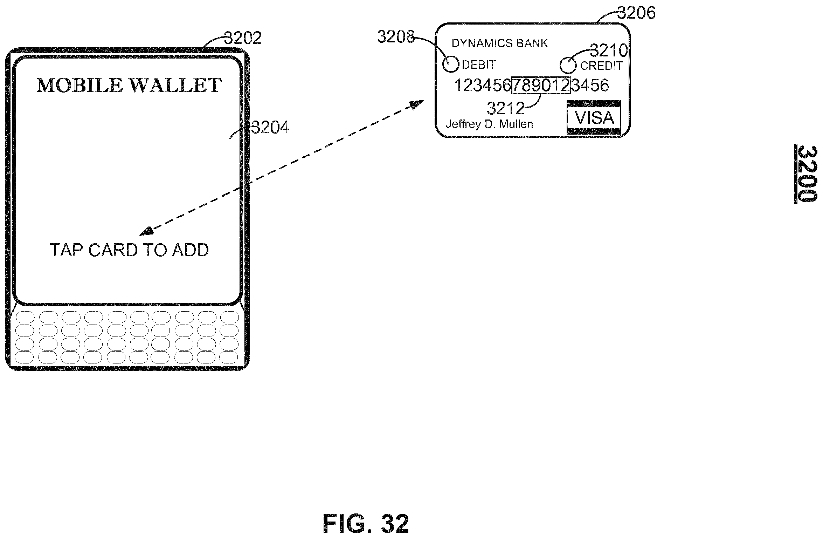

FIG. 32 shows system 3200, which may include mobile wallet 3202 and card 3206. Card 3206 may, for example, be a powered card (e.g., a powered payment card). Accordingly, for example, card 3206 may include a processor, display 3212, a battery, manual input interfaces (e.g., buttons 3208 and 3210) and other electronic components (e.g., a light source, a light sensor and a touch simulator). A user of powered card 3206 may, for example, interact with card 3206 to select the information that may be communicated to mobile wallet 3202 from card 3206.

A user may, for example, press button 3208 and then tap card 3206 against display 3204 of mobile wallet 3202 to generate a contactless communication channel (an RFID communication channel) between card 3206 and mobile wallet 3202. Accordingly, for example, card 3206 may communicate payment information (e.g., one, two and/or three tracks of magnetic stripe data) that may be associated with a feature selected by pressing button 3208. In so doing, for example, card 3206 may communicate information (e.g., within a discretionary data field) associated with a selected feature (e.g., a VISA debit payment feature).

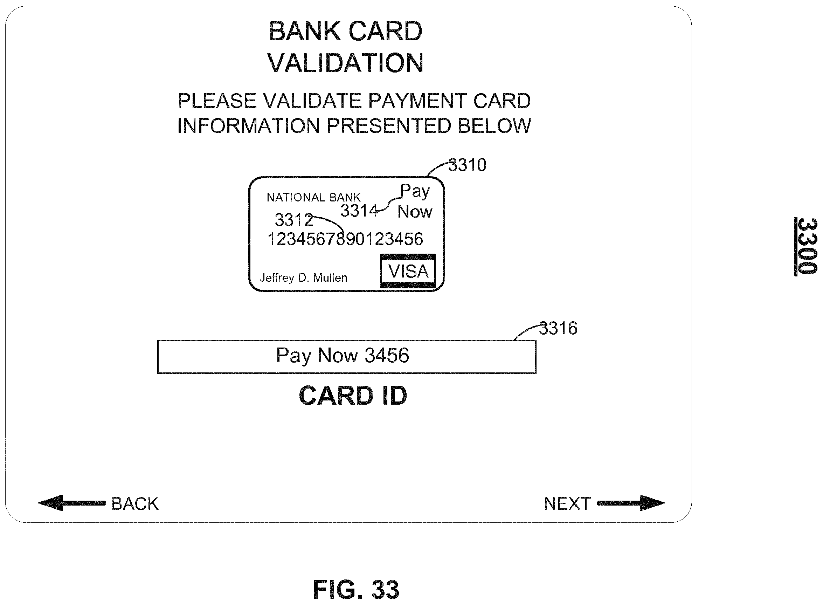

FIG. 33 shows GUI 3300, that may be generated by a processor of a mobile device and provided onto a display of the mobile device. GUI 3300 may, for example, include a bank card validation screen as may be generated by a processor of a mobile device. GUI 3300 may, for example, render virtual card 3310 so that a user of the mobile device may compare information 3312 and 3314 to information that the user intended to communicate to the mobile device.

Accordingly, for example, a user may have pressed a button on a powered payment card associated with a debit pay feature and may have communicated the debit pay feature (e.g., within a discretionary data field of a magnetic stripe message) to a mobile device via a contactless communication channel that may have been created between the powered payment card and the mobile device. In so doing, for example, a processor of a mobile device may analyze the debit pay feature received from the powered payment card and may render an indication (e.g., "Pay Now" identifier 3314) onto virtual card 3310 to indicate that virtual payment card 3310 has been stored within the mobile device such that when used by a user of the mobile device to complete a payment transaction, authorizes an immediate deduction of funds from the user's payment account. Alphanumeric entry box 3316 may, for example, allow the user to tag stored virtual card 3310 with a card identifier that reminds the user of the debit functionality associated with virtual card 3310.

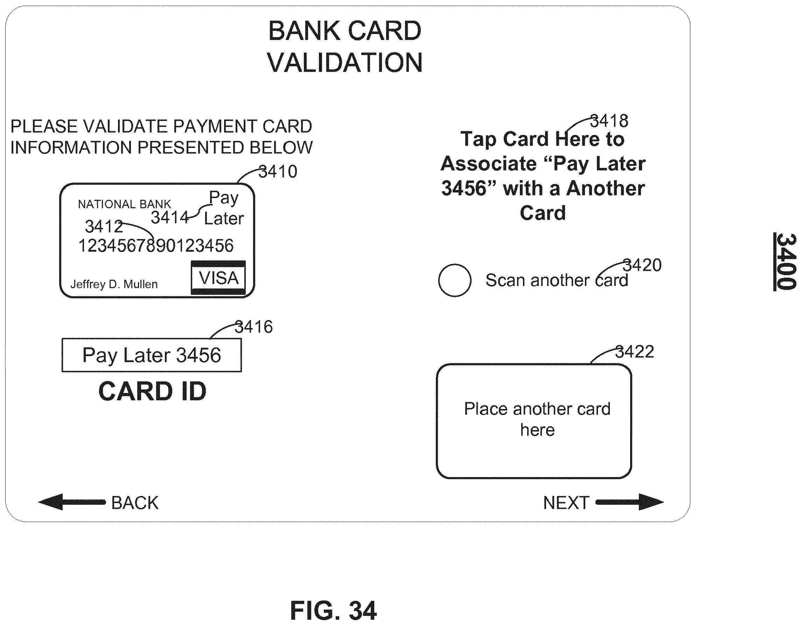

FIG. 34 shows GUI 3400, that may be generated by a processor of a mobile device and provided onto a display of the mobile device. GUI 3400 may, for example, render virtual card 3410 to allow a user to verify information previously communicated to a mobile device via a contactless communication channel that may be generated between a powered payment card and the mobile device. A user of a mobile device may, for example, press a button on a powered payment card that may be associated with a credit pay feature and may communicate the credit pay feature along with other payment information (e.g., payment account number 3412 and expiration date) via a contactless communication channel to the mobile device.

A processor of a mobile device may, for example, analyze information received from a powered payment card (e.g., information received via a discretionary data field) and may determine that payment information received from the powered payment card may be associated with a credit feature (e.g., "Pay Later" feature 3414). Accordingly, for example, a processor of a mobile device may use identifier 3414 of virtual card 3410 to signify such a credit payment feature.

Virtual card identifier 3416 may, for example, be an editable card identifier to allow a user of a mobile device to store and recall virtual card 3410 to/from a memory of a mobile device. Card identifier 3416 may, for example, be used by a mobile device to access virtual card 3410 from a remote location (e.g., a remote server) such that the mobile device need not store sensitive information that may be associated with virtual card 3410 within the mobile device.

GUI 3400 may, for example, allow an additional card to be associated with virtual card 3410. A rewards card may, for example, be associated with a credit account that may be associated with virtual card 3410. Accordingly, for example, rewards card information may be communicated to a mobile device by tapping the rewards card against portion 3418 to generate a contactless communication channel (e.g., an RFID communication channel) between the rewards card and the mobile device. As per another example, an identification card (e.g., a driver's license) may be associated with virtual card 3410. Accordingly, for example, identifying information (e.g., date of birth and a picture) associated with the holder of the identification card may be communicated to a mobile device and stored within the mobile device. In so doing, for example, stored identification information may be recalled from a memory of the mobile device to provide authentication information while completing a purchase transaction using the mobile device.

A user may, for example, select option 3420 to allow card information to be scanned into a mobile device using a scanning device (e.g., a camera) of the mobile device. Accordingly, for example, a card (e.g., a driver's license) may be scanned into a mobile device by selecting radio button 3420 and holding the driver's license in front of the mobile device while a snapshot of the driver's license is taken by a camera of the mobile device and stored in a memory location of the mobile device. A mobile device may alternately, for example, access identifying information (e.g., name, address, phone number, and picture) from a database (e.g., a motor vehicle database) that may be accessible from a network. Such information may be rendered onto a virtual identification card (e.g., a driver's license) that may be stored within a mobile device. In so doing, for example, user identification data may be recalled from a memory of a mobile device and rendered onto a display of the mobile device, so that a merchant may verify the validity of the user identification data when virtual card 3410 is used to complete a purchase transaction in the presence of the merchant.

Card information may be communicated via programming portion 3422. A powered card may, for example, provide touch simulation electronics and a light sensor such that when the powered card is placed against portion 3422, a two-way contactless communication channel may be created. Accordingly, for example, information may be communicated from the powered card to the mobile device through a series of touch simulations generated by the powered card and sensed by a portion within portion 3422 that is touch sensitive. In so doing, for example, a processor of a mobile device may construe a series of touch simulations as a series of data bits communicated by a powered card that may be indicative of information associated with the powered card. GUI 3400 may, for example, provide a series of light pulses within portion 3422 that may be received by a light sensor of the powered card and construed by a processor of the powered card as data communicated by the mobile device.

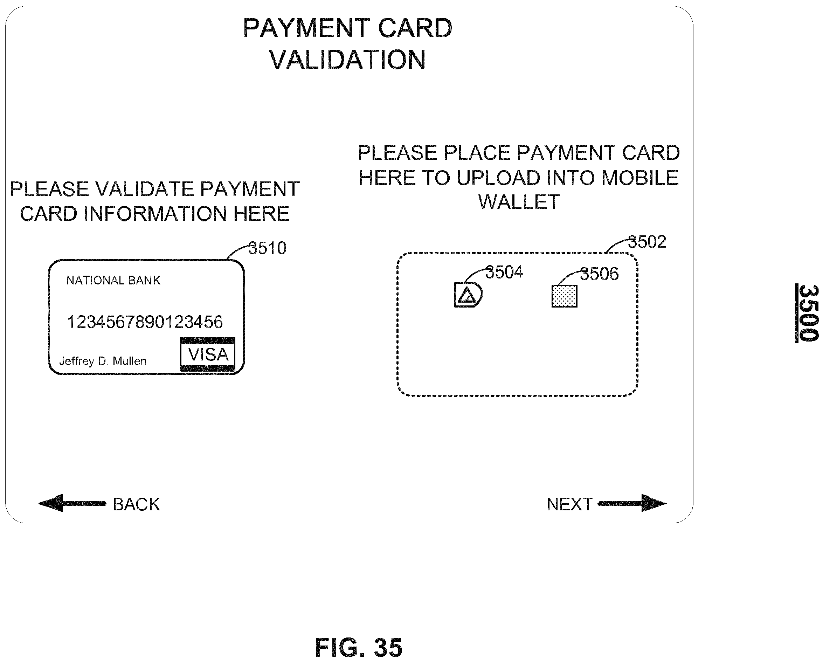

FIG. 35 shows GUI 3500 that may be generated by a processor of a mobile device and provided onto a display of the mobile device. GUI 3500 may, for example, include upload area 3502 as generated by a processor of a mobile device. Upload area 3502 may, for example, include one or more data exchange areas (e.g., data exchange areas 3504 and 3506). Icon 3504 may, for example, be generated by GUI 3500 within an area of a display of a mobile device that may be sensitive to touch (e.g., an area that may be sensitive to a capacitance change). Area 3506 may, for example, be generated by GUI 3500 within an area of a display of a mobile device that may generate pulses of light.

Information associated with a powered payment card may be uploaded for use by a mobile device by exchanging data with the powered payment card via data exchange areas 3504 and 3506. For example, a powered payment card may be pressed against upload area 3502 so that a touch simulation device of the powered payment card aligns with data exchange area 3504 and a light sensing device of the powered payment card aligns with data exchange area 3506. Accordingly, for example, the powered payment card may communicate information to a processor of a mobile device by simulating a series of touches in data exchange area 3504 and data may be communicated to the powered payment card by a processor of the mobile device by generating a series of light pulses in data exchange area 3506. In so doing, for example, a mobile device and a powered payment card may exchange information so that payment card information may be stored within the mobile device.

Once payment card information is uploaded into a mobile device, GUI 3500 of the mobile device may display a summary of the uploaded information in validation area 3510. Accordingly, for example, one, two or three tracks of magnetic stripe information may be uploaded from a payment card into a mobile device via data exchange area 3504 of upload area 3502. A portion or all of the uploaded data may, for example, be rendered within validation area 3510, so that a user of the mobile device may validate that the correct payment card information was uploaded and stored within the mobile device.

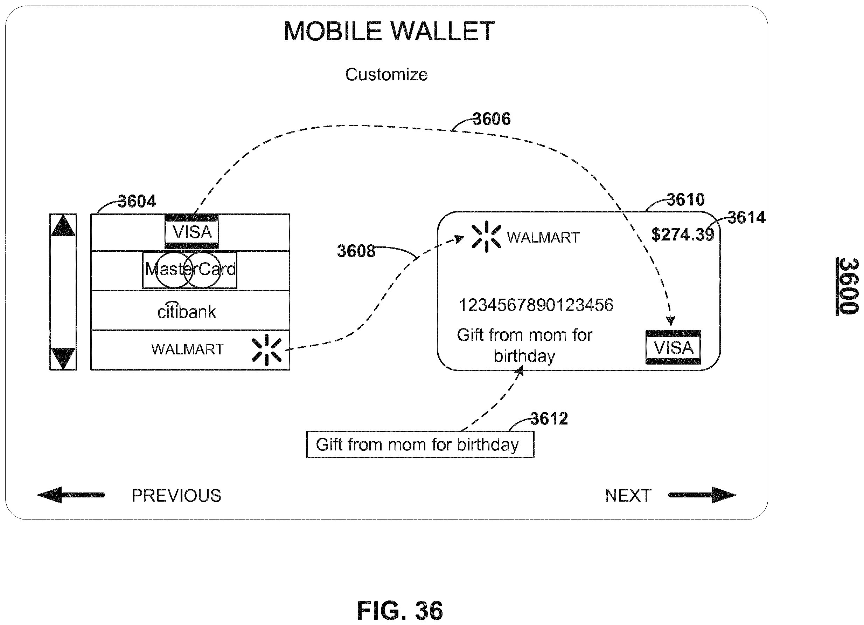

FIG. 36 shows GUI 3600 that may be generated by a processor of a mobile device and provided onto a display of the mobile device. GUI 3600 may, for example, render virtual card 3610 and may display a portion of information that may be associated with virtual card 3610. Accordingly, for example, a payment card (e.g., a gift card) may be brought within a proximity or touch relationship with a mobile device such that a contactless communication channel may be generated between the payment card and the mobile device. In so doing, for example, payment account information may be communicated from the payment card to the mobile device and a portion or all of the payment card information may be rendered onto virtual card 3610.

A user of a mobile device may, for example, customize a visual appearance of virtual card 3610 by utilizing any number of graphical user interface objects (e.g., list 3604 and alphanumeric input box 3612) that may be rendered by GUI 3600. A user may, for example, drag-and-drop logos from list 3604 onto virtual card 3610 to more clearly identify virtual card 3610. Accordingly, for example, a user may identify virtual card 3610 as a gift card (e.g., a Walmart gift card), using drag-and-drop operation 3608, having a particular network brand (e.g., a VISA network brand), using drag-and-drop operation 3606. A user may, for example, annotate virtual card 3610 using alphanumeric input box 3612 with any identifying information that may be useful to the user (e.g., information that may be used to recall virtual card 3610 from a memory of a mobile device).

A mobile device may, for example, disallow certain customizations that may conflict with virtual card 3610. Accordingly, for example, a mobile device may prevent a user from applying a different network logo than was previously communicated by a physical card to the mobile device. In so doing, for example, a mobile device may prevent a user from customizing virtual card 3610 as, for example, a M/C network brand, when a payment card number previously communicated from a payment card to a mobile device indicated that the payment card was, for example, a payment card having a VISA network brand.

A credit balance, for example, may be communicated by a gift card to a mobile device via a contactless communication channel generated between the gift card and the mobile device and may be displayed as account balance 3614 to represent an amount of credit that may be remaining on virtual card 3614. Virtual card 3610 may, for example, be used by a mobile device to complete a purchase transaction in which payment card information associated with virtual card 3610 may be communicated to a merchant terminal (e.g., communicated via an RFID communication channel) and an amount of the purchase may be communicated from the merchant terminal to the mobile device. Accordingly, for example, account balance 3614 may be updated (e.g., reduced) by the amount of the purchase and displayed so that a user of the mobile device may be updated as to an amount of credit remaining on virtual card 3610.

A user of a mobile device may, for example, purchase additional credit to be added to virtual card 3610. Accordingly, for example, account balance 3614 may be updated (e.g., increased) when an amount of credit is added to virtual card 3610. In so doing, for example, an amount of credit added to virtual card 3610 may be communicated (e.g., communicated via an RFID communication channel) to a mobile device by a merchant terminal and updated via account balance 3614 so that a user of the mobile device may receive up-to-date information relating to a credit balance that may be available on virtual card 3610. As per an example, a user may recall a virtual payment card from a memory of a mobile device, activate the payment card for use, and use the mobile device to purchase additional credit on virtual card 3610 using the activated payment card as the payment vehicle.

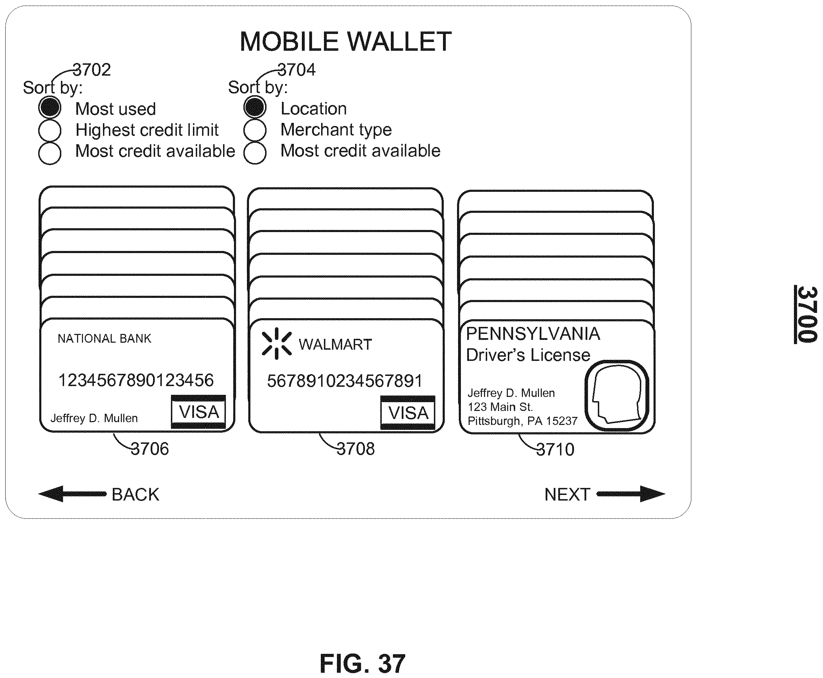

FIG. 37 shows GUI 3700 that may be generated by a processor of a mobile device and provided onto a display of the mobile device. GUI 3700 may, for example, provide a visual representation of all virtual cards that may be stored within a memory of a mobile device (or within a remote server) and may display each virtual card within one or more categories that may be associated with each virtual card. A processor of a mobile device may, for example, analyze information received from a physical card via a contactless communication channel (e.g., an RFID, electromagnetic, visible, audible, capacitive, or magnetic communication channel) to determine a card category that may be associated with the corresponding virtual card.

An account number may, for example, be communicated by a card to a processor of a mobile device that may identify the card as a particular card type (e.g., bank card, rewards card, identification card, healthcare card, travel card or airline card). Accordingly, for example, each virtual card stored within a memory of a mobile device may be assigned a category index by a processor of the mobile device and may then be rendered onto GUI 3700 in accordance with the category index assigned. As per another example, a user of a mobile device may assign a category index (e.g., card identification) to a virtual card after information associated with a corresponding physical card is communicated to the mobile device via a contactless communication channel.

One or more payment cards, for example, may be rendered onto GUI 3700 and each payment card may be aligned within category 3706. An ordering of each payment card in category 3706 may, for example, be established by a user of a mobile device via sort options 3702. A mobile device may, for example, maintain statistics (e.g., number of times each virtual payment card is recalled from a memory of a mobile device and used to complete a purchase transaction via the mobile device). Accordingly, for example, upon selection of one of sort options 3702 (e.g., Most used), a processor of a mobile device may recall usage statistics that may be associated with each virtual payment card stored within a memory of a mobile device and may display each virtual payment card within category 3706 onto GUI 3700 in accordance with such usage statistics (e.g., the top virtual payment card displayed within category 3706 may have the most usages of all virtual payment cards stored within a memory of the mobile device).

A mobile device may, for example, maintain other information associated with virtual payment cards of category 3706. Accordingly, for example, a mobile device may access network devices (e.g., issuer servers) associated with each virtual payment card stored within the mobile device. In so doing, for example, a mobile device may collect information (e.g., credit limit and credit available) associated with each virtual payment card stored within a memory of the mobile device and may display each virtual payment card on GUI 3700 in accordance with sort options 3702 (e.g., the top card displayed within category 3706 may have the highest credit limit or may have the most credit available).

Category 3708 may, for example, be associated with all virtual gift cards that may be stored within a memory of a mobile device (or remote server). Information associated with each virtual gift card may, for example, include a merchant identifier, a merchant type identifier, and an amount of credit available. Accordingly, for example, a user may select one of sort options 3704 (e.g., Most credit available) to display a list of virtual gift cards within category 3708 in a descending order, where the top virtual gift card of category 3708 may have the highest credit available.

A mobile device may, for example, be a locating device (e.g., a GPS) or may, for example, include location determination electronics. Accordingly, for example, a mobile device may determine its own location and may determine whether its location corresponds with a location of a merchant's place of business that may be associated with a virtual gift card of category 3708. In so doing, for example, a mobile device may determine that its location is within a Walmart store and if, for example, sort options 3704 is selected to "Location", then a processor of the mobile device may re-order the virtual gift cards of category 3706 such that a Walmart virtual gift card is displayed as the top card in the stack. Accordingly, for example, the Walmart virtual gift card may be conveniently located within GUI 3700 for selection by a user of a mobile device to use during a purchase transaction conducted between a contactless communication channel formed between the mobile device and a merchant terminal at the Walmart store.

Virtual cards may, for example, be autonomously sorted across categories depending upon a virtual card placement that may exist in a particular category. A virtual payment card may, for example, be selected to occupy a top card placement within category 3706. A virtual rewards card may, for example, be associated with the virtual payment card selected for top placement in category 3706. Accordingly, for example, the associated virtual rewards card may be selected for top placement within category 3708 based upon its association with the virtual payment card selected for top placement within category 3706. As per another example, a virtual identification card (e.g., a virtual driver's license card) may be selected for top placement within category 3710 based upon its general association with any virtual payment card selected for top placement within category 3706 or its general association with any virtual gift card selected for top placement within category 3708.

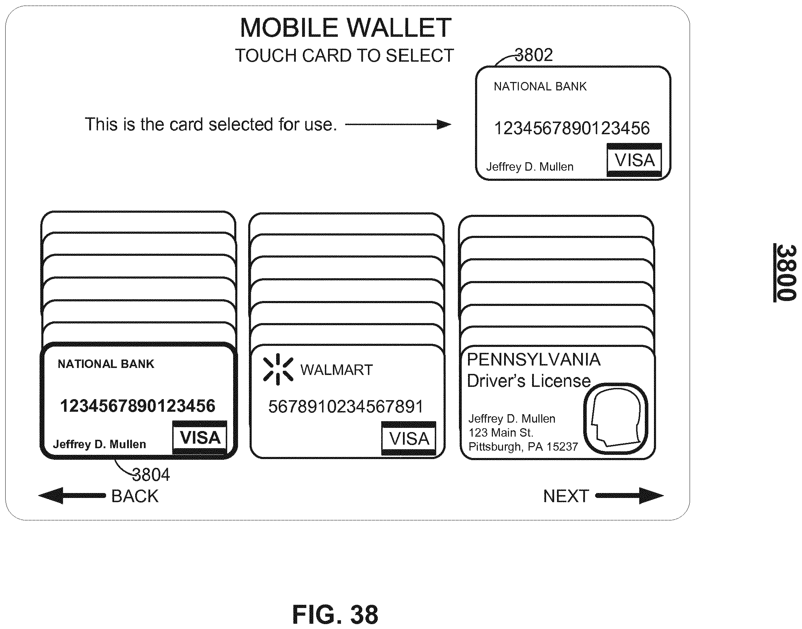

FIG. 38 shows GUI 3800 that may be generated by a processor of a mobile device and provided onto a display of the mobile device. GUI 3800 may, for example, provide a visual representation of all virtual cards that may be stored within a mobile device (or remote server) and may display each virtual card within one or more categories that may be associated with each virtual card. GUI 3800 may, for example, be rendered onto a touch-sensitive display of a mobile device, such that by touching a location of the display that corresponds to a location of a virtual card, that card may be selected for use. Accordingly, for example, a user may touch any area within virtual card 3804 to activate virtual card 3804 for use. In so doing, for example, indicia may be provided on GUI 3800 to indicate that virtual card 3804 has been selected for use (e.g., an outline of virtual card 3804 may be highlighted) and a copy of virtual card 3804 (e.g., virtual card 3802) may be rendered onto GUI 3800 to indicate to a user of the mobile device that virtual card 3802 has been selected for use.

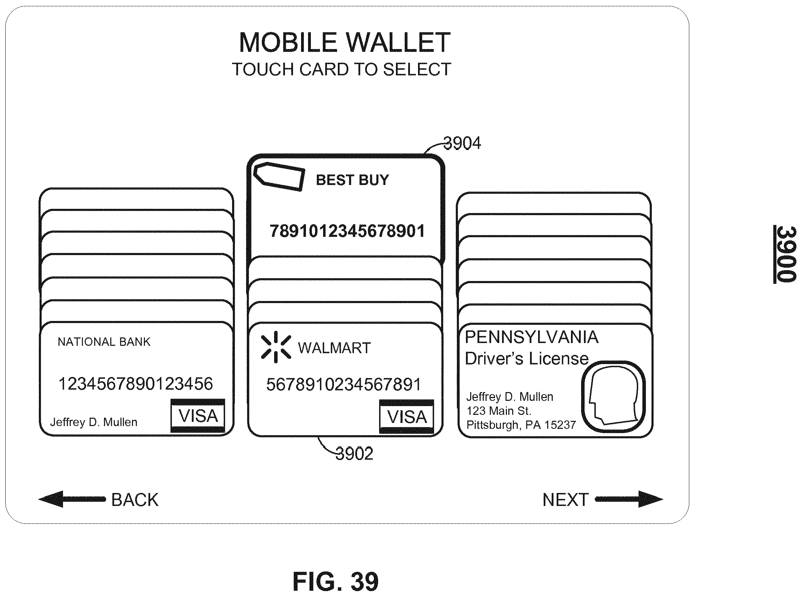

FIG. 39 shows GUI 3900 that may be generated by a processor of a mobile device and provided onto a display of the mobile device. GUI 3900 may, for example, allow a user of a mobile device to select (e.g., touch) one of the virtual cards rendered onto GUI 3900. Once selected, the virtual card may rise from its position (e.g., virtual card 3904 may be elevated above the neighboring virtual cards in category 3902) and may be highlighted to indicate the selection to a user. Once elevated, the selected virtual card (e.g., card 3904) may display relevant information associated with the virtual card (e.g., information displayed on a front surface of the virtual card such as account number and merchant affiliation) so that a user may verify that the selected virtual card is the virtual card that the user wishes to use. If the selected virtual card is not the virtual card that the user wishes to use, then the user may deselect (e.g., touch) the selected virtual card and the virtual card may fall back within the ranks of its neighboring virtual cards. If the selected virtual card is the virtual card that a user wishes to use, then the user may confirm (e.g., touch the selected virtual card twice) that the selected card is the desired virtual card for use.

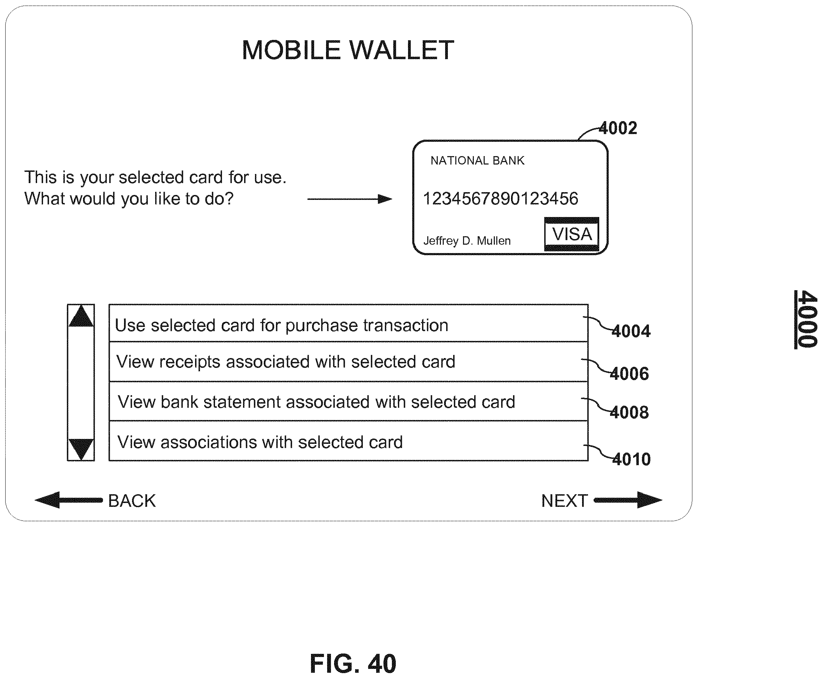

FIG. 40 shows GUI 4000 that may be generated by a processor of a mobile device and provided onto a display of the mobile device. GUI 4000 may, for example, allow a user of a mobile device to use selected virtual card 4002 in some manner. A user may, for example, wish to complete a purchase transaction using the mobile device and selected virtual card 4004. Accordingly, for example, upon selection of option 4004, information associated with selected virtual card 4002 may be communicated from a mobile device to, for example, a merchant terminal to complete a purchase transaction. In so doing, for example, a contactless communication channel (e.g., an RFID communication channel) may be formed between the mobile device and the merchant terminal and payment information (e.g., payment account number and expiration date) may be communicated from the mobile device to the merchant terminal via the contactless communication channel. As per another example, other information (e.g., one, two, or three tracks of magnetic stripe information) that may be associated with virtual card 4002 may be communicated by the mobile device to the merchant terminal when the mobile device detects the presence of an RFID communication channel formed between the mobile device and the merchant terminal.

A mobile device may, for example, request electronic receipts to be delivered to the mobile device after purchase transactions are completed. Accordingly, for example, receipts may be delivered to the mobile device via an electronic delivery method (e.g., text messaging or email) and may be stored within a memory of the mobile device for future use. In so doing, for example, a user may select option 4006 to view a list of one or more receipts that may be associated with purchases conducted via the mobile device and virtual card 4002.

A mobile device may, for example, request electronic bank statements to be delivered to the mobile device at the end of each billing cycle of virtual card 4002. Alternately, for example, a mobile device may access a network entity (e.g., an issuer's server) to retrieve bank statement information that may be associated with virtual card 4002. Accordingly, for example, a user of a mobile device may review any and all bank statements associated with virtual card 4002 that a user's mobile device may have collected via its network access capabilities (e.g., a wireless access point or cellular network access infrastructure).

A mobile device may, for example, allow virtual card 4002 to be associated with one or more virtual cards stored within a memory of the mobile device (or remote server). For example, virtual card 4002 may be associated with one or more cards (e.g., a rewards card and a driver's license) and a user of a mobile device may view such associations using a GUI of the mobile device.

A mobile device may, for example, allow virtual card 4002 to be associated with one or more virtual cards that may be stored within a memory of another mobile device and/or may allow virtual card 4002 to be associated with one or more physical cards not stored within any mobile device. Virtual card 4002 may, for example, be one of many (e.g., two) cards issued against the same general account (e.g., a husband and wife joint charge account). Accordingly, for example, a mobile device may recognize that virtual card 4002 is one of a pair of cards associated with such a joint account and may provide information to the user of the mobile device about such associations.

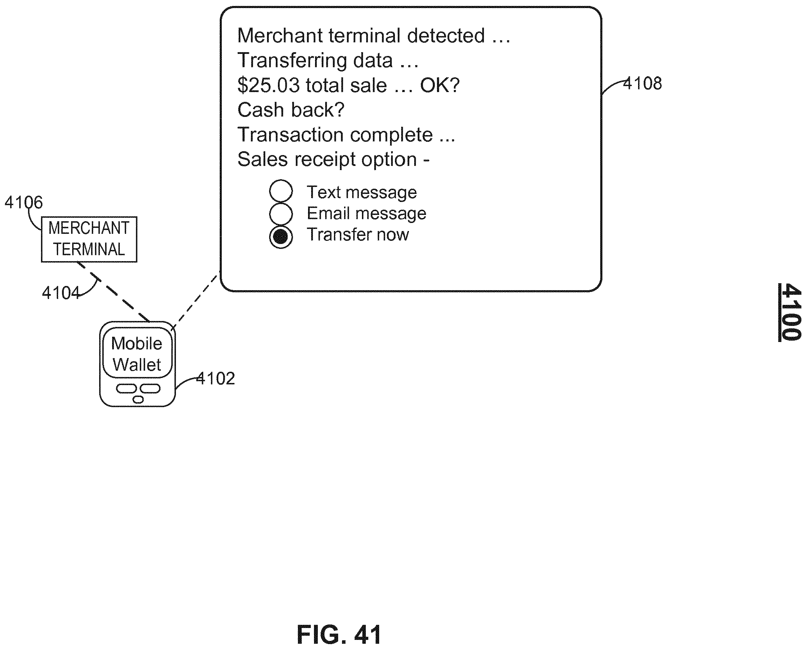

FIG. 41 shows system 4100, which may include a mobile device (e.g., mobile wallet 4102), merchant terminal 4106 and GUI 4108 that may be executed by a processor of mobile wallet 4102. A user of mobile wallet 4102 may recall a virtual card (e.g., a virtual payment card) from a memory of mobile wallet 4102 (or from a remote server) and use mobile wallet 4102 to communicate payment information associated with the virtual payment card to a merchant terminal. Accordingly, for example, a user of mobile wallet 4102 may have selected a virtual payment account from within a memory of mobile wallet 4102 (or remote server) to complete a payment transaction.

Once mobile wallet 4102 is brought within a communication distance (e.g., within approximately 2 inches) of merchant terminal 4106, a contactless communication channel (e.g., RFID communication channel 4104) may be generated between mobile wallet 4102 and merchant terminal 4106. Payment information associated with a virtual payment card selected by a user of mobile wallet 4102 may, for example, be autonomously communicated by a processor of mobile wallet 4102 to merchant terminal 4106 via contactless communication channel 4104 once a presence of merchant terminal 4106 is detected by the processor of mobile wallet 4102.

Contactless communication channel 4104 may, for example, be a two-way communication channel. Accordingly, for example, merchant terminal 4106 may communicate information to mobile wallet 4102 via contactless communication channel 4104. In so doing, for example, merchant terminal 4106 may communicate a total sale amount to mobile wallet 4102 and may wait for a user of mobile wallet 4102 to acknowledge that the total sale amount is correct (e.g., a user of mobile wallet 4102 may press an acknowledgment key that causes mobile wallet 4102 to communicate a confirmation message to merchant terminal via contactless communication channel 4104). Further communication from merchant terminal 4106 may query mobile wallet 4102 as to whether a user of mobile wallet 4102 requires cash back.

Once a purchase transaction is completed, a user of mobile wallet 4102 may request a receipt to be delivered to mobile wallet 4102 via any one of a number of mediums. A user may, for example, request that a receipt be delivered to mobile wallet 4102 at a later time (e.g., receipt queued for delivery at a later time via text messaging or email). A user may, for example, request that a receipt be delivered to mobile wallet 4102 immediately. Accordingly, for example, an electronic receipt may be generated by merchant terminal 4106 and communicated to mobile wallet 4102 via contactless communication channel 4104.

An application executing on a mobile device (e.g., a receipt handler application associated with GUI 4108) may have its own address. Accordingly, for example, the receipt handler's address may be well known within a network (e.g., a payment network), such that a server (e.g., an email server associated with a merchant's payment server) may email an electronic receipt directly to the receipt handler application that may be running on the mobile device. In so doing, for example, one or more applications running on a mobile device may have well known addresses (e.g., email addresses and multimedia message addresses) associated with them, so that the applications may directly communicate with network entities to autonomously provide a user of the mobile device with up-to-date and valuable information.

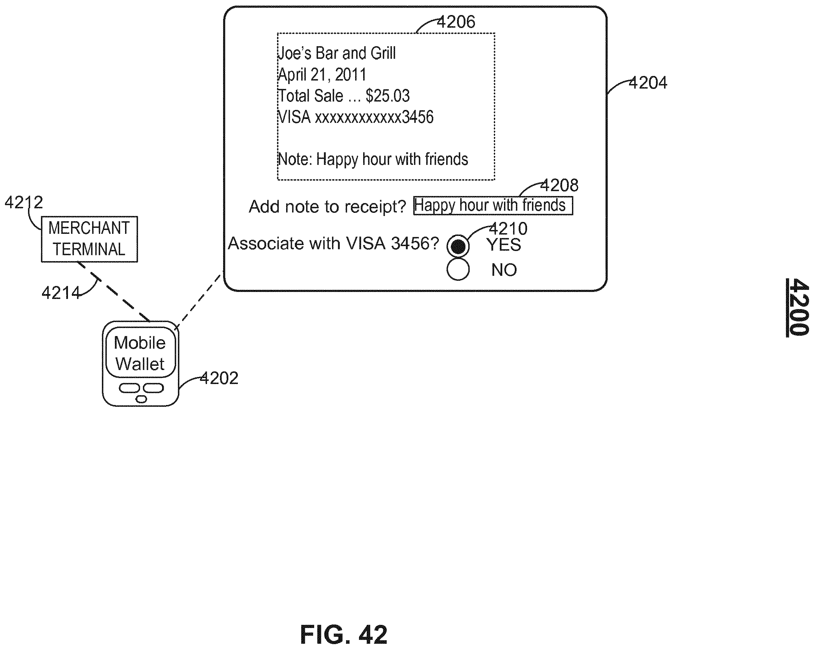

FIG. 42 shows system 4200, which may include a mobile device (e.g., mobile wallet 4202), merchant terminal 4212 and GUI 4204 that may be executed by a processor of mobile wallet 4202. Mobile wallet 4202 may, for example, complete a purchase transaction with merchant terminal 4212 by exchanging payment information with merchant terminal 4212 via a contactless communication channel (e.g., RFID communication channel 4214). Merchant terminal 4212 may, for example, communicate electronic receipt 4206 to mobile wallet 4202 after a purchase transaction completes. Electronic receipt 4206 may, for example, be displayed by a processor of mobile wallet 4202 onto GUI 4204 so that a user of mobile wallet 4202 may view electronic receipt 4206 and may execute certain options that may be associated with electronic receipt 4206.

Mobile wallet 4202 may, for example, allow a user of mobile wallet 4202 to annotate electronic receipt 4206 with a note that may be entered into alphanumeric entry box 4208. Mobile wallet 4202 may, for example, allow electronic receipt 4206 to be associated with a virtual card (e.g., virtual payment card VISA 3456 that was used to complete the purchase transaction) stored within a memory of mobile wallet 1602.

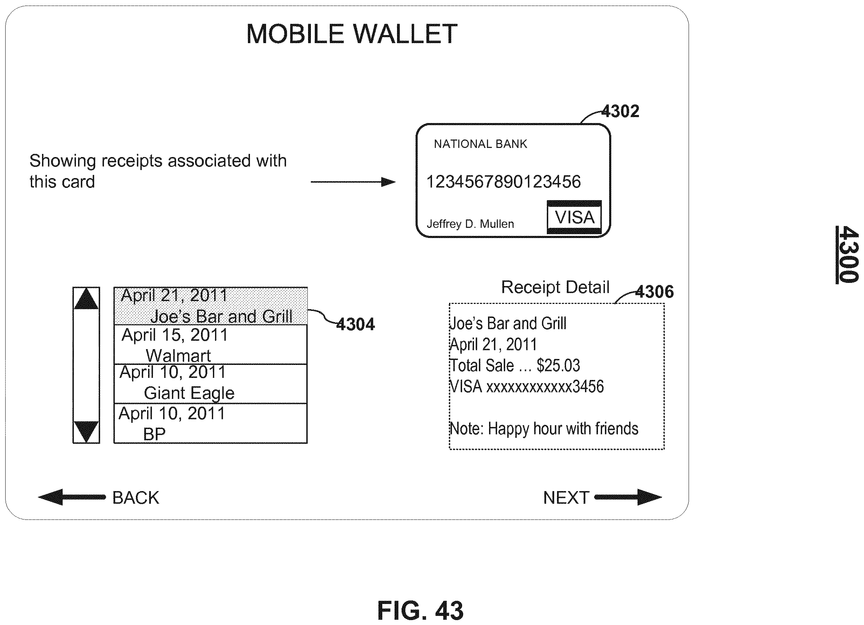

FIG. 43 shows GUI 4300 that may be generated by a processor of a mobile device and provided onto a display of the mobile device. GUI 4300 may, for example, allow a user of a mobile device to view receipts that may be associated with a selected virtual card. Accordingly, for example, a user of a mobile device may select a virtual card (e.g., virtual payment card 4302) and may view a summary of receipts that may be associated with virtual payment card 4302. In so doing, for example, a user may select summary receipt 4304 (e.g., by touching portion 4304 on GUI 4300) and a processor of the mobile device may retrieve details of summary receipt 4304 from a memory of the mobile device and display them in receipt detail area 4306.

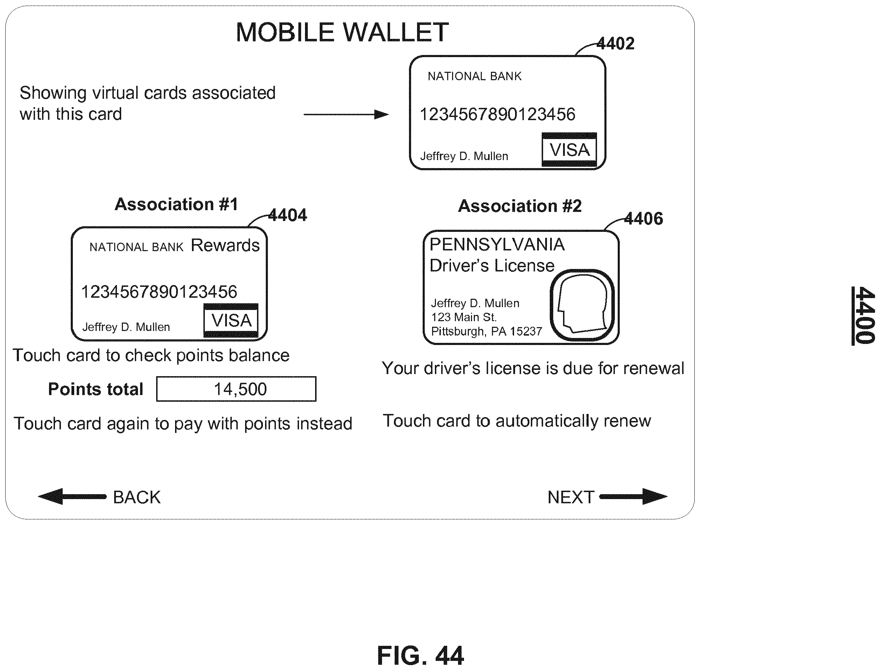

FIG. 44 shows GUI 4400 that may be generated by a processor of a mobile device and provided onto a display of the mobile device. GUI 4400 may, for example, allow a user of a mobile device to view virtual cards stored within a memory of the mobile device (or remote server) that may be associated with a selected virtual card. Accordingly, for example, selected virtual card 4402 may have an association with virtual rewards card 4404 and selected virtual card 4402 may have an association with virtual identification card 4406.

A mobile device may, for example, access a user's rewards account by accessing a network entity (e.g., an issuer's server) to determine information associated with the rewards account (e.g., number of rewards points earned). A mobile device may, for example, access the network entity on a regularly scheduled basis and store the retrieved rewards account information within a memory location of the mobile device. A mobile device may, for example, access the network entity only upon demand to retrieve rewards account information and may only display the retrieved rewards account information without storing the retrieved rewards account information.

GUI 4400 may, for example, allow a user to obtain further information that may be associated with virtual cards 4404 and/or 4406. A user may, for example, touch a display of a mobile device in the vicinity of virtual card 4404 to obtain other information (e.g., a rewards point balance) associated with virtual card 4404. Accordingly, for example, a user may obtain a rewards points total that may be associated with virtual card 4404 and may touch virtual card 4404 again to conduct a purchase transaction with rewards points that may be associated with virtual card 4404. In so doing, for example, a mobile device may, for example, establish a contactless communication channel (e.g., an RFID communication channel) with a merchant terminal and may communicate points information that may be associated with virtual card 4404 so that a purchase transaction may be completed using rewards points that may be associated with virtual card 4404.

GUI 4400 may, for example, provide other information to a user concerning virtual card 4406. For example, a processor of a mobile device may detect that an expiration date of virtual card 4406 is approaching. Accordingly, for example, a user may touch a display in the vicinity of virtual card 4406 to automatically renew the driver's license using the mobile device. In so doing, for example, a mobile device may contact a network entity (e.g., a driver's license renewal server) to order a renewal driver's license. The renewal driver's license may, for example, be delivered to the user as a physical card, in which case the user may upload information associated with the physical driver's license into the mobile device via a contactless communication channel formed between the physical driver's license and the mobile device. Alternately, for example, a mobile device may receive an electronic copy of a virtual driver's license and replace information associated with virtual card 4406 with the updated information received from a driver's license renewal server.

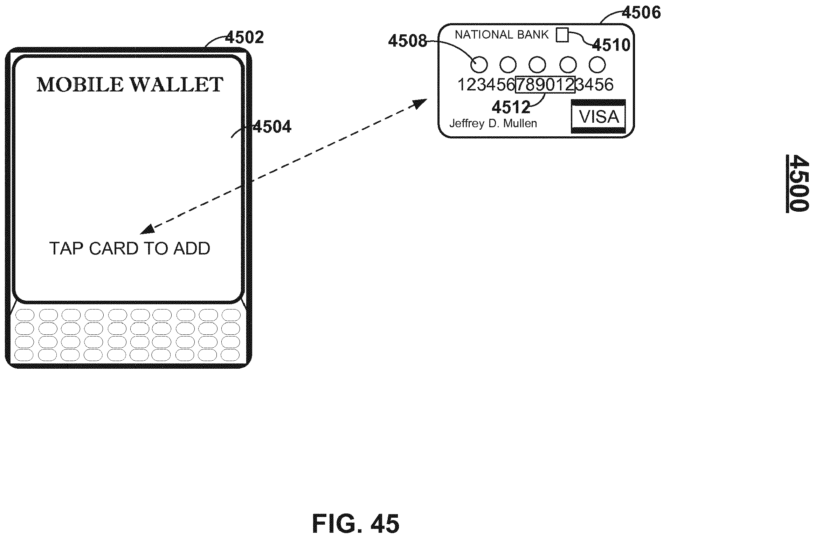

FIG. 45 shows system 4500, which may include mobile wallet 4502 and a powered card (e.g., powered payment card 4506). Powered card 4506 may, for example, include a contactless communication device (e.g., an RFID) that may communicate with a contactless communication device (e.g., an RFID) of mobile wallet 4502. A GUI executed by a processor of mobile wallet 4502 may invite a user of powered card 4506 to tap powered card 4506 against display 4504 of mobile wallet 4502. Such contact with, or proximity to, mobile wallet 4502 may generate a contactless communication channel within which information may be exchanged between powered card 4506 and mobile wallet 4502.

As per another example, powered card 4506 may include circuitry that may simulate a touch. Display 4504 may be touch-sensitive. Accordingly, for example, powered card 4506 may communicate data to mobile wallet 4502 by simulating a series of touches that may be sensed by display 4504 and processed by a processor of mobile wallet 4502 as data received from powered card 4506. Powered card 4506 may include light sensor 4510. Accordingly, for example, a processor of mobile wallet 4502 may generate a series of light pulses on a portion of display 4504 that may be detected by light sensor 4510 of powered card 4506 and processed by a processor of powered card 4506 as data communicated by mobile wallet 4502. In so doing, for example, data may be communicated by powered card 4506 via a series of simulated touches and data may be communicated by mobile wallet 4502 via a series of light pulses.

Information communicated by powered card 4506 to mobile wallet 4502 may, for example, include payment information (e.g., payment account number, expiration date, and cardholder name). Information communicated by powered card 4506 to mobile wallet 4502 may, for example, include other information relating to a configuration of powered card 4506 including, for example, whether or not a display exists and if so, at what location; whether or not a manual input interface (e.g., one or more buttons) exists and if so, at what location; and whether or not a light sensor exists and if so, at what location. Accordingly, for example, configuration information relating to powered card 4506 may be communicated to mobile wallet 4502, so that when a virtual card relating to powered card 4506 is generated and stored within mobile wallet 4502, the virtual card may employ all of the features that may be employed by its physical counterpart.

Information communicated by powered card 4506 may, for example, be encrypted. Decryption may, for example, be executed within mobile wallet 4502 so that information communicated by powered card 4506 may be stored within a memory of mobile wallet 4502 in a decrypted format. Alternately, for example, information communicated by powered card 4506 may be stored within a memory of mobile wallet 4502 in an encrypted format. Mobile wallet 4502 may, for example, authenticate itself to a network entity (e.g., an issuer server) such that each time encrypted information is recalled from a memory of mobile wallet 4502, a decryption key may be communicated by the network entity to mobile wallet 4502 for decryption purposes.

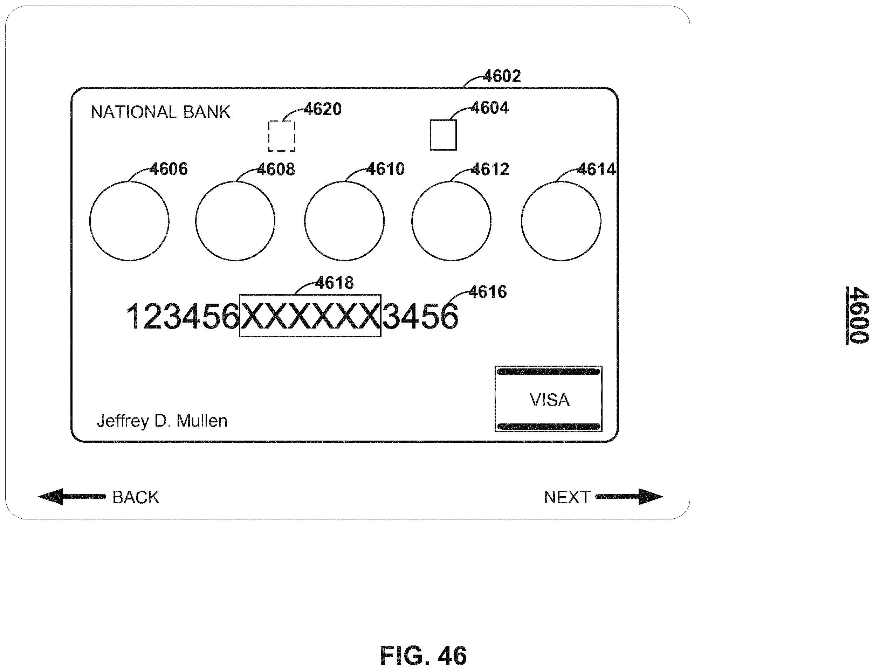

FIG. 46 shows GUI 4600 that may be generated by a processor of a mobile device and provided onto a display of the mobile device. GUI 4600 may, for example, display virtual card 4602 that may employ all of the features of its physical counterpart. Accordingly, for example, manual input interfaces (e.g., virtual buttons 4606 through 4614) may have the same functionality on virtual card 4602 as they do on the physical counterpart to virtual card 4602. In so doing, for example, virtual buttons 4606 through 4614 may be displayed on portions of GUI 4600 that may be touch-sensitive, such that when virtual buttons 4606 through 4614 are touched, a processor of the mobile device may impart a functionality to the mobile device just as if the mobile device itself was the physical card (e.g., a PIN may be entered into virtual card 4602 via one or more buttons 4606-4614 to unlock virtual dynamic portion 4618 of virtual payment card number 4616) .

A mobile device may, for example, provide a light-sensitive display, such that when virtual card 4602 is rendered onto the light-sensitive display, light sensor 4604 may exhibit the same functionality as its physical counterpart. Accordingly, for example, virtual card 4602 may be rendered so that light sensor 4604 exists on a light-sensitive portion of a display of a mobile device. A processor of the mobile device may, for example, detect light pulses sensed at light sensor 4604 as data communicated to virtual card 4602. In so doing, for example, virtual card 4602 may receive information that changes the functionality of virtual card 4602 (e.g., an expiration date of virtual payment card 4602 may be updated via light sensor 4604).

A mobile device may, for example, provide a display that may simulate touch. Accordingly, for example, virtual card 4602 may be rendered onto a display of a mobile device so that touch-simulating portion 4620 aligns with a portion of the display that may be capable of simulating touch. In so doing, for example, virtual card 4602 may communicate information to another device (e.g., another mobile device) when touch-simulating portion 4620 of GUI 4600 is pressed against another device (e.g., a touch-sensitive display of another mobile device) and simulates a series of touches that may be construed by a processor of the other device as data communicated to the other device.

Virtual display 4618 may, for example, display a dynamic portion of payment card number 4616 just as it would be displayed on the physical counterpart to virtual card 4602. For example, virtual card 4602 may be disabled for use when virtual display 4618 does not display a valid portion of virtual card number 4616. Upon entry of a password (e.g., a PIN may be entered by touching one or more buttons 4606-4614 that corresponds to the PIN), virtual card 4602 may be activated for use. Accordingly, for example, once a valid PIN is entered, virtual display 4618 may be populated with a remaining portion of virtual payment card number 4616 thereby activating virtual card 4602 for use. In so doing, for example, a mobile device that displays activated virtual card 4602 via GUI 4600 may communicate payment information (e.g., virtual payment card number 4616 and expiration date) to a device (e.g., a merchant terminal) via a contactless communication channel (e.g., an RFID communication channel) so that a purchase transaction may be completed between the mobile device and the merchant terminal.

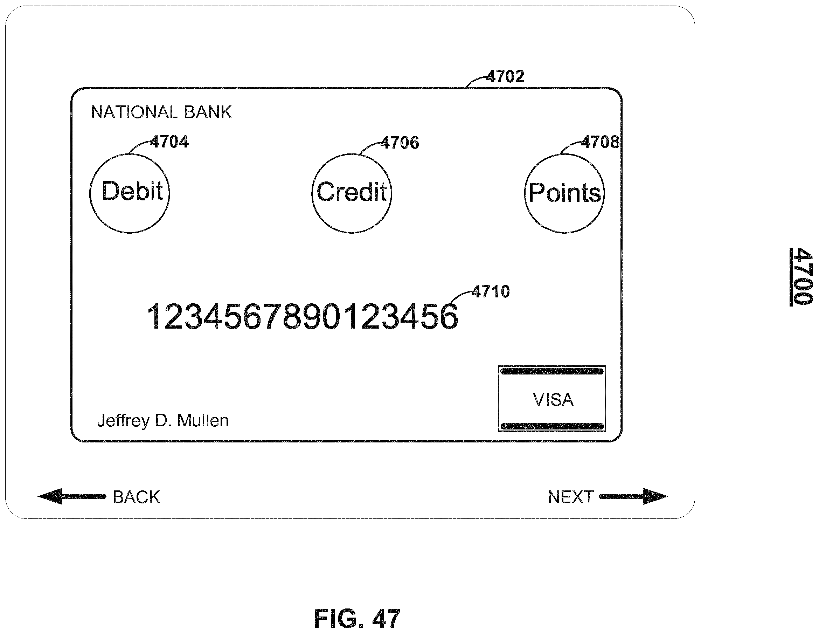

FIG. 47 shows GUI 4700 that may be generated by a processor of a mobile device and provided onto a display of the mobile device. GUI 4700 may, for example, display virtual card 4702 that may employ all of the features of its physical counterpart. For example, a powered card (e.g., a powered payment card) may establish a contactless communication channel (e.g., an RFID communication channel) with a mobile device and communicate configuration and payment information that may be associated with the powered card. Accordingly, for example, a powered card may provide a manual interface (e.g., buttons) to allow a user to select a method of payment (e.g., credit, debit, or points) at the point of sale and may communicate such methods of payment to a mobile device. In so doing, for example, a mobile device may render virtual payment card 4702 having a virtual manual interface (e.g., virtual buttons 4704 through 4708), which a user may select (e.g., touch) in order to select a method of payment to be used by the mobile device when the mobile device communicates payment information to complete a purchase transaction.

A mobile device may, for example, establish a contactless communication channel (e.g., an RFID communication channel) with a merchant terminal to communicate payment information to the merchant terminal to complete a purchase transaction. Accordingly, for example, a user may touch one of virtual buttons 4704-4708 just prior to placing the mobile device within a proximity to the merchant terminal. In so doing, for example, the mobile device may communicate one, two, and/or three tracks of magnetic stripe data to the merchant terminal and may include additional information (e.g., within a discretionary data field) to communicate a method of payment (e.g., credit, debit, or points) to the merchant terminal. Persons skilled in the art will appreciate that payment information may be communicated by a mobile device to a network entity (e.g., a payment server) via a wireless interface (e.g., a cellular interface) such that a method of payment (e.g., credit, debit, or points) may be communicated by the mobile device to the payment server to complete a remote purchase transaction.

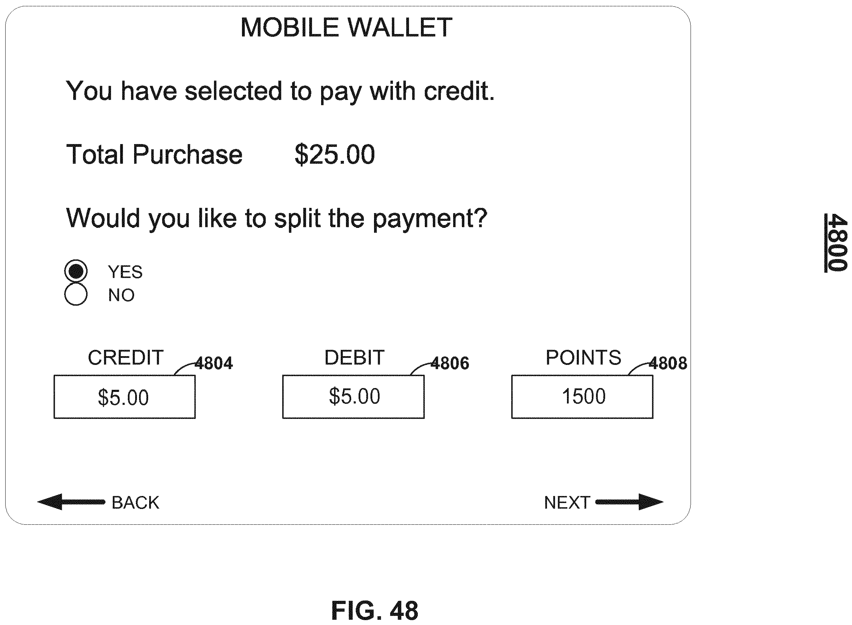

FIG. 48 shows GUI 4800 that may be generated by a processor of a mobile device and provided onto a display of the mobile device. GUI 4800 may, for example, allow a user of a mobile device to break a payment up into multiple payment methods for a single purchase. For example, a user of a mobile device may have provided a mobile device within a proximity to a merchant terminal, such that the mobile device may have communicated a method of payment (e.g., credit) to the merchant terminal based upon a user selection made via a GUI displayed by the mobile device. A processor of the mobile device may, for example, recognize that a virtual card selected by the user for payment may offer additional payment methods (e.g., debit and points). Accordingly, for example, GUI 4800 may be rendered by a processor of the mobile device to allow the user of the mobile device the option to spread the payment across several accounts by entering amounts into alphanumeric entry boxes 4804-4808. In so doing, for example, a user may spread a purchase across multiple payment methods by entering an amount desired to be charged to each payment method (e.g., $5 credit, $5 debit, and 1500 points for a $25 total purchase). The mobile device may, for example, settle the transaction as three separate financial transactions by communicating payment information to one or more network entities (e.g., a payment server) that corresponds to each of the three financial transactions.

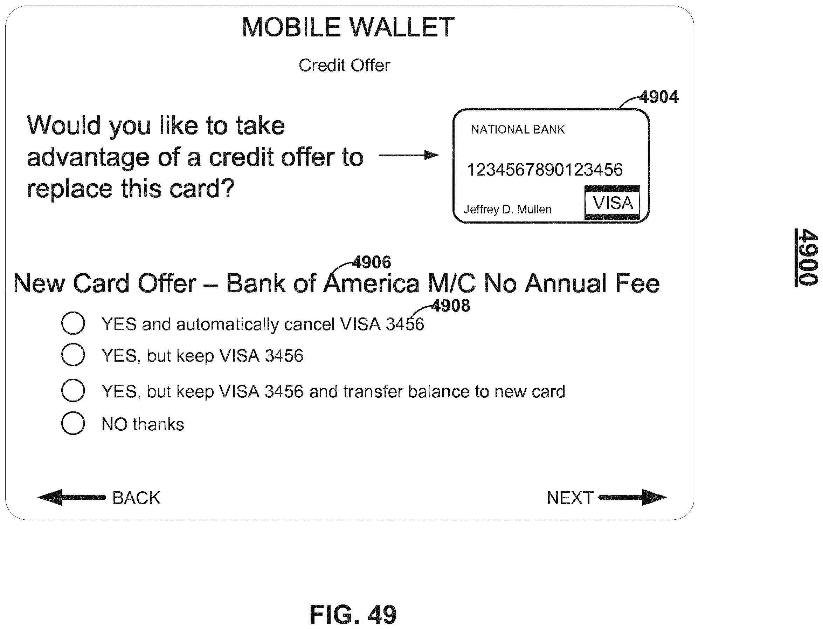

FIG. 49 shows GUI 4900 that may be generated by a processor of a mobile device and provided onto a display of the mobile device. GUI 4900 may, for example, communicate a credit offer to a user of a mobile device that may have been communicated to the mobile device via any one of a number of electronic means (e.g., text messaging, email, or internet browser pop-up). A credit offer may, for example, be extended to a user of a mobile device to add a payment card to the user's mobile device. A credit offer (e.g., credit offer 4906) may, for example, be extended to a user of a mobile device to replace a virtual card (e.g., virtual payment card 4904) that already exists within the user's mobile device. Accordingly, for example, network entities may examine virtual cards and related information that may be stored within a memory of a mobile device and attempt to sway the user of the mobile device to opt into another virtual card offer that may be better for the user (e.g., the new virtual card may offer a lower interest rate than a user's current virtual payment card).

GUI 4900 may, for example, provide credit offer options 4908 to a user of a mobile device. Accordingly, for example, a user may elect to accept a new credit offer and cancel a current virtual payment card with the same option. In so doing, for example, a mobile device may communicate with a network entity (e.g., an issuer of virtual payment card 4904) to cancel virtual payment card 4904 and may communicate with a network entity (e.g., an issuer for payment card offer 4906) to open the new payment account being offered.

Other options may be provided by GUI 4900. For example, a user may opt to accept the new credit offer, but keep virtual payment card 4904 as well. As per another example, a user may opt to accept the new credit offer, keep virtual payment card 4904, and transfer any balance that may be owing on virtual payment card 4904 to the new payment account now being offered.

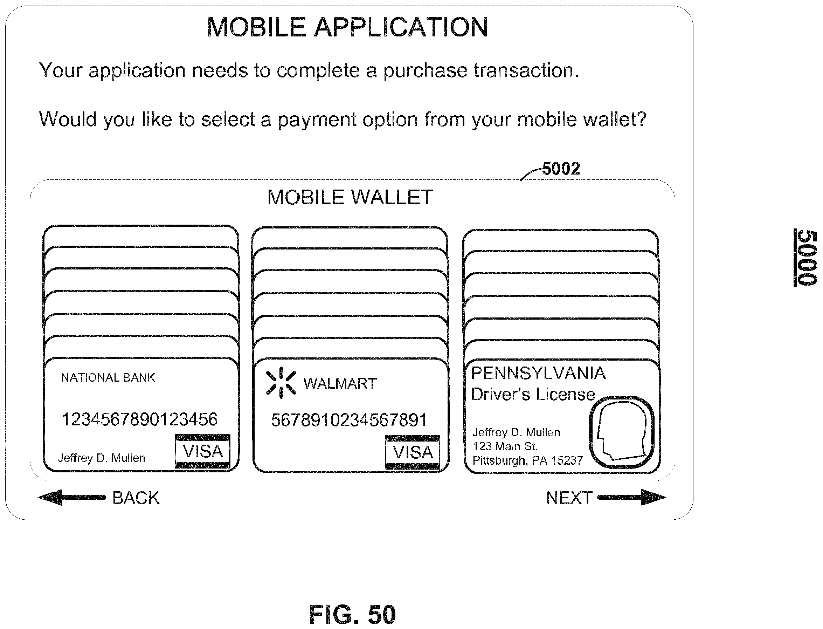

FIG. 50 shows mobile application 5000 that may be executed by a processor of a mobile device and provided onto a display of the mobile device. Application 5000 may, for example, be any executable application that may reside within a memory of a mobile device. For example, application 5000 may be an internet browsing application that may allow a user of a mobile device to browse online for goods and/or services and may allow the user to purchase such goods and/or services from application 5000. As per another example, mobile application 5000 may be a gaming activity that may require a purchase transaction to continue on to a next level of play or to obtain gaming features for purchase.

Application 5000 may, for example, provide access to mobile wallet 5002 which may be another application running on a mobile device. Accordingly, for example, when application 5000 requires payment for a particular function performed by application 5000 (e.g., a user wishes to purchase goods from an Amazon website), application 5000 may launch mobile wallet 5002 to allow a user to select a method of payment from mobile wallet 5002. A user may browse through each virtual card of mobile wallet 5002 by touching a virtual card to display the virtual card. Once a user has verified that a particular virtual card is the virtual card to be used to complete a purchase transaction, the user may touch the virtual card twice again to authorize a mobile device to complete a purchase transaction using payment information associated with the selected virtual card.

As per another example, a user may preselect payment options, such that mobile application 5000 need not launch mobile wallet 5002 to obtain a payment authorization. Instead, for example, a user may pre-authorize one virtual payment card within mobile wallet 5002 to be used by any other application running on a mobile device for purchase transactions. In so doing, for example, a user may pre-authorize payment information to be autonomously retrieved from mobile wallet 5002 without involving user interaction to authorize application 5000 for the purchase transaction.

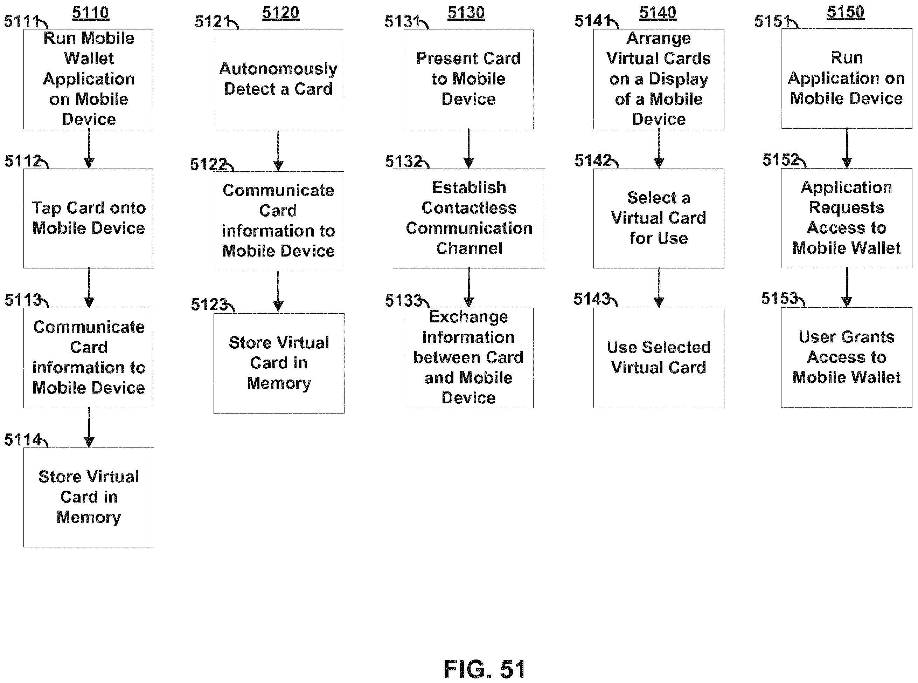

FIG. 51 shows flow charts for process sequences 5110-5150. Process sequence 5110 may, for example, execute a mobile wallet application on a mobile device (e.g., as in step 5111) to request a user of the mobile device to present a card to the mobile device. In step 5112, a user may present a card to a mobile device (e.g., tap a card onto a display of a mobile device). In step 5113, a contactless communication channel (e.g., an RF, capacitive, audible, visible, electromagnetic, or magnetic communication channel) may be generated between a card and a mobile device to communicate card information from the payment card to the mobile device. In step 5114, information may be stored within the mobile device or remote server (e.g., virtual cards may be generated, stored, and displayed by a GUI of the mobile device) for future use.

Process sequence 5120 may, for example, autonomously detect that a card is in a touching or a proximity relationship to a mobile device (e.g., as in step 5121). In step 5122, a contactless communication channel (e.g., an RF, capacitive, audible, visible, electromagnetic, or magnetic communication channel) may be generated between a card and a mobile device to communicate information from the card to the mobile device. In step 5123, information associated with each physical card presented to the mobile device may be stored within the mobile device for future use.

Step 5131 of sequence 5130 may include presenting a card to a mobile device. A card may, for example, be a powered card or a non-powered card. In steps 5132 and 5133, a contactless communication channel may be established between a card and a mobile device and information may be exchanged between the card and the mobile device.

A card may, for example, include a near-field communication device (e.g., an RFID) that may communicate with a contactless communication device of a mobile device to form a two-way communication channel between the card and the mobile device. A card may, for example, include circuitry to simulate touch (e.g., a capacitance change) in order to form a contactless communication channel with a mobile device. Accordingly, for example, a card may be pressed against a touch-sensitive display of a mobile device and information may be communicated by the card to the mobile device through a series of card-simulated touches that may be detected by the touch-sensitive display of the mobile device.

A card may, for example, include a light sensor to form a contactless communication channel with a mobile device. Accordingly, for example, a card may be pressed against a display of a mobile device and information may be communicated from the mobile device to the card through a series of light pulses generated by the display of the mobile device. A frequency, pulse width, and/or a pulse intensity of light pulses may, for example, be detected by a processor of a card as data communicated by a mobile device.

A card may, for example, include a light source (e.g., an LED) to form a contactless communication channel. Accordingly, for example, a card may emit varying light pulses from an LED that may be detected by a motion-capture device (e.g., a camera) of a mobile device as data communicated by the card. A card may, for example, include sound emission capabilities that may be detected by a microphone of a mobile device as data communicated by the card through a contactless communication channel. A mobile device may, for example, include sound emission capabilities that may be detected by a microphone of a card as data communicated by the mobile device through a contactless communication channel.

Step 5141 of sequence 5140 may include arranging information contained within a memory of a mobile device and/or a remote server and rendering the information on a display of a mobile device. The rendered information may, for example, be virtual cards that are representative of physical card counterparts previously presented to the mobile device for upload.

The virtual cards may, for example, be arranged according to category (e.g., payment cards, gift cards and identification cards). Within each category, virtual cards may be sorted according to any sort preference. For example, payment cards may be sorted in an order of most frequently used to least frequently used, in order of most available credit to least available credit, or in order of highest credit limit to lowest credit limit. Other cards (e.g., merchant gift cards) may be sorted in accordance with a user's location. For example, a mobile device may determine a location of its user and may sort virtual cards in response to the determined location (e.g., a virtual Walmart gift card may be displayed at the top of a gift card list based upon a user's location within a Walmart store).

Virtual cards displayed by a GUI of a mobile device may, for example, be selected for use (e.g., as in step 5142). A user may, for example, touch a virtual card among several virtual cards displayed by a mobile device to view information related to the touched virtual card. If desired for use, the touched virtual card may be touched twice again and activated for use (e.g., as in step 5143). An activated virtual card may, for example, be used to complete a purchase transaction via the mobile device. An activated virtual card may, for example, be deleted from a memory of the mobile device. Documents associated with an activated virtual card, such as purchase transaction receipts and bank statements, may be viewed from a display of a mobile device. Virtual cards that may be associated with an activated virtual card may be viewed from a display of a mobile device and activated themselves to perform other functions (e.g., an activated virtual payment card may be associated with a virtual rewards card, where the virtual rewards card may be activated to obtain and view the total number of rewards points that may be associated with the virtual rewards card).

Step 5151 of sequence 5150 may include running an application on a mobile device. Such an application may be any executable application that may require purchase transactions to be completed while the application executes. As per one example, a user booking airline tickets using his or her mobile device may select their itinerary and may book their itinerary through a purchase transaction conducted by the mobile device. Accordingly, for example, the mobile application may request access to a mobile wallet application also running on the mobile device (e.g., as in step 5152), a user may grant access to the mobile wallet application (e.g., as in step 5153) by selecting a virtual payment card from within the mobile wallet and may authorize a purchase transaction to be conducted by the mobile application using the authorized virtual payment card. As per another example, a mobile application may autonomously request access to a mobile wallet application (e.g., as in step 5152) that has been pre-authorized by a user of the mobile device (e.g., as in step 5153) such that the mobile application may autonomously conduct the purchase transaction without any further involvement with the user.

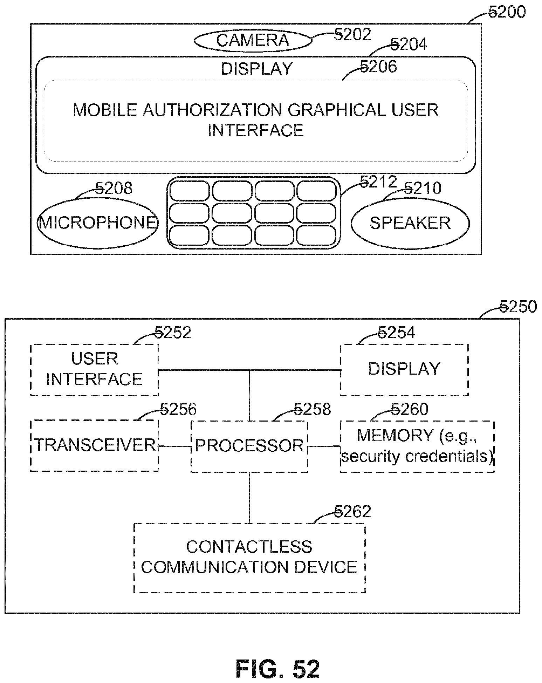

FIG. 52 shows mobile device 5200. Mobile device 5200 may be any mobile device, such as a mobile telephonic device (e.g., cell phone), a PDA, an electronic tablet, an MP3 player, or a locating device (e.g., a GPS device). Accordingly, mobile device 5200 may be operated in a mobile environment while a user of mobile device 5200 goes about his or her daily activities (e.g., driving, shopping, walking, dining, and exercising). In addition, for example, mobile device 5200 may perform multiple functions simultaneously (e.g., a person may carry on a conversation while at the same time browsing and authorizing purchases on the internet).

Mobile device 5200 may include audio processing devices (e.g., microphone 5208 and speaker 5210). Accordingly, for example, mobile device 5200 may receive voice commands from a user via microphone 5208 and may process such commands to perform a function. For example, a user may place mobile device 5200 into a desired operational mode by speaking a command into microphone 5208 that is associated with the desired operational mode. In so doing, for example, mobile device 5200 may engage in hands-free operation by receiving voice commands via microphone 5208 and performing functions associated with the received voice commands.

Mobile device 5200 may receive data input via microphone 5208. For example, a voice-band modem may generate signals in a voice-band frequency range that may be received by microphone 5208. A processor of mobile device 5200 may interpret the received audible information as data signals and may process the data signals as, for example, data values and/or control data input.

Mobile device 5200 may include camera 5202. Camera 5202 may capture one or more frames of video data and store the video data within a memory of mobile device 5202. Accordingly, for example, a processor of mobile device 5200 may receive one or more frames of video information via camera 5202 and may process the video information as data values and/or control data input. In so doing, for example, mobile device 5200 may receive optical information that may be sensed by camera 5202 during a series of one or more video capture events that produce one or more frames of video information. The one or more frames of video information may contain one or more data elements (e.g., pixels) having properties (e.g., color, intensity, or contrast) that may be interpreted by a processor of mobile device 5200 as data values and/or control data.

Mobile device 5200 may include manual input interface 5212. Manual input interface 5212 may, for example, include keys and/or buttons that may be sensitive to manual input, such as a touch or an application of pressure. Accordingly, for example, a user of mobile device 5200 may enter information into mobile device 5200 via manual interface 5212 to cause a processor of mobile device 5200 to enter a particular mode of operation. Manual interface 5212 may, for example, be used for data entry (e.g., dialing a phone number or entering data as may be requested by mobile device 5200) during a particular mode of operation of mobile device 5200.

Mobile device 5200 may include display 5204. Display 5204 may provide visible information that may be utilized by a user during interaction with mobile device 5200. A portion or all of display 5204 may be touch sensitive such that objects making contact with display 5204 or objects coming within a proximity of display 5204 may be detected by a processor of mobile device 5200. Accordingly, for example, mobile authorization graphical user interface 5206 may be provided by display 5204 so that graphical information may be displayed to solicit and/or receive data entry from a user. In so doing, for example, touch-sensitive graphical user interface devices such as radio buttons, alphanumeric input boxes, virtual buttons, pull-down menus, and navigational tools may be used for data entry to initiate, change, and/or support functions performed by mobile device 5200.

FIG. 52 shows architecture 5250. User interface 5252 may, for example, be included within architecture 5250 to allow user interaction with architecture 5250. For example, a dedicated key pad or keyboard may be included within user interface 5252 to allow alphanumeric data entry into architecture 5250.

Architecture 5250 may include one or more displays 5254. Display 5254 may, for example, be touch-sensitive. Accordingly, for example, display 5254 may be utilized for alphanumeric data entry using virtual buttons that may be rendered onto touch-sensitive portions of display 5254. In so doing, for example, touching virtual buttons that may be associated with alphabetic and numeric characters of display 5254 may be detected by processor 5258 as alphanumeric data entry.

Alphanumeric entry boxes may, for example, be rendered onto display 5254. A user may, for example, activate a cursor within such an alphanumeric entry box by touching an area within the alphanumeric entry box. A user may utilize user interface 5252 and/or a virtual keypad rendered onto display 5254 to select alphanumeric characters to be placed within the alphanumeric entry box in accordance with a character position identified by an activated cursor within the alphanumeric entry box. In so doing, for example, processor 5258 may receive alphanumeric characters as typed into a alphanumeric entry box of display 5254 and may use such alphanumeric characters as data input.

Display 5254 may, for example, provide data output from architecture 5250. For example, display 5254 may communicate data using a series of light pulses. Accordingly, for example, processor 5258 may cause one or more portions of display 5254 to produce light pulses having varying characteristics (e.g., duration, intensity, and frequency) that may communicate information via such light pulses. In so doing, for example, a device that may be sensitive to light pulses may receive information communicated by display 5254 via light pulses having varying characteristics. Display 5254 may, for example, communicate data using visual information that may be substantially static (e.g., a barcode).

Architecture 5250 may include one or more transceivers 5256. Transceiver 5256 may communicate information to and/or may receive information from one or more devices. Transceiver 5256 may, for example, communicate via a wireless interface with one or more cellular stations of a mobile network. Accordingly, for example, transceiver 5256 may allow a mobile device (e.g., mobile device 5200 of FIG. 52) to establish a communications channel with an associated cellular station. In so doing, for example, a mobile device (e.g., mobile device 5200 of FIG. 52) may exchange information (e.g., voice, text, data, or multimedia) with one or more terrestrial networks (e.g., the internet or a payment network) via an associated cellular station. As per another example, transceiver 156 may exchange information with one or more other mobile devices via one or more associated cellular stations.

Transceiver 5256 may, for example, communicate via a wireless interface with one or more mobile devices directly. Accordingly, for example, transceiver 5256 may communicate with another mobile device without first accessing a mobile network via a cellular station of the mobile network. As per another example, transceiver 5256 may, for example, communicate via a wireless interface with one or more network devices (e.g., a wireless access point) directly. Accordingly, for example, a mobile device (e.g., mobile device 5200 of FIG. 52) may directly connect to a wired and/or a wireless network via any one or more wireless standards (e.g., Bluetooth or Wi-Fi) to exchange information with other devices that may be connected to the wired and/or wireless network. In so doing, for example, a wired and/or wireless network may be accessed by a mobile device without first accessing a mobile network via a cellular station of a mobile network.

Architecture 5250 may include contactless communication device 5262, which may communicate via any one or more contactless communication methodologies, such as for example, near field communications (e.g., RFID), Bluetooth, touch simulation, light pulsing (e.g., via an LED), and electromagnetic data communication (e.g., via a dynamic magnetic stripe communications device). Accordingly, for example, contactless communication device 5262 may be compatible with any contactless device, such as for example, an RFID enabled payment card and a contactless reader (e.g., a magnetic stripe reader or an NFC reader).

A non-powered card may, for example, communicate with contactless communications device 5262. Contactless communication device 5262 may, for example, establish a carrier field (e.g., an RF field) that may be modulated by a device (e.g., an RFID tag) of a non-powered payment card. In so doing, for example, an RFID tag of a non-powered payment card may derive operational power from an RF field provided by contactless communications device 5262 and may communicate information (e.g., one, two, and/or three tracks of magnetic stripe data) to contactless communication device 5262 by modulating the RF field produced by contactless communications device 5262.

A powered card may, for example, communicate with contactless communication device 5262. A powered card may, for example, include a processor, a battery, a memory, wireless communication devices (e.g., a dynamic magnetic stripe communications device or RFID) and other electronics (e.g., buttons) that may allow a user to interact with the powered card to perform one or more functions. Accordingly, for example, a powered card may be used to communicate specific information to contactless communication device 5262 by selective interaction with the buttons of the powered card. In so doing, for example, a powered card may be used to interactively communicate magnetic stripe information (e.g., one, two, and/or three tracks of magnetic stripe data) to contactless communication device 5262 by sending a signal to a processor of a powered card (e.g., by pressing a button on the powered card) to initiate such communications.

Contactless communication device 5262 may receive variable data sets from a powered card based upon, for example, manual input provided to a powered card. For example, a button associated with an on-line purchase may be pressed on the powered card that causes a variable data set (e.g., account number and expiration date) to be communicated from the powered card to contactless communication device 5262.

Discretionary data may, for example, be communicated by a powered card based upon which button was pressed on the powered card. In so doing, for example, a security code (e.g., "111") may be communicated within a discretionary data field when a button associated with a particular feature (e.g., pay with credit) is pressed on the powered card. As per another example, a different security code (e.g., "222") may be communicated within a discretionary data field when a button associated with a different feature (e.g., pay with debit) is pressed on the powered card. A powered card may, for example, communicate a different security code no matter what feature may be selected on the powered card. Accordingly, for example, processor 5258 may identify what type of device may be in communication with contactless communication device 5262 by analyzing the data communicated to contactless communication device 5262.

Any device having contactless communication capability may communicate with contactless communication device 5262 to authorize functions that may be performed by a mobile device. An RFID enabled device (e.g., an RFID equipped automobile key) may, for example, communicate with contactless communication device 5262 to authorize functions that may be performed by a mobile device (e.g., mobile device 5200 of FIG. 52) on a device that may be controlled by the RFID enabled device (e.g., an automobile that corresponds to the RFID equipped automobile key). For example, processor 5258 may execute an automobile application that may wirelessly communicate with an automobile to perform remote functions (e.g., start an engine of the automobile or unlock the driver's door). Through use of an RFID equipped key, for example, such functions may be authorized to be performed by a mobile device (e.g., mobile device 5200 of FIG. 52) once the RFID equipped key has communicated the necessary security credentials (e.g., a key code) to an application running on a processor of the mobile device to establish that a one-to-one correspondence exists between the automobile and the RFID equipped key.

Architecture 5250 may include memory 5260 and/or processor 5258 may include internal memory. Accordingly, for example, application code may be stored within memory 5260 and/or processor 5258 and executed by processor 5258 in support of functions performed by architecture 5250. For example, an application (e.g., a graphical user interface) may be executed by processor 5258 and displayed onto display 5254, which may be used to interact with a user of a mobile device (e.g., mobile device 5200 of FIG. 52). Persons skilled in the art will appreciate that executable application code may be communicated to architecture 5250 via any one or more interfaces of architecture 5250 (e.g., user interface 5252, display 5254, transceiver 5256, and/or contactless communication device 5262).

Application data (e.g., security credentials) may be stored within memory 5260 and accessed by processor 5258 during operation. For example, security credentials may be stored within memory 5260 and recalled by processor 5258 to authorize a function that may be performed by processor 5258 of a mobile device (e.g., mobile device 5200 of FIG. 52). Accordingly, for example, processor 5258 of a mobile device may challenge a user of the mobile device to produce security credentials to authorize any function that may be performed by the mobile device. A processor of the mobile device may, for example, validate the security credentials locally within the mobile device itself. Alternately, for example, security credentials may be forwarded to a network entity (e.g., an authorization server) for remote validation.

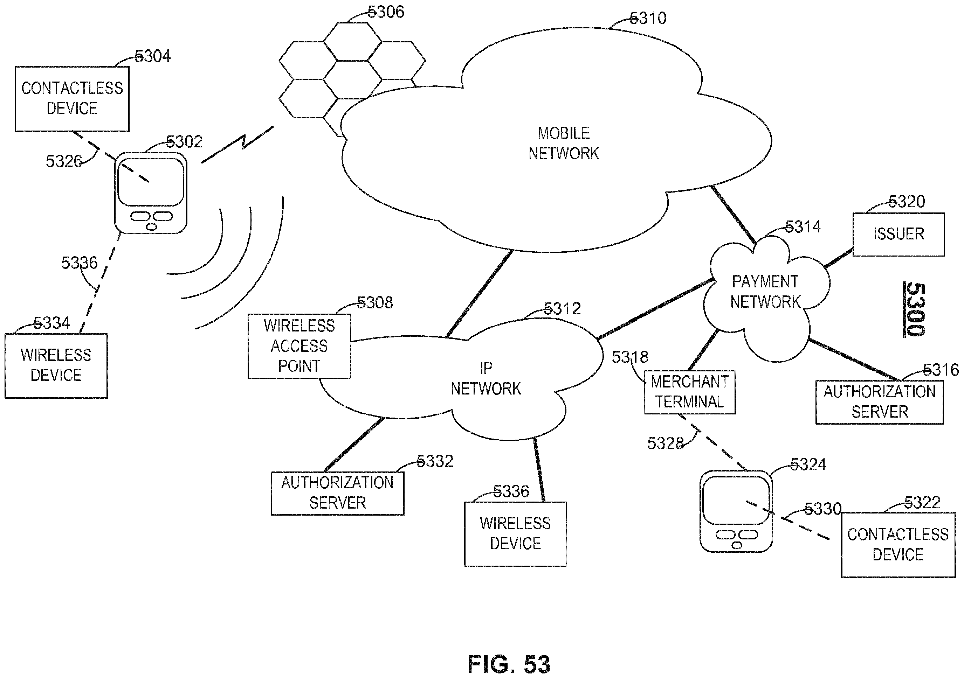

FIG. 53 shows network topology 5300 that may include, for example, mobile device 5302 (e.g., a mobile telephonic device, a PDA, an electronic tablet, a laptop, a GPS unit, or an MP3 player). Mobile device 5302 may, for example, include a contactless interface that may initiate, sustain, and/or terminate communication channel 5326 between contactless device 5304 and mobile device 5302. Contactless device 5304 and mobile device 5302 may communicate via channel 5326 using any number of contactless mediums, which may include for example, visible, audible, capacitive, electromagnetic, magnetic, and/or RF mediums.

Mobile device 5302 may provide one or more transceivers that may communicate with one or more wired networks (e.g., IP network 5312 and/or payment network 5314) and/or one or more wireless networks (e.g., mobile network 5310). Mobile device 5302 may, for example, communicate with a cellular station over a wireless radio interface (e.g., a GSM air interface) that may be used by mobile device 5302 to communicate information (e.g., voice and data) to cellular network access infrastructure 5306 (e.g., one or more GSM base transceiver stations, base station controllers, and mobile switching centers). Persons skilled in the art will appreciate that cellular network access infrastructure 5306 may utilize any multiple access architecture, such as for example, a code-division multiple access architecture and/or a time-division multiple access architecture.

Mobile device 5302 may, for example, communicate with wireless access point 5308 over a wireless interface (e.g., a Bluetooth interface or a Wi-Fi interface). Accordingly, for example, mobile device 5302 may access one or more wired networks (e.g., IP network 5312 and/or payment network 5314) and/or one or more wireless networks (e.g., mobile network 5310) without the need to first gain access to cellular network access infrastructure 5306.

Contactless device 5304 may, for example, be a powered card, a non-powered card (e.g., a powered payment card or a non-powered payment card) or any contactless enabled device (e.g., an RFID enabled device). Accordingly, for example, security credentials may be communicated via a contactless communication channel from contactless device 5304 to mobile device 5302 to authenticate a purchase transaction that may be performed by mobile device 5302. In so doing, for example, items for purchase on IP network 5312 (e.g., the internet) may be accessed by a browser of mobile device 5302 via an access point (e.g., wireless access point 5308 or cellular network access infrastructure 5306), payment information may be retrieved from a memory of mobile device 5302, a user of mobile device 5302 may be challenged for security credentials (e.g., at least a portion of a payment account number and a card expiration date communicated to mobile device 5302 from a payment card corresponding to the payment information retrieved from a memory of mobile device 5302), such payment information may be authenticated by such security credentials, and such payment information may be communicated to network entities (e.g., issuer 5320) to complete the purchase transaction.

Issuer 5320 may, for example, contact authorization server 5316 via a network (e.g., payment network 5314) with payment information and security credentials received from mobile device 5302 for authorization of a purchase. Once authorized, payment transaction information may be recorded onto a receipt that may be delivered to mobile device 5302 via any one or more delivery options (e.g., via a short messaging service of mobile network 5310 or an email delivery service of IP network 5312). Mobile device 5302 may allow a user to associate purchase categories (e.g., groceries, auto repair, or entertainment) to purchases transacted by the mobile device so that the user may receive a more detailed accounting of his or her expenditures on his or her receipt. Accordingly, for example, a user may enjoy a higher degree of integration such that a user may customize a level of detail provided on a receipt via mobile device 5302.

A payment receipt may, for example, be provided to mobile device 5302 as a proof-of-purchase object (e.g., a barcode) that may be provided to a display of mobile device 5302 and read by other computing equipment (e.g., a barcode scanner) for proof-of-purchase confirmation.

A processor of mobile device 5302 may, for example, authorize wireless device 5334 to perform functions that may be authenticated by contactless device 5304 (e.g., via security credentials communicated by contactless device 5304 to a processor of mobile device 5302). Accordingly, for example, a processor of mobile device 5302 may require security credentials to be communicated by contactless device 5304 via contactless communication channel 5326 and based upon a validity of the security credentials communicated, the processor may communicate instructions to wireless device 5334 via contactless communication channel 5336 to perform some function. As per another example, a processor of mobile device 5302 may communicate instructions (e.g., via wireless access point 5308 or cellular network access infrastructure 5306) to wireless device 5334 (e.g., a car or a home) to perform a function (e.g., start the engine of the car) based upon a validity of security credentials communicated by contactless device 5304.

A processor of mobile device 5302 may, for example, locally validate security credentials communicated by contactless device 5304. Alternately, for example, mobile device 5302 may forward security credentials communicated by contactless device 5304 to a network entity (e.g., authorization server 5332) for remote validation.

A mobile device (e.g., mobile device 5324) may, for example, include a contactless communication device (e.g., an RFID device) that may initiate, sustain, and/or terminate contactless communication channel 5328 with merchant terminal 5318. Accordingly, for example, a processor of mobile device 5324 may communicate payment information to merchant terminal 5318 to complete a financial transaction. In so doing, for example, a processor of mobile device 5324 may receive payment information via contactless communication channel 5330 from contactless device 5322 (e.g., a powered or a non-powered card) and store the received payment information within a memory of mobile device 5324. To complete a purchase transaction, contactless device 5322 may, for example, be presented to mobile device 5324 and may communicate security credentials (e.g., at least a portion of a payment card number and a cardholder's name) via contactless communication channel 5330. A processor of mobile device 5324 may validate the security credentials and may forward the payment information onto merchant terminal 5318 to complete the purchase transaction.

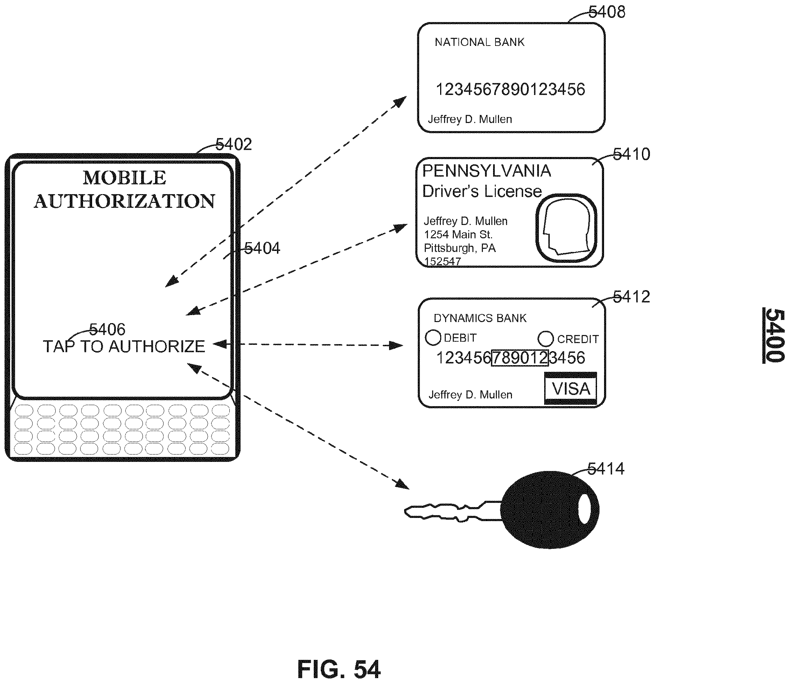

FIG. 54 shows system 5400, which may include mobile device 5402 and contactless devices 5408-5414. Mobile device 5402 may, for example, be a laptop computer, a PDA, a mobile telephonic device (e.g., a smartphone), an MP3 player, a GPS, or any other mobile device. Display 5404 may be a touch-sensitive display (e.g., sensitive to a change in capacitance). Contactless devices may, for example, include non-powered payment card 5408, identification card (e.g., driver's license 5410), powered payment card 5412, key 5414, and any other device capable of communicating security credentials to mobile device 5402 via a contactless communication channel that may be formed with mobile device 5402.

Mobile device 5402 and contactless devices 5408-5414 may each include a contactless communication device (e.g., an RFID device) that may communicate via a contactless communication channel that may be formed between mobile device 302 and contactless devices 5408-5414 after coming into proximity to one another. Contactless devices 5408-5414 may, for example, be tapped onto display 5404 of mobile device 5402 to establish a proximity relationship that forms a communication channel with mobile device 5402. As per another example, contactless devices 5408-5414 may be brought within a proximity distance (e.g., up to two inches) of mobile device 5402 to establish a contactless communication channel with mobile device 5402.

A processor of mobile device 5402 may, for example, execute application code that may generate a graphical user interface (GUI) onto display 5404 of mobile device 5402. Message 5406 of a GUI may invite a user of mobile device 5402 to begin a mobile authorization by tapping a contactless device against display 5404. As per another example, by tapping a contactless device against mobile device 5402, a processor of mobile device 5402 may autonomously determine that a mobile authorization is desired and may then generate a mobile authorization GUI onto display 5404.

Mobile device 5402 may, for example, autonomously determine a type of contactless device that may be tapped against it. For example, a processor of mobile device 5402 may receive security credentials that may be indicative of a non-powered payment card (e.g., security credentials received from non-powered payment card 5408 may include at least a portion of a payment card number and a cardholder's name). As per another example, a processor of mobile device 5402 may receive security credentials that may be indicative of a powered card (e.g., security credentials received from powered card 5412 may contain a dynamically generated security code). Security credentials received from powered card 5412 may, for example, include a dynamic security code that may change for each function authorized by powered card 5412.

A contactless device (e.g., key 5414) may, for example, be a key that may start the ignition of a car, open a door to a home, or open a safe deposit box. Key 5414 may, for example, include a contactless communication device (e.g., an RFID device) that may communicate security credentials to a processor of mobile device 5402. Once security credentials received from key 5414 are validated, a processor of mobile device 5402 may effect an operation that may eliminate the need to physically use key 5414 to perform the operation (e.g., a user of mobile device 5402 may remotely start the engine of the user's car by running an application on a processor of mobile device 5402 to validate security credentials received from key 5414 and wirelessly communicate with a wireless device of the user's car to start its ignition). As per an example, the user's physical key 5414 may, for example, be locked inside the user's car, in which case the user may select another contactless device (e.g., identification card 5410) to present to mobile device 5402. Identification card 5410 may, for example, communicate security credentials to a processor of mobile device 5402 and once the processor authorizes the identify of the user of mobile device 5402, mobile device 5402 may, for example, wirelessly communicate with the user's car to unlock its doors so that the user may retrieve key 5414 that may have been previously locked within the user's car.

Powered payment card 5412 may, for example, include electronics to simulate a human touch (e.g., powered payment card 5412 may generate a change in capacitance that may be sensed by display 5404). Through a series of simulated touches, powered payment card 5412 may communicate a series of data bits to display 5404, which may then be processed by a processor of mobile device 5402 as security credentials. In so doing, for example, a contactless communication channel may be established where data is transferred from powered payment card 5412 to a processor of mobile device 5402 via a series of simulated touches to authorize a function to be performed (or commanded to be performed) by a processor of mobile device 5402.

Powered payment card 5412 may, for example, include a light sensor. Accordingly, for example, powered payment card 5412 may be sensitive to light pulses generated within a region of display 5404. The light sensor of powered payment card 5412 may receive a series of light pulses, which may be construed by a processor of powered payment card 5412 as data generated by a processor of mobile device 5402. In so doing, for example, powered payment card 5412 may receive an optical data stream represented by a series of light pulses generated by display 5404. As such, a two-way communication channel may be formed, where simulated touches may generate a data stream from powered payment card 5412 to mobile device 5402 and light pulses may generate a data stream from mobile device 5402 to powered payment card 5412.

Mobile device 5402 may, for example, include a motion-capture device (e.g., a camera). Identification card (e.g., driver's license 5410) may, for example, include a barcode. Accordingly, for example, a contactless communication channel may be formed between identification card 5410 and mobile device 5402 where a camera of mobile device 5402 may capture an image of the barcode of identification card 5410. In so doing, for example, a processor of mobile device 5402 may analyze the barcode image and extract information from the barcode image that may be construed by the processor as security credentials that when validated, may authorize a processor of mobile device 5402 to perform (or cause to perform) any function.

As per another example, a user's photograph may appear on identification card 5410. Accordingly, for example, a camera of mobile device 5402 may capture an image of the picture and a processor of mobile device 5402 may construe the captured image as a security credential. In so doing, for example, a processor of mobile device 5402 may compare a scanned image of a user's picture to an image contained within a memory of mobile device 5402 (or contained within a memory of a remote authorization server) for authorization. As per yet another example, a user may snap a picture of himself or herself with a camera of mobile device 5402 so that a processor of mobile device 5402 may scan the snapped picture for authorization purposes.

Mobile device 5402 may, for example, require authorization before being activated for use. Accordingly, for example, a processor of mobile device 5402 may require a password to be entered and verified before a processor of mobile device 5402 may unlock functions available to be performed by mobile device 5402. In so doing, for example, one or more contactless devices 5408-5414 may be presented to mobile device 5402 and security credentials may be communicated by the one or more contactless devices 5408-5414 in lieu of providing a password to mobile device 5402. Upon validation of the security credentials, a processor of mobile device 5402 may unlock those functions that may be available to be executed by the processor of mobile device 5402.

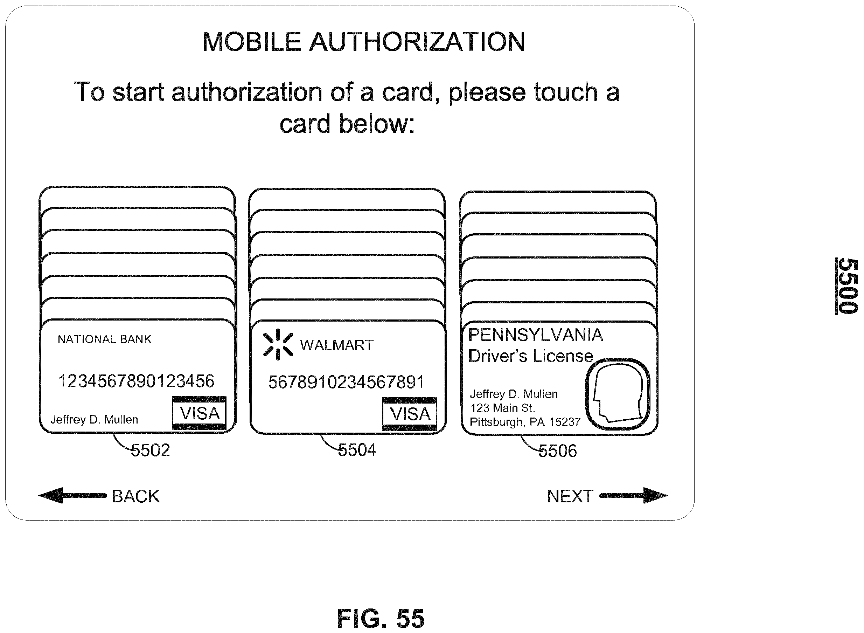

FIG. 55 shows GUI 5500, that may be generated by a processor of a mobile device and provided onto a display of the mobile device. GUI 5500 may, for example, provide a summary of each card that may be available for use within a memory of the mobile device (e.g., each card may be displayed as virtual cards having visible and functional features that are substantially the same as their physical counterparts).

Physical card (e.g., payment card) information (e.g., track 1, track 2, and/or track 3 magnetic stripe data) may be communicated by the physical card to the mobile device via a contactless communication channel and such information may be displayed within a virtual card (e.g., virtual payment card 5502) as summary information that may be associated with the physical payment card. A payment card number communicated to a processor of a mobile device may, for example, include issuer identification as well as an issuing network identifier. Accordingly, for example, a processor of a mobile device may analyze the payment card number received from a physical payment card and may render a portion or all of the identifying information associated with the payment card number onto virtual payment card 5502. In so doing, for example, issuer identification as well as a logo representative of an issuing network identifier may be rendered onto virtual payment card 5502. Other virtual payment cards may, for example, be sorted behind virtual payment card 5502 in virtually any order (e.g., most popular to least popular, highest credit limit to lowest credit limit, or highest credit available to lowest credit available). Other virtual cards (e.g., virtual gift card 404 and virtual driver's license 5506) may be stored within a memory of a mobile device as well.

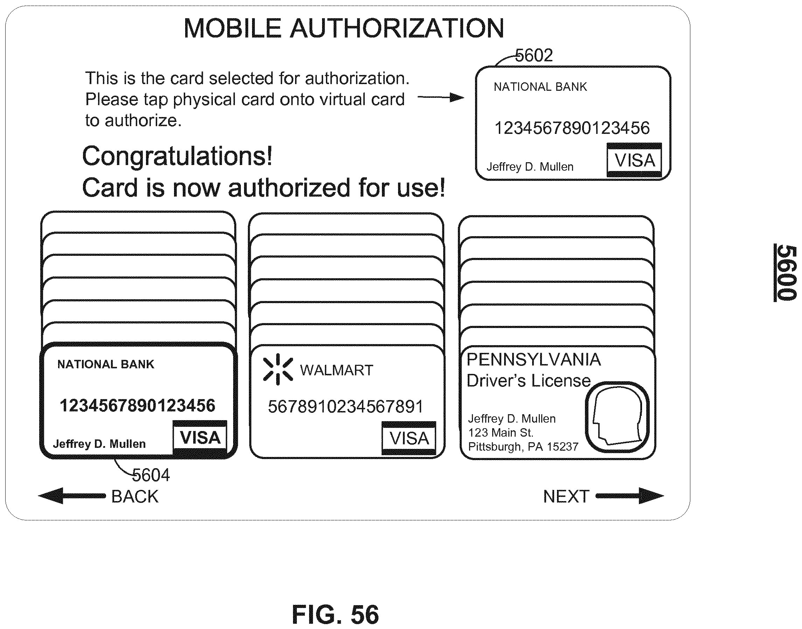

FIG. 56 shows GUI 5600, that may be generated by a processor of a mobile device and provided onto a display of the mobile device. GUI 5600 may, for example, allow a selection of a virtual card contained within a memory of a mobile device to be authorized for use by its physical counterpart. Accordingly, for example, a user may touch anywhere within the vicinity of virtual card 5604 as it is being displayed by GUI 5600. Such a selection may be verified by highlighting attributes of a selected card (e.g., highlighting an outline of virtual card 5604) and by displaying the selected virtual card within verification region 502. In so doing, for example, a user of a mobile device may view a virtual card that is selected for authorization (e.g., as viewed within region 5602) so that the user may retrieve the physical card that corresponds to the virtual card that is to be authorized.

Once retrieved, a user may tap the physical card against region 5602. Accordingly, for example, a contactless communication channel (e.g., an RFID communication channel) may be formed between the physical card and the mobile device, such that security credentials may be communicated from the physical card to the mobile device via the contactless communication channel to authorize virtual payment card 5602 for use. In so doing, for example, a physical card may communicate security credentials (e.g., at least a portion of a payment card number of the physical card and/or a cardholder's name) to a processor of the mobile device and the processor may compare the received security credentials to security credentials stored within a memory of the mobile device that may be associated with virtual payment card 5602. If the processor of the mobile device determines that the received security credentials match at least a portion of the security credentials associated with virtual payment card 5602, then virtual card 5602 may be authorized for use.

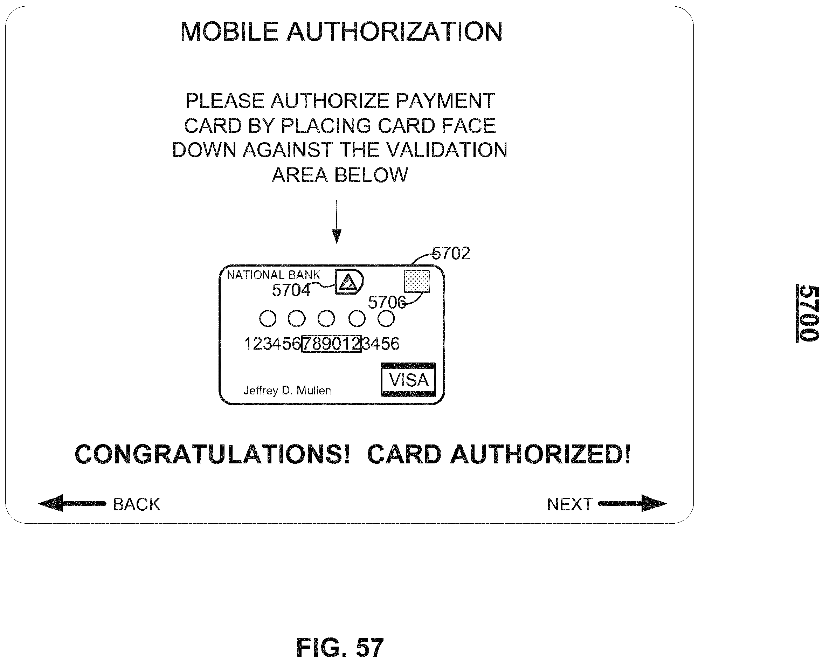

FIG. 57 shows GUI 5700, that may be generated by a processor of a mobile device and provided onto a display of the mobile device. GUI 5700 may, for example, allow the authorization of a virtual card via an alternate contactless communication channel. For example, GUI 5700 may display a virtual payment card (e.g., virtual payment card 5702) in a region within GUI 5700 that may provide a touch-sensitive area 5704 and area 5706 that may be capable of producing light pulses having varying characteristics (e.g., intensity, pulse width, and/or color).

A user's physical card that corresponds to virtual payment card 5702 may, for example, be a powered card having touch-simulation electronics and a light sensor. Accordingly, for example, the user's physical card may be pressed against region 5702, such that the touch simulation electronics of the physical card aligns with touch-sensitive portion 5704 and the light sensor of the physical card aligns with portion 5706. In so doing, for example, a contactless communication channel may be formed between the user's physical card and the mobile device, such that data may be communicated from the user's physical card to the mobile device through a series of simulated touches generated by the physical card and sensed at portion 5704 by a processor of the mobile device. Such communicated data may be construed by a processor of the mobile device as security credentials communicated by the user's physical card.

Security credentials that may be communicated (e.g., via a capacitive, visible, audible, electromagnetic, magnetic, or RFID-based contactless communication channel) to a mobile device by a powered payment card may, for example, include a dynamic security code that may change with each use. Accordingly, for example, a network entity (e.g., an authorization server) may be synchronized with the user's powered payment card, such that when a dynamic security code of the powered payment card changes, so does the corresponding dynamic security code of the authorization server. In so doing, for example, a dynamic security code received by a mobile device from a powered payment card during authorization of virtual payment card 5702 may be communicated by a processor of the mobile device to an authorization server for verification that the dynamic security code matches the dynamic security code maintained by the authorization server. If so, virtual payment card 5702 may be authorized for use by the mobile device (e.g., payment information associated with virtual payment card 5702 may be communicated by the mobile device to complete a purchase transaction).

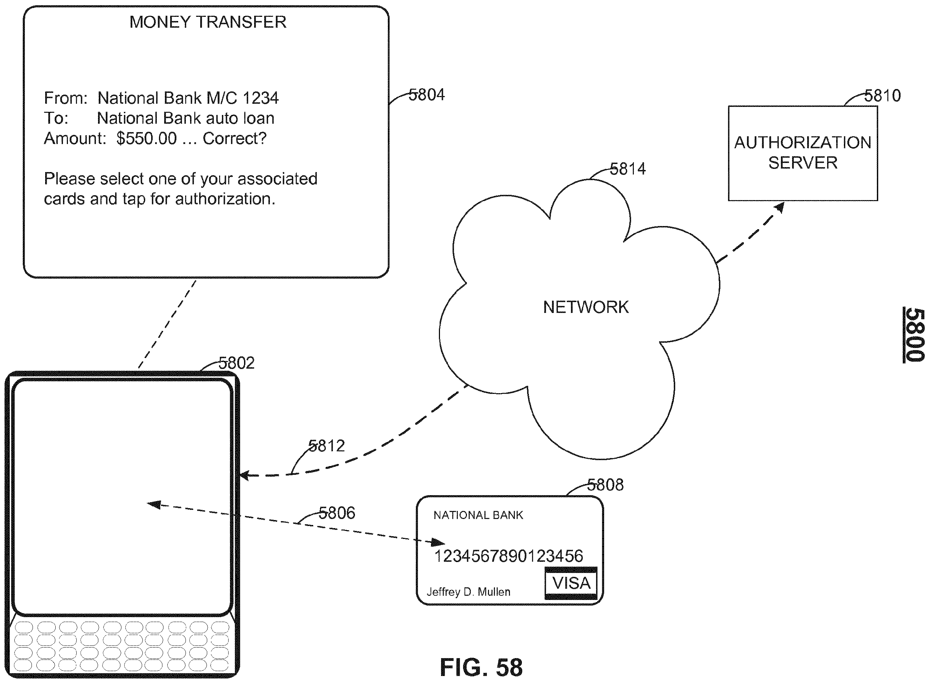

FIG. 58 shows system 5800 that may include mobile terminal 5802, payment card 5808, network 5814 and authorization server 5810. A processor of mobile device 5802 may, for example, execute an application (e.g., GUI 5804) that allows a user of mobile device 5802 to perform any financial account management function (e.g., change from paper statements to e-statements, transfer money from one account to another or open a checking account).

Prior to authorizing the financial account management function, GUI 5804 may challenge a user of mobile device 5802 to tap a card against mobile device 5802 that may be associated with the transaction. Accordingly, for example, a payment card (e.g., payment card 5808) that may be associated with the financial accounts used for the financial account management function may be used as a security credential to authorize the transaction. In so doing, for example, security credentials communicated by payment card 5808 to mobile device 5802 via contactless communication channel 5806 (e.g., an RFID communication channel) may be relayed by mobile device 5802 to authorization server 5810 via communication channel 5812 for authorization of the financial account management function. Once authorized, a processor of mobile device 5802 may receive the authorization from authorization server 5810 and may contact other network entities (e.g., a payment server of network 5814) to complete the financial account management function.

Payment card 5808 need not be directly related to the financial accounts involved with a financial account management function. Instead, authorization server 5810 may, for example, maintain links between various financial accounts that may be owned by a user of a mobile device. Accordingly, for example, while payment card 5808 may not be used as the source account from which money is to be transferred to an auto loan account, payment card 5808 may nevertheless be linked with the source account (e.g., M/C 1234). In so doing, for example, authorization server 5810 may recognize the link between payment card 5808 and the source account (e.g., M/C 1234) and may authorize the money transfer due to the recognized link.

Payment card 5808 may, for example, be a powered payment card. Accordingly, for example, a dynamic security code may be communicated from payment card 5808 to a processor of mobile device 5802 (e.g., via a discretionary data field of a magnetic stripe message communicated by payment card 5808) along with other identifying information (e.g., at least a portion of a dynamic payment card number or a cardholder's name). In so doing, for example, the dynamic security code and/or other optional identifying information may serve as the security credential that authorizes mobile device 5802 to perform the requested function. The dynamic security code and/or other optional identifying information may, for example, be relayed to authorization server 5810. Accordingly, for example, authorization server 5810 may analyze the security code and any other optional identifying information to determine whether the requested function is to be authorized. If so, the authorization may be communicated by authorization server 5810 to a processor of mobile device 5802 via communication channel 5812 so that the function may be completed.

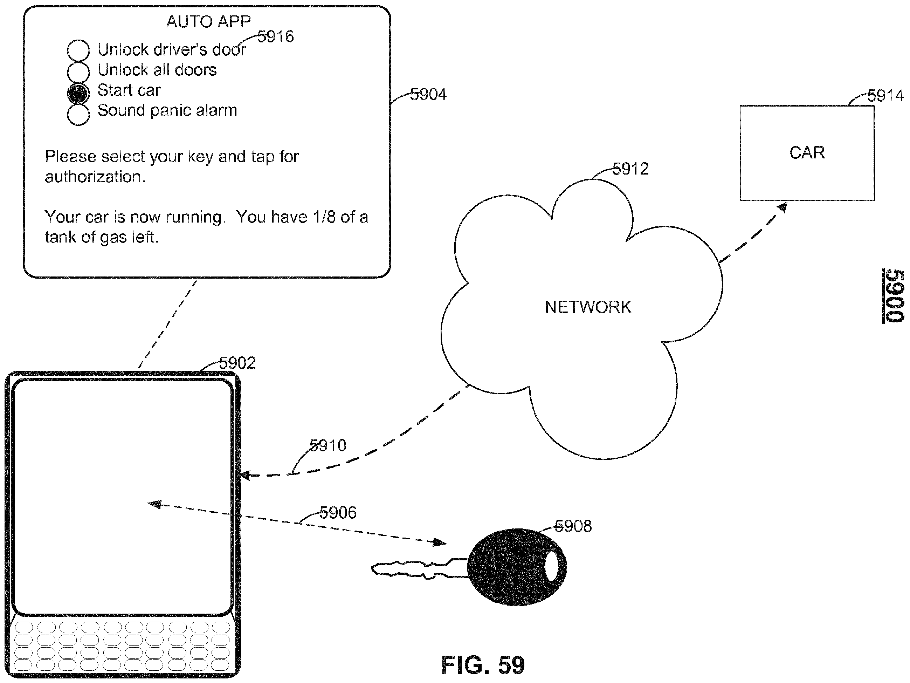

FIG. 59 shows system 5900 that may include mobile terminal 5902, key 5908, network 5912 and car 5914. A processor of mobile device 5902 may, for example, execute an automobile application (e.g., GUI 5904) that may allow a user of mobile device 5902 to establish wireless link 5910 between car 5914 and mobile device 5902. Accordingly, for example, a user of mobile device 5902 may communicate wireless commands to car 5914 via wireless communication channel 5910.

A user may, for example, start his or her car from the convenience and warmth of the user's office at work when temperatures outside may warrant a time period within which car 5914 may need to warm up. Accordingly, for example, a user may start his or her car via commands communicated by a processor of mobile device 5902 to car 5914 prior to leaving the office for the day. In so doing, for example, a processor of mobile device 5902 may require authorization to issue the command, in which case the user may be challenged to present key 5908 within a communication distance from mobile device 5902 to form contactless communication channel 5906. Security credentials may, for example, be communicated from key 5908 to a processor of mobile device 5902 via contactless communication channel 5906 and the processor may compare the received security credentials to security credentials stored within a memory of mobile device 5902 (or a remote authorization server). If a match is found, for example, a processor of mobile device 5902 may be authorized to issue one or more commands 5916 to car 5914.

A wireless device of car 5914 may, for example, communicate to a processor of mobile device 5902 via communication channel 5910. Accordingly, for example, once a command is authorized and sent to a wireless device of car 5914 by a processor of mobile device 5902, the wireless device of car 5914 may respond with an acknowledgment that the command (e.g., "Start car") was executed. A wireless device of car 5914 may, for example, provide status to a display of mobile device 5902. Accordingly, for example, a wireless device of car 5914 may report a gasoline level status to mobile device 5902 via communication channel 5910 so that the user of mobile device 5902 may know that leaving car 5914 running for a length of time may deplete the car's gas reserves.

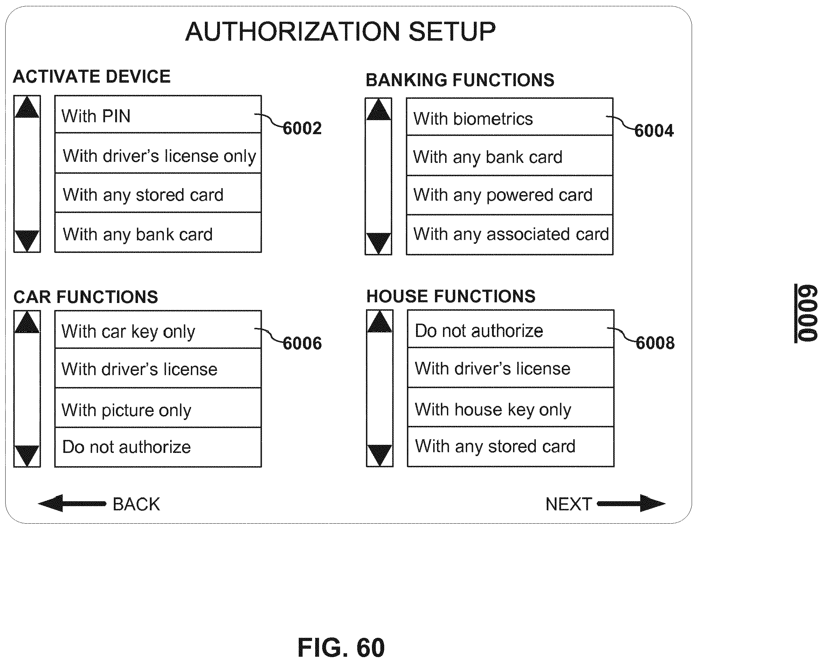

FIG. 60 shows GUI 6000, that may be generated by a processor of a mobile device and provided onto a display of the mobile device. GUI 6000 may, for example, allow a user of a mobile device to determine how certain functions that may be performed by the mobile device may be authorized. GUI 6000 may, for example, provide authorization options 6002 to determine how the mobile device itself may be authorized for use. A PIN, for example, may be required to be entered in order to activate the mobile device for use. As per another example, a memory of the mobile device may contain information associated with any physical card. Accordingly, for example, authorization to activate the mobile device may require that a user produce a physical card (e.g., a driver's license) that may correspond to a virtual card (e.g., a virtual driver's license) that may be stored within a memory of the mobile device. Alternately, for example, a physical card that corresponds to any virtual card or any virtual bank card stored within a memory of the mobile device may be used to authorize the mobile device for use.

Banking functions performed by a mobile device may, for example, be authorized as defined by options 6004. A mobile device may, for example, be equipped with scanning capability, such that biometrics (e.g., fingerprints) may be taken from the user of the mobile device and verified before banking functions may be authorized. As per another example, a dynamic security code communicated to a processor of a mobile device by a powered payment card via a contactless communication channel may authorize banking functions to be performed by the mobile device.

Functions associated with remote operation of a car may, for example, be authorized as defined by options 6006. A mobile device may, for example, be equipped with a camera, such that only when a picture of an authorized user is taken with the camera and verified by a processor of the mobile device will that user be able to issue remote commands (e.g., unlock driver's door) to the user's car.

Other functions, such as remote house functions, may be authorized as defined by options 6008. For example, a garage door of a user's house may be commanded to be opened by the user's mobile device, but only if a house key communicates security credentials (e.g., a key code) to a processor of the user's mobile device via a contactless communication channel. Alternately, for example, a user may disable any house functions to be conducted by the user's mobile device.

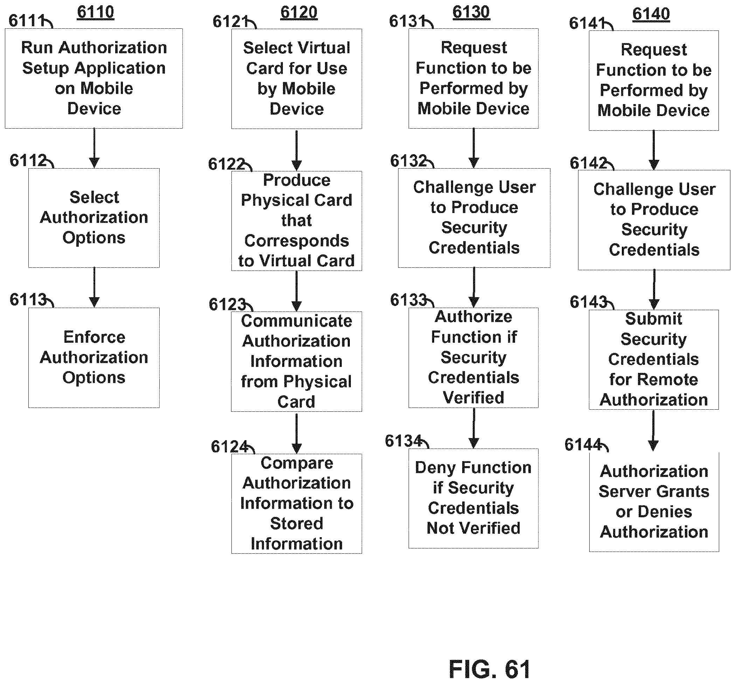

FIG. 61 shows flow charts for process sequences 6110-6140. Process sequence 6110 may, for example, execute an authorization setup application (e.g., a GUI) on a mobile device that allows a user of the mobile device to select authorization options (e.g., as in steps 6111-6112) to be enforced by a processor of the mobile device (e.g., as in step 6113). For example, banking functions that may be performed by a mobile device may first require that a physical bank card be placed in proximity to the mobile device so that the physical bank card may communicate security credentials to a processor of the mobile device via a contactless communication channel that may be formed between the physical banking card and the mobile device. In so doing, for example, a processor of the mobile device may compare the security credentials received from the physical card to security credentials stored within a memory of the mobile device (or remote authorization server). Upon a successful comparison, a processor of a mobile device may authorize banking functions to be performed by the mobile device.

A memory of a mobile device may, for example, contain a number of virtual cards that may correspond to information communicated to a processor of the mobile device via physical card counterparts to the virtual cards. Such virtual cards may, for example, be selected (e.g., as in step 6121 of sequence 6120) to perform a function in conjunction with the mobile device (e.g., payment information associated with a virtual payment card may be selected to complete a purchase transaction using the mobile device). In step 6122, a user of a mobile device may be required to produce a physical card that corresponds to the selected virtual card. A contactless communication channel (e.g., an RFID communication channel) may be formed between the physical card and the mobile device so that security credentials may be communicated from the physical card to a processor of the mobile device via the contactless communication channel (e.g., as in step 6123). In step 6124, a processor of a mobile device may compare the security credentials to security credentials stored within a memory of the mobile device (or remote authorization server) that corresponds to a physical card. Upon a favorable comparison, a processor of a mobile device may authorize the selected virtual card for use.

Any function (e.g., non-purchase transactions) that may be performed by a mobile device may be requested (e.g., as in step 6131 of sequence 6130) and challenged (e.g., as in step 6132 of sequence 6130). For example, a processor of a mobile device may be requested to perform any function (e.g., remotely start the engine of a user's car) and a processor of the mobile device may first require security credentials to be presented before the function may be performed. Security credentials may, for example, be any information that may be communicated to a mobile device by a contactless device (e.g., an RFID enabled ignition key) via a contactless communication channel. A processor of the mobile device may authorize the requested function if the security credentials are verified (e.g., as in step 6133) and may deny the requested function if the security credentials are not verified (e.g., as in step 6134).

In step 6141 of sequence 6140, a user of a mobile device may request a function to be performed by a mobile device. Upon receipt of security credentials communicated by a contactless communication device to a processor of the mobile device (e.g., as in step 6142), the security credentials may be forwarded (e.g., as in step 6143) to a remote authorization server for verification. In step 6144, the remote authorization server may communicate a message to a processor of the mobile device to either grant or deny authorization for the mobile device to perform the requested function.

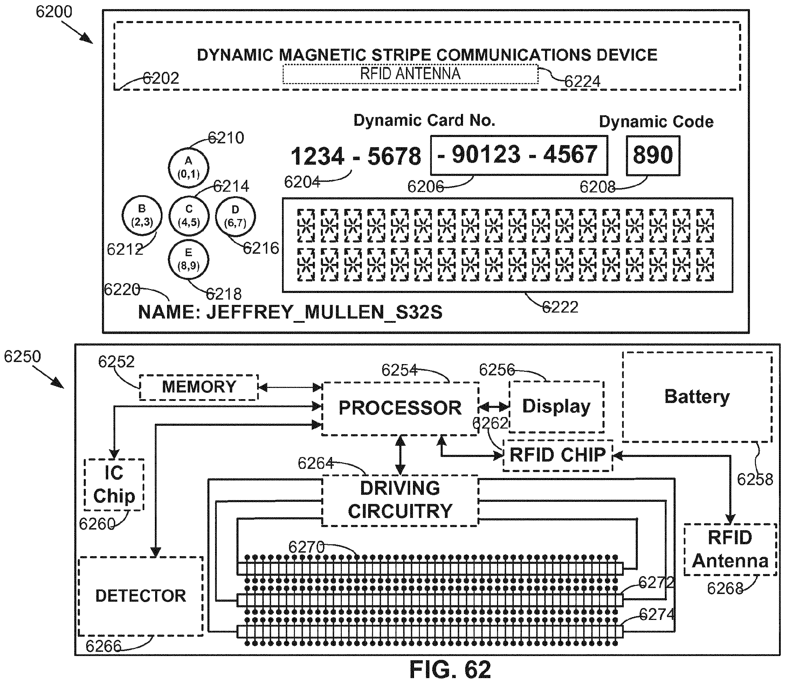

FIG. 62 shows card 6200 that may include, for example, a dynamic number that may be entirely, or partially, displayed using a display (e.g., display 6206). A dynamic number may include a permanent portion such as, for example, permanent portion 6204 and a dynamic portion such as, for example, dynamic portion 6206. Card 6200 may include a dynamic number having permanent portion 6204 and permanent portion 6204 may be incorporated on card 6200 so as to be visible to an observer of card 6200. For example, labeling techniques, such as printing, embossing, laser etching, etc., may be utilized to visibly implement permanent portion 6204.

Card 6200 may include a second dynamic number that may be entirely, or partially, displayed via a second display (e.g., display 6208). Display 6208 may be utilized, for example, to display a dynamic code such as a dynamic security code. Card 6200 may also include third display 6222 that may be used to display graphical information, such as logos and barcodes. Third display 6222 may also be utilized to display multiple rows and/or columns of textual and/or graphical information.

Persons skilled in the art will appreciate that any one or more of displays 6206, 6208, and/or 6222 may be implemented as a bi-stable display. For example, information provided on displays 6206, 6208, and/or 6222 may be stable in at least two different states (e.g., a powered-on state and a powered-off state). Any one or more of displays 6206, 6208, and/or 6222 may be implemented as a non-bi-stable display. For example, the display is stable in response to operational power that is applied to the non-bi-stable display. Other display types, such as LCD or electro-chromic, may be provided as well.

Other permanent information, such as permanent information 6220, may be included within card 6200, which may include user specific information, such as the cardholder's name or username. Permanent information 6220 may, for example, include information that is specific to card 6200 (e.g., a card issue date and/or a card expiration date). Information 6220 may represent, for example, information that includes information that is both specific to the cardholder as well as information that is specific to card 6200.

Card 6200 may accept user input data via any one or more data input devices, such as buttons 6210-6218. Buttons 6210-6218 may be included to accept data entry through mechanical distortion, contact, or proximity. Buttons 6210-6218 may be responsive to, for example, induced changes and/or deviations in light intensity, pressure magnitude, or electric and/or magnetic field strength. Such information exchange may then be determined and processed by a processor of card 6200 as data input. An RFID chip may, for example, include memory that may be populated with data to be communicated via RFID antenna 6224 when one or more buttons 6210-6218 are pressed. Accordingly, for example, once a button is pressed, RFID data may be loaded into an RFID chip memory and once an RFID communication channel is formed (e.g., once card 6200 is brought within an RFID communication distance of an RFID enabled device) the data in RFID chip memory may be communicated via an RFID communication channel using RFID antenna 6224. Once RFID data is communicated, or after a configurable delay period, the RFID chip memory may be erased.

FIG. 62 shows architecture 6250, which may include one or more processors 6254. One or more processors 6254 may be configured to utilize external memory 6252, internal memory of processor 6254, internal memory of RFID chip 6262, or a combination of external memory 6252, internal memory of RFID chip 6262, and internal memory of processor 6254 for dynamically storing information, such as executable machine language, related dynamic machine data, RFID data and user input data values.

One or more of the components shown in architecture 6250 may be configured to transmit information to processor 6254 and/or may be configured to receive information as transmitted by processor 6254. For example, one or more displays 6256 may be coupled to receive data from processor 6254. The data received from processor 6254 may include, for example, at least a portion of dynamic numbers and/or dynamic codes. The data to be displayed on the display may be displayed on one or more displays 6256.

One or more displays 6256 may be, for example, touch sensitive and/or proximity sensitive. For example, objects such as fingers, pointing devices, etc., may be brought into contact with displays 6256, or in proximity to displays 6256. Detection of object proximity or object contact with displays 6256 may be effective to perform any type of function (e.g., transmit data to processor 6254). Displays 6256 may have multiple locations that are able to be determined as being touched, or determined as being in proximity to an object.

Persons skilled in the art will appreciate that a card (e.g., card 6200 of FIG. 62) may, for example, be a self-contained device that derives its own operational power from one or more batteries 6258. Furthermore, one or more batteries 6258 may be included, for example, to provide operational power for a period of time (e.g., approximately 2-4 years). One or more batteries 6258 may be included, for example, as rechargeable batteries.

Input and/or output devices may be implemented on architecture 6250. For example, integrated circuit (IC) chip 6260 (e.g., an EMV chip) may be included on architecture 150 to communicate information to a chip reader (e.g., an EMV chip reader) via contacts that may be formed on a surface of a card (e.g., card 6200 of FIG. 62). Other input and/or output devices may be included on architecture 6250, for example, to provide any number of input and/or output capabilities within architecture 6250. For example, other input and/or output devices may include an audio device capable of receiving and/or transmitting audible information. Other input and/or output devices may include a device that exchanges analog and/or digital data using a visible data carrier. Alternately, for example, other input and/or output devices may include a device that is sensitive to a non-visible data carrier, such as an infrared data carrier or electromagnetic data carrier.

A dynamic magnetic stripe communications device may be included within architecture 6250 to communicate information to, for example, a read-head of a magnetic stripe reader via, for example, electromagnetic signals. For example, electromagnetic field generators 6270-6274 may be included to communicate one or more tracks of electromagnetic data to read-heads of a magnetic stripe reader. Electromagnetic field generators 6270-6274 may include, for example, a series of electromagnetic elements, where each electromagnetic element may be implemented as a coil wrapped around one or more materials (e.g., a magnetic material and/or a non-magnetic material). Additional materials may be placed outside the coil (e.g., a magnetic material and/or a non-magnetic material).

Electrical excitation by processor 6254 of one or more coils of one or more electromagnetic elements via, for example, driving circuitry 6264 may be effective to generate electromagnetic fields from one or more electromagnetic elements. One or more electromagnetic field generators 6270-6274 may be utilized to communicate electromagnetic information to, for example, one or more read-heads of a magnetic stripe reader.

Timing aspects of information exchange between architecture 6250 and the various I/O devices implemented on architecture 6250 may be determined by processor 6254. Detector 6266 may be utilized, for example, to sense the proximity and/or actual contact, of an external device, which in turn, may trigger the initiation of a communication sequence. The sensed presence and/or touch of the external device may then be communicated to a controller (e.g., processor 6254), which in turn may direct the exchange of information with the external device. The sensed presence and/or touch of the external device may be effective to, for example, determine the type of device or object detected.

For example, the detection may include the detection of, for example, a read-head of a magnetic stripe reader. In response, processor 6254 may activate one or more electromagnetic field generators 6270-6274 to initiate a communications sequence with, for example, one or more read-heads of a magnetic stripe reader. The timing relationships associated with communications between one or more electromagnetic field generators 6270-6274 and one or more read-heads of a magnetic stripe reader may be provided through use of the detection of the magnetic stripe reader.

Persons skilled in the art will appreciate that processor 6254 may provide user-specific and/or card-specific information through utilization of any one or more of buttons 6210-6218, RFID chip 6262, RFID antenna 6268, IC chip 6260, electromagnetic field generators 6270-6274, and any other input and/or output device. RFID antenna 6268 may, for example, be brought within a communication distance of an RFID enabled device which may be generating a carrier field (e.g., an RF field). In so doing, RFID antenna 6268 may collect energy from the RF field which may then be detected by RFID chip 6262. RFID chip 6262 may, for example, communicate a presence of an RFID communication device to processor 6252. Processor 6252 may, in turn, populate a memory of RFID chip 6262 with user-specific and/or card-specific information (e.g., a payment account number, cardholder name, and a dynamic security code) that may then be communicated to the RFID enabled device via RFID antenna 168.

RFID antenna 6268 may be configured to receive data from an RFID device (e.g., an RFID tag). Accordingly, for example, RFID chip 6262 may interrogate the capabilities of an RFID device and may receive data from the RFID device upon a determination that the RFID device may communicate data. RFID antenna 6268 may, for example, be provided as two or more RFID antennas that may be used to enhance RFID data communication and/or reception with an RFID enabled device.

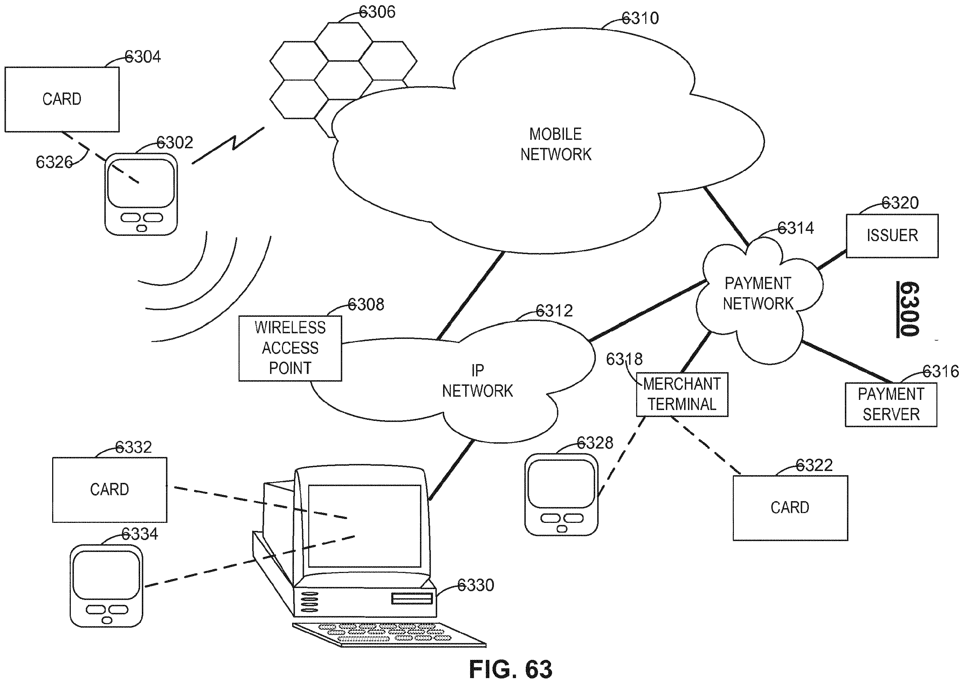

FIG. 63 shows network topology 6300 that may include, for example, mobile device 6302 (e.g., a mobile telephonic device, a PDA, an electronic tablet, a laptop, a GPS unit, or an MP3 player). Mobile device 6302 may, for example, include a contactless interface that may initiate, sustain, and/or terminate communication channel 6326 between card 6304 and mobile device 6302. Card 6304 and mobile device 6302 may communicate via channel 6326 via a contactless communication medium (e.g., an RF medium).

Mobile device 6302 may provide one or more transceivers that may communicate with one or more wired networks (e.g., IP network 6312 and/or payment network 6314) and/or one or more wireless networks (e.g., mobile network 6310). Mobile device 6302 may, for example, communicate with a cellular station over a wireless radio interface (e.g., a GSM air interface) that may be used by mobile device 6302 to communicate information (e.g., voice and data) to cellular network access infrastructure 6306 (e.g., one or more GSM base transceiver stations, base station controllers, and mobile switching centers). Persons skilled in the art will appreciate that cellular network access infrastructure 6306 may utilize any multiple access architecture, such as for example, a code-division multiple access architecture and/or a time-division multiple access architecture.

Mobile device 6302 may, for example, communicate with wireless access point 6308 over a wireless interface (e.g., a Bluetooth interface or a Wi-Fi interface). Accordingly, for example, mobile device 6302 may access one or more wired networks (e.g., IP network 6312 and/or payment network 6314) and/or one or more wireless networks (e.g., mobile network 6310) without the need to first gain access to cellular network access infrastructure 6306.

Card 6304 may, for example, be a powered card or a non-powered card (e.g., a powered payment card or a non-powered payment card). Accordingly, for example, payment information (e.g., a payment account number and a card expiration date) may be communicated from card 6304 to mobile device 6302 in support of a financial transaction being conducted by mobile device 6302. In so doing, for example, items for purchase on IP network 6312 (e.g., the internet) may be accessed by a browser of mobile device 6302 via an access point (e.g., wireless access point 6308 or cellular network access infrastructure 6306). Mobile device 6302 may, for example, complete a purchase transaction by first obtaining required payment information from card 6304 and then communicating such payment information to network entities (e.g., payment server 6316 and/or issuer 6320).

Payment server 6316 may, for example, contact issuer 6320 via a network (e.g., payment network 6314) with payment information received from mobile device 6302 for authorization of a purchase. Once authorized, payment transaction information may be recorded onto a receipt that may be delivered to mobile device 6302 via any one or more delivery options (e.g., via a short messaging service of mobile network 6310 or an email delivery service of IP network 6312). Mobile device 6302 may allow a user to associate purchase categories (e.g., groceries, auto repair, or entertainment) to purchases transacted by the mobile device so that the user may receive a more detailed accounting of his or her expenditures on his or her receipt. Accordingly, for example, a user may enjoy a higher degree of integration such that a user may customize a level of detail provided on a receipt via mobile device 6302. A payment receipt may, for example, be provided to mobile device 6302 as a proof-of-purchase object (e.g., a barcode) that may be provided to a display of mobile device 6302 and read by other computing equipment (e.g., a barcode scanner) for proof-of-purchase confirmation.

A device (e.g., mobile device 6328 and/or card 6322) may, for example, include a contactless communication device (e.g., an RFID device) that may initiate, sustain, and/or terminate a contactless communication channel (e.g., an RFID communications channel) with merchant terminal 6318. Accordingly, for example, card 6322 and/or mobile device 6328 may communicate payment information to merchant terminal 6318 to complete a financial transaction. In so doing, for example, mobile device 6328 and/or card 6322 may first receive a request from a user to communicate payment information to merchant terminal 6318.

As per an example, a user of card 6322 may press a button on card 6322 that may cause payment information to be transferred to a memory of a processor (e.g., an RFID chip). An associated RFID antenna may, for example, sense the presence of merchant terminal 6318 by detecting an RF carrier field that may be generated by an RFID device of merchant terminal 6318. Once the presence of merchant terminal 6318 is sensed, payment information may be transferred from an RFID chip of card 6322 to an RFID antenna of card 6322 to communicate the payment information via an RFID communication channel to merchant terminal 6318 to complete a financial transaction.

As per another example, card 6322 may be a non-powered card (e.g., a non-powered payment card). Accordingly, for example, card 6322 may include an RFID chip and associated RFID antenna that may be brought within proximity to merchant terminal 6318. An RFID antenna of card 6322 may sense an RF carrier field generated by merchant terminal 6318 and may derive operational power from the RF carrier field. The operational power may, for example, be collected by an RFID antenna of card 6322 and provided to an associated RFID chip of card 6322 in order to energize the RFID chip of card 6322. Once energized, an RFID chip of card 6322 may modulate an RF carrier field generated by merchant terminal 6318 to, for example, communicate payment information from card 6322 to merchant terminal 218 to complete a purchase transaction.

Any computing device (e.g., desktop computer 6330) may, for example, provide contactless communication electronics (e.g., an RFID reader) that may communicate with a contactless communication device (e.g., card 6332 and/or mobile device 6334). Accordingly, for example, any information that may be communicated by card 6332 (e.g., payment information) may be received by computing device 6330 (e.g., received via an RFID communication channel established between card 6332 and computing device 6330) and forwarded onto a network entity (e.g., issuer 6320 and/or payment server 6316) to complete a purchase transaction. Persons skilled in the art will appreciate that any RFID information may be exchanged between computing device 6330 and an RFID enabled device (e.g., card 6332 and/or mobile device 6334).

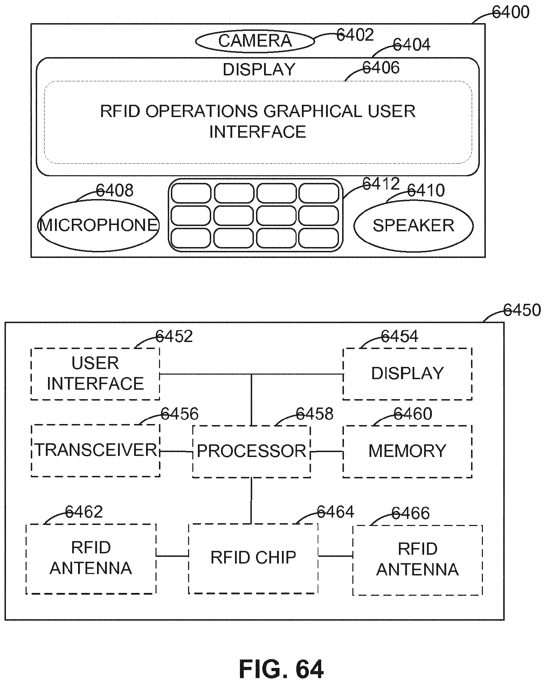

FIG. 64 shows mobile device 6400. Mobile device 6400 may be any mobile device, such as a mobile telephonic device (e.g., cell phone), a PDA, an electronic tablet, an MP3 player, or a locating device (e.g., a GPS device). Accordingly, mobile device 6400 may be operated in a mobile environment while a user of mobile device 6400 goes about his or her daily activities (e.g., driving, shopping, walking, dining, and exercising). In addition, for example, mobile device 6400 may perform multiple functions simultaneously (e.g., a person may carry on a conversation while at the same time browsing and purchasing products on the internet).

Mobile device 6400 may include audio processing devices (e.g., microphone 6408 and speaker 6410). Accordingly, for example, mobile device 6400 may receive voice commands from a user via microphone 6408 and may process such commands to perform a function. For example, a user may place mobile device 6400 into a desired operational mode by speaking a command into microphone 6408 that is associated with the desired operational mode. In so doing, for example, mobile device 6400 may engage in hands-free operation by receiving voice commands via microphone 6408 and performing functions associated with the received voice commands.

Mobile device 6400 may receive data input via microphone 6408. For example, a voice-band modem may generate signals in a voice-band frequency range that may be received by microphone 6408. A processor of mobile device 6400 may interpret the received audible information as data signals and may process the data signals as, for example, data values and/or control data input.

Mobile device 6400 may include camera 6402. Camera 6402 may capture one or more frames of video data and store the video data within a memory of mobile device 6400. Accordingly, for example, a processor of mobile device 6400 may receive one or more frames of video information via camera 6402 and may process the video information as data values and/or control data input. In so doing, for example, mobile device 6400 may receive optical information that is sensed by camera 6402 during a series of one or more video capture events that produce one or more frames of video information. The one or more frames of video information may contain one or more data elements (e.g., pixels) having properties (e.g., color, intensity, or contrast) that may be interpreted by a processor of mobile device 6400 as data values and/or control data.

Mobile device 6400 may include manual input interface 6412. Manual input interface 6412 may, for example, include keys and/or buttons that may be sensitive to manual input, such as a touch or an application of pressure. Accordingly, for example, a user of mobile device 6400 may enter information into mobile device 6400 via manual interface 6412 to cause a processor of mobile device 6400 to enter a particular mode of operation. Manual interface 6412 may, for example, be used for data entry (e.g., dialing a phone number or entering data as may be requested by mobile device 6400) during a particular mode of operation of mobile device 6400.

Mobile device 6400 may include display 6404. Display 6404 may provide visible information that may be utilized by a user during interaction with mobile device 6400. A portion or all of display 6404 may be touch sensitive such that objects making contact with display 6404 or objects coming within a proximity of display 6404 may be detected by a processor of mobile device 6400. Accordingly, for example, RFID operations graphical user interface 6406 may be provided by display 6404 so that graphical information may be displayed to solicit and/or receive data entry from a user. In so doing, for example, touch-sensitive graphical user interface devices such as radio buttons, textual input boxes, virtual buttons, pull-down menus, and navigational tools may be used for data entry to initiate, change, and/or support functions performed by mobile device 6400.

FIG. 64 shows architecture 6450. User interface 6452 may, for example, be included within architecture 6450 to allow user interaction with architecture 6450. For example, a dedicated key pad or keyboard may be included within user interface 6452 to allow alphanumeric data entry into architecture 6450.

Architecture 6450 may include one or more displays 6454. Display 6454 may, for example, be touch-sensitive. Accordingly, for example, display 6454 may be utilized for alphanumeric data entry using virtual buttons that may be rendered onto touch-sensitive portions of display 6454. In so doing, for example, touching virtual buttons that may be associated with alphabetic and numeric characters of display 6454 may be detected by processor 6458 as alphanumeric data entry.

Alphanumeric entry boxes may, for example, be rendered onto display 6454. A user may, for example, activate a cursor within such an alphanumeric entry box by touching an area within the alphanumeric entry box. A user may utilize user interface 6452 and/or a virtual keypad rendered onto display 6454 to select alphanumeric characters to be placed within the alphanumeric entry box in accordance with a character position identified by an activated cursor within the alphanumeric entry box. In so doing, for example, processor 6458 may receive alphanumeric characters as typed into a alphanumeric entry box of display 6454 and may use such alphanumeric characters as data input.

Display 6454 may, for example, provide data output from architecture 6450. For example, display 6454 may communicate data using a series of light pulses. Accordingly, for example, processor 6458 may cause one or more portions of display 6454 to produce light pulses having varying characteristics (e.g., duration, intensity, and frequency) that may communicate information via such light pulses. In so doing, for example, a device that may be sensitive to light pulses may receive information communicated by display 6454 via light pulses having varying characteristics. Display 6454 may, for example, communicate data using visual information that may be substantially static (e.g., a barcode).

Architecture 6450 may include one or more transceivers 6456. Transceiver 6456 may communicate information to and/or may receive information from one or more devices. Transceiver 6456 may, for example, communicate via a wireless interface with one or more cellular stations of a mobile network. Accordingly, for example, transceiver 6456 may allow a mobile device (e.g., mobile device 6400 of FIG. 64) to establish a communications channel with an associated cellular station. In so doing, for example, a mobile device (e.g., mobile device 6400 of FIG. 64) may exchange information (e.g., voice, text, data, or multimedia) with one or more terrestrial networks (e.g., the internet or a payment network) via an associated cellular station. As per another example, transceiver 356 may exchange information with one or more other mobile devices via one or more associated cellular stations.

Transceiver 6456 may, for example, communicate via a wireless interface with one or more mobile devices directly. Accordingly, for example, transceiver 6456 may communicate with another mobile device without first accessing a mobile network via a cellular station of the mobile network. As per another example, transceiver 6456 may, for example, communicate via a wireless interface with one or more network devices (e.g., a wireless access point) directly. Accordingly, for example, a mobile device (e.g., mobile device 6400 of FIG. 64) may directly connect to a wired and/or a wireless network via any one or more wireless standards (e.g., Bluetooth or Wi-Fi) to exchange information with other devices that may be connected to the wired and/or wireless network. In so doing, for example, a wired and/or wireless network may be accessed by a mobile device without first accessing a mobile network via a cellular station of a mobile network.

Architecture 6450 may include RFID chip 6464, RFID antenna 6462, and optional RFID antenna 6466 which may combine to communicate with an RFID enabled device via an RFID communication channel. Accordingly, for example, architecture 6450 may be compatible with any RFID device, such as for example, an RFID enabled card, an RFID reader, and an RFID enabled computing device (e.g., an RFID enabled desktop computer). RFID antenna 6466 may, for example, be provided to enhance RFID data communication and/or reception.

RFID antenna 6462 and/or RFID antenna 6466 may, for example, establish an RF carrier field that may be modulated by an RFID device (e.g., an RFID tag of a non-powered payment card). In so doing, for example, an RFID tag of a non-powered payment card may derive operational power from an RF field provided by RFID antenna 6462 and/or RFID antenna 6466 and may communicate information (e.g., one, two, and/or three tracks of magnetic stripe data) to RFID antenna 6462 and/or RFID antenna 6466 by modulating the RF field produced by RFID antenna 6462 and/or RFID antenna 6466.

A powered card may, for example, communicate with RFID antenna 6462 and/or RFID antenna 6466. A powered card may, for example, include a processor, a battery, a memory, a wireless communications device (e.g., a powered RFID device) and other electronics (e.g., buttons) that may allow a user to interact with the powered card to perform one or more functions. Accordingly, for example, a powered card may be used to communicate specific information to RFID antenna 6462 and/or RFID antenna 6466 by selective interaction with the buttons of the powered card. In so doing, for example, a powered card may be used to interactively communicate magnetic stripe information (e.g., one, two, and/or three tracks of magnetic stripe data) to RFID antenna 6462 and/or RFID antenna 6466 by sending a signal to a processor of a powered card (e.g., by pressing a button on the powered card) to initiate such communications.

RFID chip 6464 may, for example, receive RFID data from processor 6458 and may store such RFID data temporarily. Accordingly, for example, once an RFID communication channel is formed with an RFID enabled device, RFID data contained within RFID chip 6464 may be communicated to the RFID enabled device via RFID antenna 6462 and/or RFID antenna 6466. RFID antennas 6462 and 6466 may, for example, communicate the same RFID data to an RFID enabled device. RFID antennas 6462 and 6466 may, for example, communicate different RFID data sets to an RFID enabled device and the differences between the RFID data sets communicated may provide multiple other channels of data that may be communicated (e.g., an amplitude difference between RFID data sets may be an RFID data channel and a phase difference between RFID data sets may be an additional RFID data channel).

Architecture 6450 may include memory 6460 and/or processor 6458 may include internal memory. Accordingly, for example, application code may be stored within memory 6460 and/or processor 6458 and executed by processor 6458 in support of functions performed by architecture 6450. For example, an application (e.g., a graphical user interface) may be executed by processor 6458 and displayed onto display 6454, which may be used to interact with a user of a mobile device (e.g., mobile device 6400 of FIG. 64). Persons skilled in the art will appreciate that executable application code may be communicated to architecture 6450 via any one or more interfaces of architecture 6450 (e.g., user interface 6452, display 6454, transceiver 6456, and/or RFID antennas 6462 and/or 6466).

Application data (e.g., payment data) may be temporarily stored within RFID chip 6464 and communicated by RFID antenna 6462 and/or RFID antenna 6466 during operation. For example, payment data may be temporarily communicated to RFID chip 6464 by processor 6458 during a financial transaction being conducted via an RFID communication channel between a mobile device (e.g., mobile device 6400 of FIG. 64) and another RFID device (e.g., a merchant terminal). Once RFID data is communicated (or after a configurable delay period has expired), processor 6458 may cause the payment data stored within RFID chip 6464 to be erased so as to reduce an ability of an RFID skimmer to access data from RFID chip 6464.

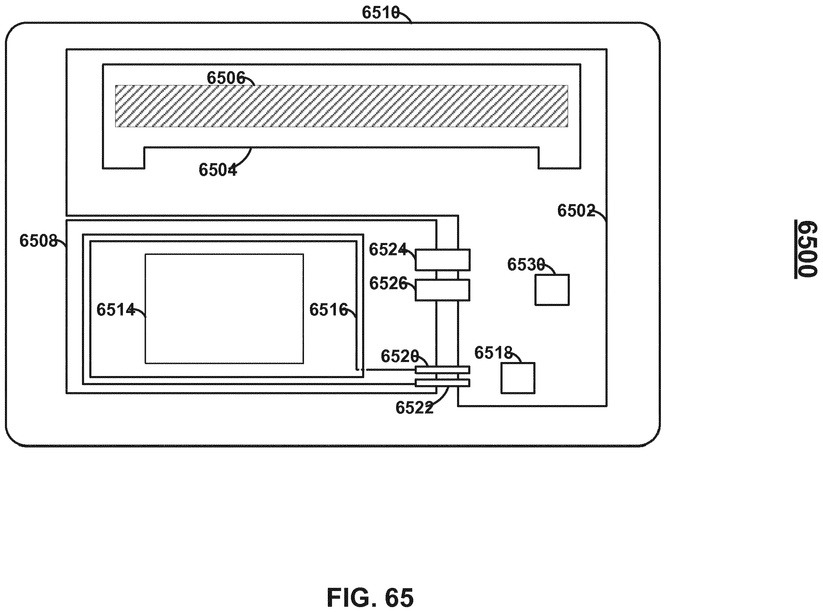

FIG. 65 shows card 6500, which may be a powered card and may include, for example, board 6502, board 6504, dynamic magnetic communications device 6506, RFID chip 6518, board 6508, battery 6514, conductive leads 6520-6526 and RFID antenna 6516. Additional circuitry may be provided on board 6502, which may include, for example, processor 6530, an EMV chip, a display, a display driver, driver circuitry for dynamic magnetic stripe communications device 6506, light emitting diodes, light sensors, infrared sensors and transmitters, capacitive sensing contacts, and a user interface (e.g., one or more buttons).

All boards, circuitry, and other components of card 6500 may be laminated to form card assembly 6510. Such a lamination may, for example, be implemented using a series of lamination process steps, such that an electronics package containing boards 6502, 6504, and/or 6508 and associated electronics may be encapsulated by an injection molding process (e.g., a reaction injection molding process), whereby a silicon-based material or a polyurethane-based material may be injected and cured (e.g., using temperature and/or chemical reaction) to form the electronics package. The electronics package may then be sandwiched between layers of laminate (e.g., layers of polymer laminate). Accordingly, for example, both surfaces of card assembly 6510 may be formed by a layer of laminate such that no electrical contacts exist on either surface of card assembly 6510. Alternately, for example, a surface of card assembly 6510 may be formed by a layer of laminate such that electrical contacts may exist on a surface of card assembly 6510 to provide connectivity from a surface of card assembly 6510 to a processor (e.g., an EMV chip) of card 6500.

RFID antenna 6516 may, for example, be formed using an additive technique, whereby patterns of a conductive element (e.g., copper) may be applied to a PCB substrate (e.g., applied to either side of board 6508) according to a patterning mask definition layer. RFID antenna 6516 may, for example, be formed using a subtractive technique whereby patterns of a conductive element (e.g., copper) may be removed from a pre-plated PCB substrate (e.g., removed from either side of board 6508) according to an etching mask definition layer. Other non-PCB fabrication techniques may be used to implement RFID antenna 6516 as may be required by a particular application.

Conductive leads 6520 and 6522 may, for example, provide electrical conductivity between board 6508 and board 6502. Accordingly, for example, RFID data signals received by RFID antenna 6516 may be communicated to RFID chip 6518 via conductive leads 6520 and 6522. RFID data signals to be communicated by RFID antenna 6516 (e.g., RFID data signals provided to RFID chip 6518 via processor 6530) may, for example, be received from RFID chip 6518 via conductive leads 6520 and 6522. Conductive leads 6524 and 6526 may, for example, provide electrical conductivity between board 6508 and board 6502 so that operational power may be provided to the active electrical components that may exist on board 6502 from battery 6514. Conductive leads 6520-6526, for example, may use conductive adhesive, soldering paste, or any other type of conductive applications to provide electrical conductivity between boards 6508 and 6502.

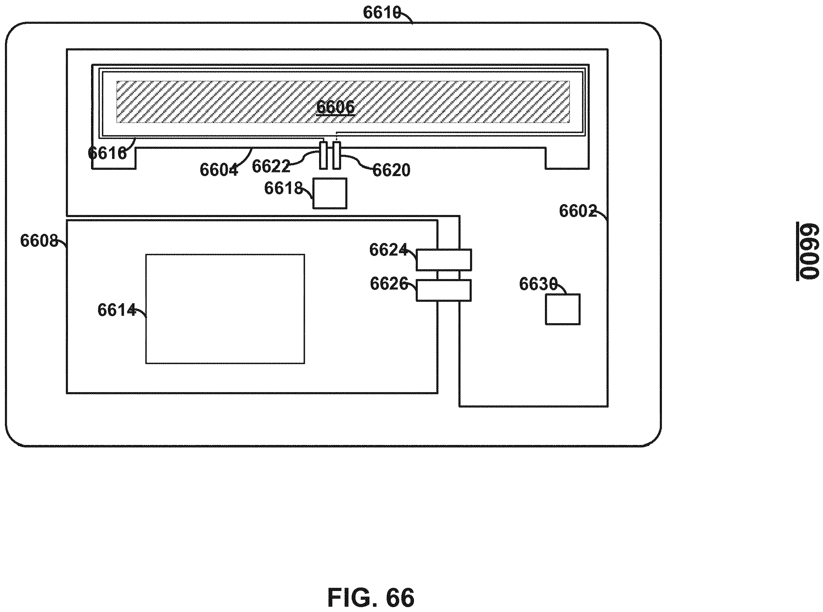

FIG. 66 shows card 6600, which may be a powered card and may include, for example, board 6602, board 6604, dynamic magnetic communications device 6606, RFID chip 6618, board 6608, battery 6614, conductive leads 6620-6626 and RFID antenna 6616. Additional circuitry may be provided on board 6602, which may include, for example, processor 6630, an EMV chip, a display, a display driver, driver circuitry for dynamic magnetic stripe communications device 6606, light emitting diodes, light sensors, infrared sensors and transmitters, capacitive sensing contacts, and a user interface (e.g., one or more buttons). All boards, circuitry, and other components of card 6600 may, for example, be encapsulated by an injection molding process and sandwiched between two layers of laminate to form card assembly 6610 having no exposed contacts. Alternately, for example, a surface of card assembly 6610 may be formed by a layer of laminate such that electrical contacts may exist on a surface of card assembly 6610 to provide connectivity from a surface of card assembly 6610 to a processor (e.g., an EMV chip) of card 6600.

RFID antenna 6616 may, for example, be formed using additive and/or subtractive techniques to define patterns of a conductive element (e.g., copper) to form RFID antenna 6616 (e.g., on either side of board 6604). Conductive leads 6620 and 6622 may, for example, provide electrical conductivity between board 6604 and board 6602. Accordingly, for example, RFID data signals received by RFID antenna 6616 may be communicated to RFID chip 6618 via conductive leads 6620 and 6622. RFID data signals to be communicated by RFID antenna 6616 (e.g., as may be provided to RFID chip 6618 by processor 6630) may be received from RFID chip 6618 via conductive leads 6620 and 6622. Conductive leads 6624 and 6626 may, for example, provide electrical conductivity between board 6608 and board 6602 so that operational power may be provided to the active electrical components that may exist on board 6602 from battery 6614.

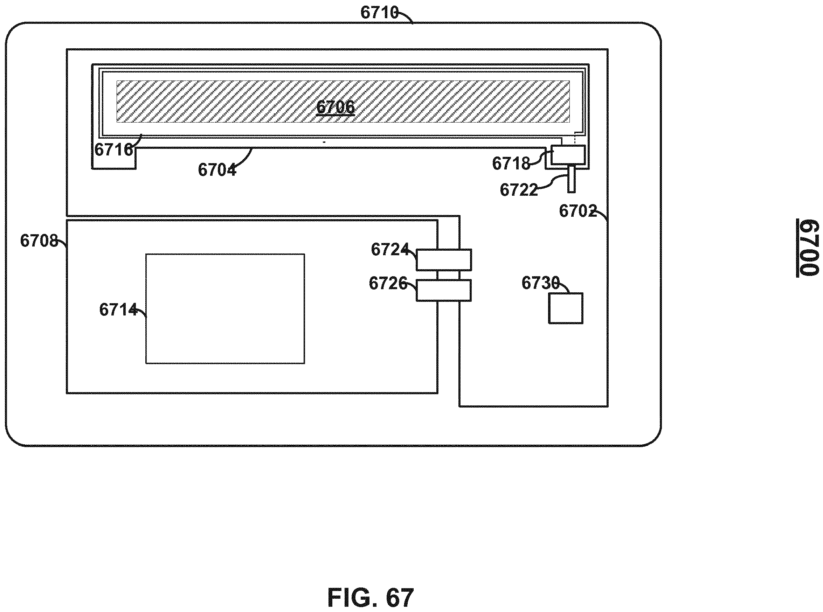

FIG. 67 shows card 6700, which may be a powered card and may include, for example, board 6702, board 6704, dynamic magnetic communications device 6706, RFID chip 6718, board 6708, battery 6714, conductive leads 6722-6726 and RFID antenna 6716. Additional circuitry may be provided on board 6702, which may include, for example, processor 6730, an EMV chip, a display, a display driver, driver circuitry for dynamic magnetic stripe communications device 6706, light emitting diodes, light sensors, infrared sensors and transmitters, capacitive sensing contacts, and a user interface (e.g., one or more buttons). All boards, circuitry, and other components of card 6700 may, for example, be encapsulated by an injection molding process and sandwiched between two layers of laminate to form card assembly 6710 having no exposed contacts. Alternately, for example, a surface of card assembly 6710 may be formed by a layer of laminate such that electrical contacts may exist on a surface of card assembly 6710 to provide connectivity from a surface of card assembly 6710 to a processor (e.g., an EMV chip) of card 6700.

RFID antenna 6716 may, for example, be formed using additive and/or subtractive techniques to define patterns of a conductive element (e.g., copper) to form RFID antenna 6716 (e.g., on either side of board 6704). One or more conductive leads 6722 may, for example, provide electrical conductivity between RFID chip 6718 of board 6704 and processor 6730 of board 6702. Accordingly, for example, while data exchanged between RFID chip 6718 and RFID antenna 6716 may remain on board 6704, one or more conduction paths 6722 may be provided so that data that is to be communicated by RFID antenna 6716 may first be communicated to RFID chip 6718 by processor 6730 that may exist, for example, on board 6702. Conductive leads 6724 and 6726 may, for example, provide electrical conductivity between board 6708 and board 6702 so that operational power may be provided to the active electrical components that may exist on boards 6702 and 6704 from battery 6714.

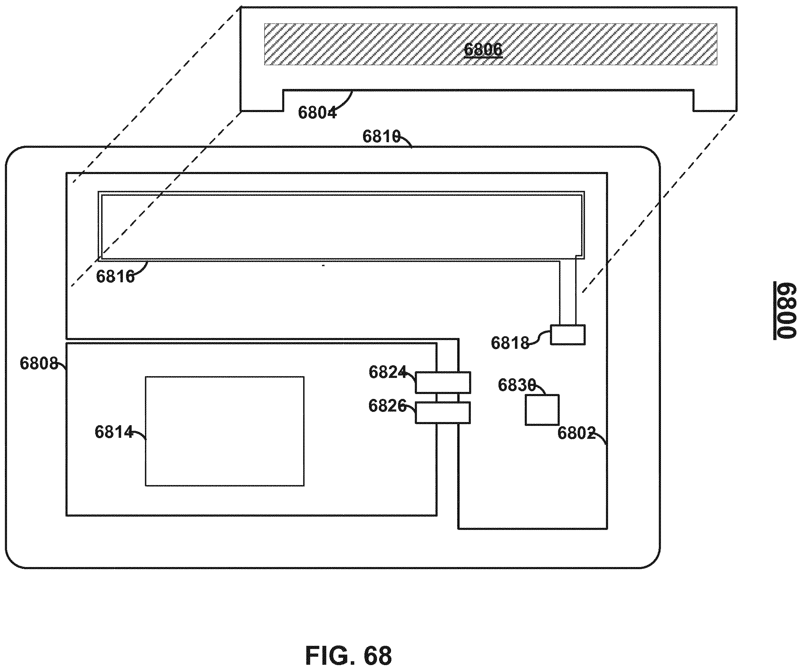

FIG. 68 shows card 6800, which may be a powered card and may include, for example, board 6802, board 6804, dynamic magnetic communications device 6806, RFID chip 6818, board 6808, battery 6814, conductive leads 6824-6826 and RFID antenna 6816. Additional circuitry may be provided on board 6802, which may include, for example, processor 6830, an EMV chip, a display, a display driver, driver circuitry for dynamic magnetic stripe communications device 6806, light emitting diodes, light sensors, infrared sensors and transmitters, capacitive sensing contacts, and a user interface (e.g., one or more buttons). All boards, circuitry, and other components of card 6800 may, for example, be encapsulated by an injection molding process and sandwiched between two layers of laminate to form card assembly 6810 having no exposed contacts. Alternately, for example, a surface of card assembly 6810 may be formed by a layer of laminate such that electrical contacts may exist on a surface of card assembly 6810 to provide connectivity from a surface of card assembly 6810 to a processor (e.g., an EMV chip) of card 6800.

RFID antenna 6816 may, for example, be formed using additive and/or subtractive techniques to define patterns of a conductive element (e.g., copper) to form RFID antenna 6816 (e.g., on a top side of board 6802). Accordingly, for example, RFID antenna 6816 may be applied to board 6802 at a location proximate to a location of board 6804. In so doing, for example, RFID antenna 6816 may be applied to board 6802 below a location where board 6804 attaches to board 6802 and conduction paths may be extended to RFID chip 6818 from RFID antenna 6816 (e.g., via conductive traces on board 6802). Conductive leads 6824 and 6826 may, for example, provide electrical conductivity between board 6808 and board 6802 so that operational power may be provided to the active electrical components that may exist on board 6802 from battery 6814. Persons skilled in the art will appreciate that RFID antenna 6816 may be placed anywhere on any board (e.g., around a perimeter of board 6802) so as to maximize an effectiveness of RFID antenna 6816.

Persons skilled in the art will further appreciate that any combination of processors, EMV chips, display drivers, dynamic magnetic stripe communications device drivers, RFID chips, and associated circuitry may be combined into one or more application specific integrated circuits (ASIC). Accordingly, for example, a core processor may interoperate with an ASIC that combines the functionalities of an RFID chip, a dynamic magnetic stripe communications device driver, and a display driver. Alternately, for example, a core processor, RFID chip, a dynamic magnetic stripe communications device driver, a display driver and associated electronics may be consolidated into a single ASIC. As per another example, a core processor and an RFID chip may be provided as discrete components that may interoperate with an ASIC that may be dedicated to dynamic magnetic stripe communications device driver functions and another ASIC that may be dedicated to display driver functions.

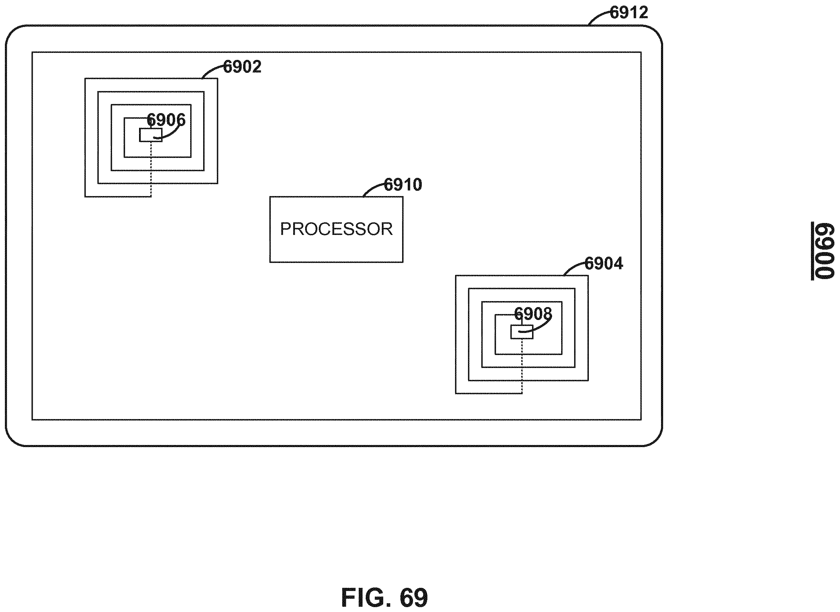

FIG. 69 shows card 6900, which may include multiple RFID antennas (e.g., RFID antennas 6902-6904) and associated RFID chips (e.g., RFID chips 6906-6908). Additional circuitry may be provided on card 6900, which may include, for example, a processor, an EMV chip, a display, a display driver, driver circuitry for a dynamic magnetic stripe communications device, light emitting diodes, light sensors, infrared sensors and transmitters, capacitive sensing contacts, and a user interface (e.g., one or more buttons). All boards, circuitry, and other components of card 6900 may, for example, be encapsulated by an injection molding process and sandwiched between two layers of laminate to form card assembly 6912 having no exposed contacts. Alternately, for example, a surface of card assembly 6912 may be formed by a layer of laminate such that electrical contacts may exist on a surface of card assembly 6912 to provide connectivity from a surface of card assembly 6912 to a processor (e.g., an EMV chip) of card 6900.

Processor 6910 may, for example, provide data to RFID chips 6906 and/or 6908 that may be communicated by RFID antenna 6902 and/or RFID antenna 6904, respectively. Processor 6910 may, for example, receive data from RFID chips 6906 and/or 6908 that may be received by RFID antenna 6902 and/or RFID antenna 6904, respectively.

Card 6900 may, for example, be placed within a communication distance of one or more RFID devices (e.g., one or more RFID enabled merchant terminals) in order to conduct a purchase transaction. Accordingly, for example, processor 6910 may communicate track 1 and track 2 magnetic stripe data to the RFID enabled merchant terminal via RFID chip 6906 and associated RFID antenna 6902. Alternately, for example, processor 6910 may communicate track 1 and track 2 magnetic stripe data to the RFID enabled merchant terminal via RFID chip 6908 and associated RFID antenna 6904.

As per another example, processor 6910 may utilize both RFID antennas 6902 and 6904 and associated RFID chips 6906 and 6908, respectively, to increase communication efficiency. Accordingly, for example, processor 6910 may communicate track 1 magnetic stripe data to RFID chip 6906 and track 2 magnetic stripe data to RFID chip 6908, so that track 1 magnetic stripe data may be communicated to an RFID enabled merchant terminal via RFID antenna 6902 and track 2 magnetic stripe data may be communicated to an RFID enabled merchant terminal via RFID antenna 6904. In so doing, for example, two tracks of magnetic stripe data may be communicated in half the time.

As per yet another example, RFID data communicated to RFID chips 6906 and 6908 by processor 6910 may be communicated in a fashion such that multiple channels of information may be communicated in addition to the first and second channels of information communicated by RFID chips 6906 and 6908. For example, phase, frequency, and/or amplitude differences between data communicated by RFID chip 6906/RFID antenna 6902 and data communicated by RFID chip 6908/RFID antenna 6904 may be used to communicate multiple channels of information. Accordingly, for example, a first set of information may be communicated by RFID chip 6906/RFID antenna 6902, a second set of information may be communicated by RFID chip 6908/RFID antenna 6904, and a third set of information may be communicated as an amplitude difference between each data element of the first and second information sets. A fourth set of information may be communicated, for example, as a phase difference between each data element of the first and second data sets. A fifth set of information may be communicated, for example, as a rate of change of the phase difference (e.g., frequency difference) between each data element of the first and second information sets. Persons skilled in the art will appreciate that any number of channels of information may be communicated by a pair of RFID communicators when differences between RFID data sets communicated by each RFID communicator are exploited as data channels.

A pair of RFID communicators may, for example, be used to increase accuracy of RFID data communicated. For example, the same RFID data may be communicated by RFID chip 6906/RFID antenna 6902 as is communicated by RFID chip 6908/RFID antenna 6904 so as to increase a probability that an RFID reader may receive RFID data that was intended to be communicated. Accordingly, for example, an RFID reader that may be spatially oriented such that data reception quality from a first RFID communicator is diminished in relation to a data reception quality from a second RFID communicator, may nevertheless receive a complete set of RFID data due to the redundant RFID communication configuration.

An RFID reader may, for example, employ collision avoidance algorithms, so that communications received from a first RFID communicator do not trump communications received from a second RFID communicator. Accordingly, for example, processor 6910 of card 6900 may communicate to such an RFID reader that dual RFID communicators may be present within card 6900. In so doing, for example, the RFID reader may activate its collision avoidance algorithm to accept RFID communications from both RFID communicators (e.g., RFID chip 6906/RFID antenna 6902 and RFID chip 6908/RFID antenna 6904) simultaneously.

RFID data may, for example, be received by RFID chip 6906/RFID antenna 6902 and RFID chip 6908/RFID antenna 6904. Accordingly, for example, card 6900 may be an RFID reader that may utilize a pair of RFID readers (e.g., a first RFID reader is provided by RFID chip 6906/RFID antenna 6902 and a second RFID reader is provided by RFID chip 6908/RFID antenna 6904). In so doing, for example, processor 6910 may impose an RFID communication protocol that accepts RFID data form each RFID reader simultaneously.

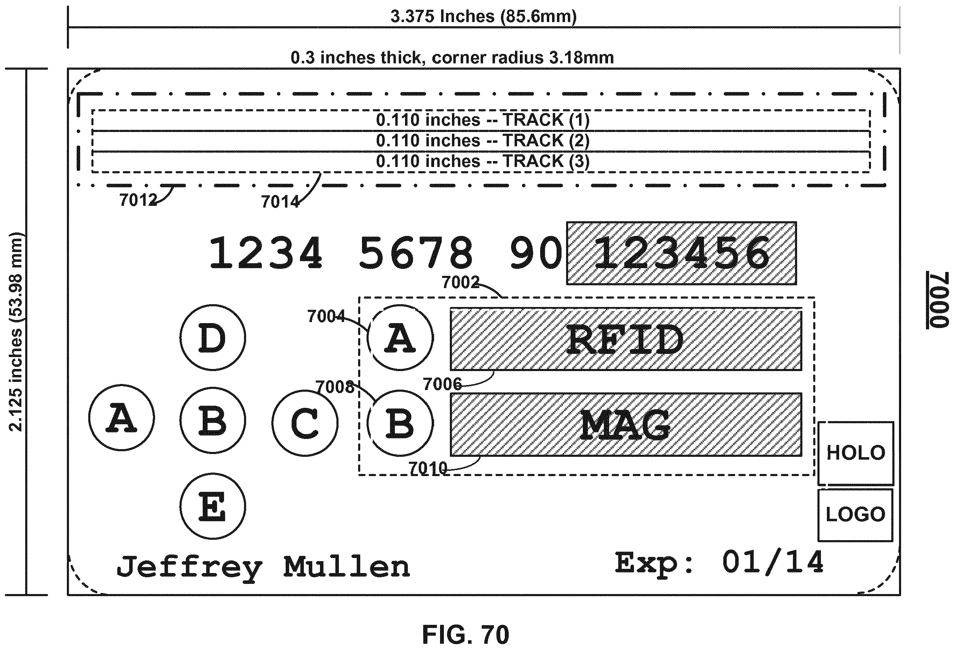

FIG. 70 shows card 7000 that may include, for example, configuration 7002. Configuration 7002 may include, for example, button 7004, button 7008, display 7006 and display 7010. Button 7004 may be associated with display 7006. Button 7004 may be pressed to utilize the option described by display 7006. Button 7008 may be associated with display 7010. Button 7008 may be pressed to utilize the option described by display 7010. A card may include additional buttons or displays or may not include the number of buttons or displays of card 7000. For example, a card may include only a single button (e.g., button 7004).

A user of card 7000 may, for example, select options 7006 or 7010 when card 7000 is to be used (e.g., when card 7000 is to be utilized at a point-of-sale terminal to complete a purchase transaction). Accordingly, for example, a user of card 7000 may press button 7004 to select option 7006 if the user wishes to exchange RFID data between card 7000 and an RFID device. Alternately, for example, a user of card 7000 may press button 7008 to select option 7010 if the user wishes to communication information to a magnetic stripe reader.

A user may, for example, press button 7008 to prepare card 7000 for communications with a magnetic stripe reader. Accordingly, for example, a processor of card 7000 may initiate a mode of operation upon activation of option 7010, whereby the processor searches for the presence of a read-head housing of a magnetic stripe reader. Once option 7010 is activated, a user may bring card 7000 within a communication distance of a magnetic stripe reader (e.g., the user may swipe card 7000 through a magnetic stripe reader). Upon the detection of the read-head housing of the magnetic stripe reader, the processor may communicate one, two, and/or three tracks of magnetic stripe data to a read-head of the detected magnetic stripe reader via dynamic magnetic stripe communications device 7014.

Alternately, for example, a user may press button 7004 to prepare card 7000 for communication with an RFID device. Accordingly, for example, a processor of card 7000 may initiate a mode of operation upon activation of option 7006, whereby a processor of card 7000 provides magnetic stripe information (e.g., one, two, and/or three tracks of magnetic stripe data) to an RFID chip of card 7000. Once option 7006 is activated, a user may bring card 7000 within a communication distance of an RFID reader (e.g., the user may wave card 7000 within an RFID communication distance of an RFID reader) and an RFID communication sequence between card 7000 and an RFID reader may be completed where RFID data may be provided to RFID antenna 7012 from an RFID chip on card 7000 and communicated from RFID antenna 7012 to the RFID reader.

Upon activation of option 7006, a processor of card 7000 may activate passive RFID communications or active RFID communications using RFID antenna 7012 and an associated RFID chip. Passive RFID communications, for example, may require little or no energy to be expended by card 7000. Instead, RFID antenna 7012 may collect energy from an RFID reader when a user of card 7000 brings card 7000 within a communication distance of the RFID reader. The energy collected by RFID antenna 7012 may, for example, provide power to an RFID chip of card 7000. In so doing, for example, an RFID chip of card 7000 may communicate with a processor of card 7000, so that the processor may populate a memory of the RFID chip with information (e.g., payment information) that may be needed to complete a transaction (e.g., a purchase transaction). Once populated with information, the RFID chip of card 7000 may communicate the information to RFID antenna 7012, which may then communicate the information to the RFID reader.

Active RFID communications from card 7000 may, for example, utilize battery power from within card 7000. Accordingly, for example, once card 7000 is brought within a communication distance of an RFID reader, RFID antenna 7012 may detect the RFID reader and may wake an RFID chip from a low-power state. In so doing, for example, an RFID antenna 7012 may detect energy from an RFID reader and an RFID chip of card 7000 may utilize battery power of card 7000 to receive information from a processor of card 7000 and to provide the received information to RFID antenna 7012 for subsequent communication to an RFID reader.

Card 7000 may, for example, operate as an RFID reader, such that when brought within a communication distance of another RFID device, an RFID chip of card 7000 may interrogate the RFID device to determine whether the RFID device is to receive information from card 7000 (e.g., the RFID device is operating as an RFID reader) or whether the RFID device is to communicate information to card 7000 (e.g., the RFID device is operating as an RFID tag). Accordingly, for example, an RFID chip of card 7000 may interrogate the RFID device to determine that the RFID device is an RFID tag an that RFID data may be communicated from the RFID device to an RFID chip of card 7000. In so doing, for example, an RFID chip of card 7000 may receive information, such as executable machine code, payment information, or any other type of information that may be required by card 7000 to operate as intended and may forward such information to a processor of card 7000 to be stored within a memory of card 7000. As per one example, an RFID chip of card 7000 may receive personalization information (e.g., cardholder information and cardholder account information) to prepare card 7000 for use as a payment card.

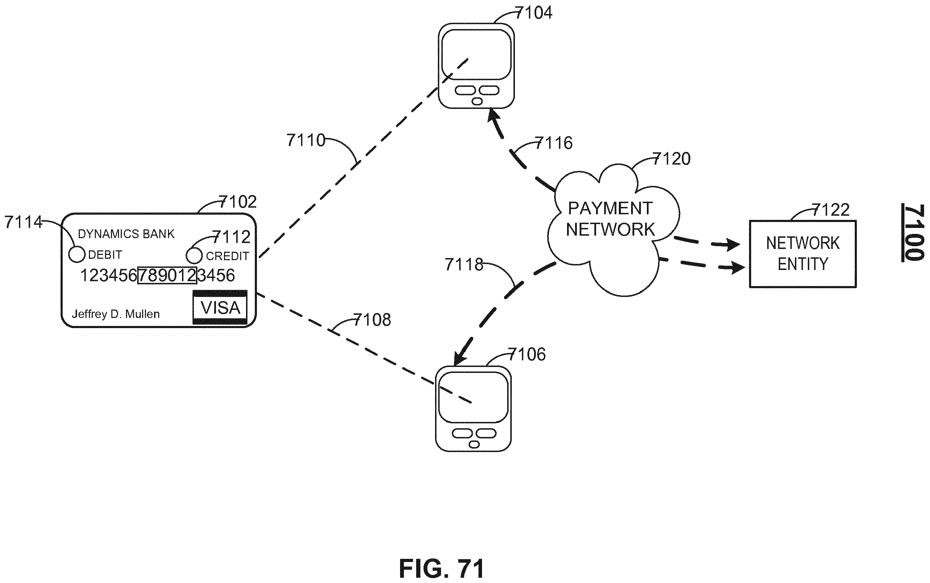

FIG. 71 shows system 7100, which may include card 7102 and one or more RFID devices (e.g., mobile devices 7104 and 7106). Card 7102 may, for example, communicate with multiple RFID devices simultaneously. A user of card 7102 may, for example, enable RFID communications with card 7102 by pressing one of buttons 7112 or 7114. Accordingly, for example, payment information (e.g., payment account number and cardholder name) may be communicated from a core processor within card 7102 and stored within one or more RFID chips of card 7102. Data indicative of which button was pushed (e.g., discretionary data indicative of either credit button 7112 or debit button 7114) may also be communicated and stored within the one or more RFID chips of card 7102.

As per one example, card 7102 may provide two RFID communication devices that may detect an RF carrier field that may be generated by each of mobile devices 7104 and 7106. Users of mobile devices 7104 and 7106 may, for example, be husband and wife who may wish to store payment information associated with card 7102 on respective memory locations of mobile devices 7104 and 7104 so that such payment information may be used to complete purchase transactions using mobile devices 7104 and 7106.

A first RFID communication device of card 7102 may establish RFID communication channel 7110 with an RFID reader of mobile device 7104 and a second RFID communication device of card 7102 may establish communication channel 7108 with an RFID reader of mobile device 7106. Accordingly, for example, the first and second RFID communication devices of card 7102 may communicate payment information temporarily stored within an RFID chip of each respective RFID communication device of card 7102. In so doing, for example, mobile devices 7104 and 7106 may store payment information communicated via RFID communication channels 7110 and 7108, respectively, within respective memory locations of mobile devices 7104 and 7106. Mobile devices 7104 and 7106 may later recall such payment information from their respective memory locations, communicate the stored payment information via channels 7116 and 7118, respectively, of payment network 7120, and complete payment transactions with network entity 7122 using payment information received from card 7102.

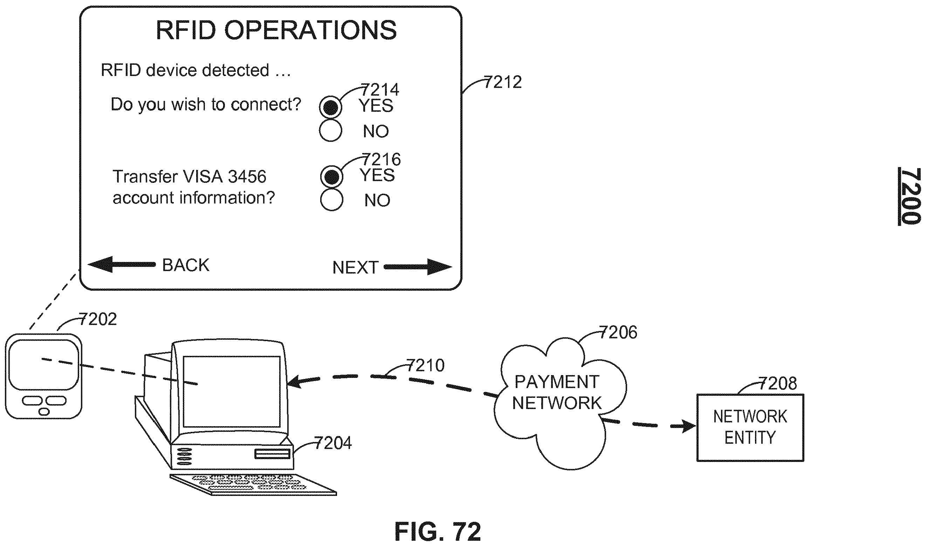

FIG. 72 shows system 7200, which may include mobile device 7202, a stationary device (e.g., desktop computer 7204), payment network 7206, and network entity 7208. An application (e.g., RFID operations GUI 7212) may be executed by a processor of mobile device 7202 and may, for example, report a detection of an RFID device to a display of mobile device 7202. Such an RF device may, for example, include any device (e.g., desktop computer 7204) that may be RFID equipped. An RFID antenna and associated RFID chip may, for example, exist within desktop computer 7204 such that when mobile device 7202 is brought within an RFID communication distance of desktop computer 7204, an RFID antenna of mobile device 7202 may detect its presence, report the same to an RFID chip within mobile device 7202, which may then be reported to a processor of mobile device 7202 and reported to a user of mobile device 7202 via GUI 7212.

GUI 7212 may, for example, ask the user of mobile device 7202 whether he or she wishes to allow an RFID connection between mobile device 7202 and desktop computer 7204. The user may indicate his or her wish via radio buttons 7214 and may also indicate whether information (e.g., payment information) stored within a memory of mobile device 7202 is to be communicated to desktop computer 7204 via an RFID communication channel previously authorized by the user of mobile device 7202 (e.g., by selecting one of radio buttons 7216). If so, then such information may be communicated to desktop computer 7204 by mobile device 7202 and stored within a memory of desktop computer 7204. In so doing, for example, payment information communicated by mobile device 7202 to desktop computer 7204 may subsequently be communicated by desktop computer 7204 via communication channel 7210 of payment network 7206 to complete a purchase transaction (e.g., an online purchase of items contained within a shopping cart generated by an internet browser of desktop computer 7204) via network entity 7208.

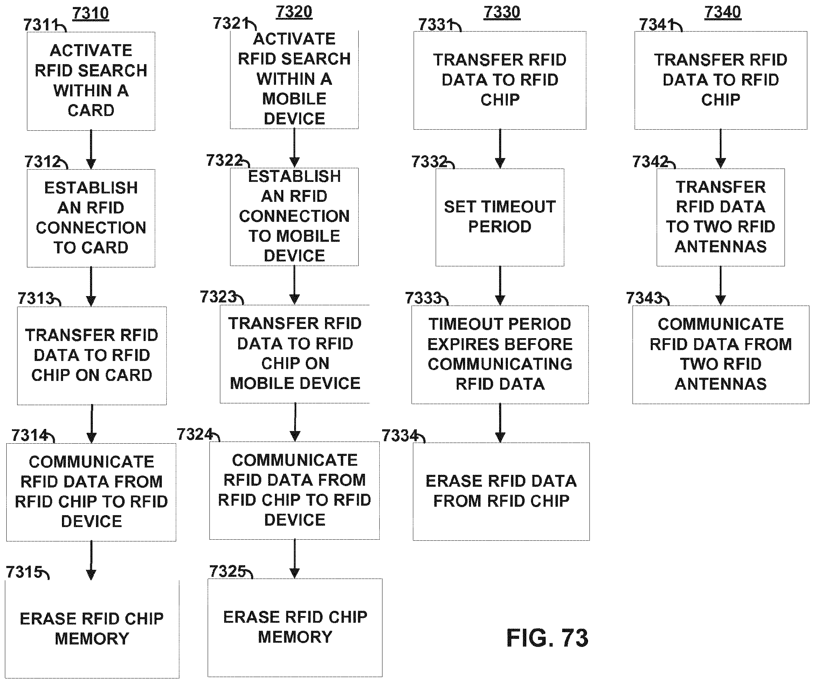

A flow diagram of communication sequences is shown in FIG. 73. Step 7311 of sequence 7310 may, for example, include activating an RFID search within a card. Accordingly, for example, a user interface (e.g., one or more buttons) of a card may be associated with a communication feature on the card, whereby pressing one of the buttons may activate an RFID communication device on the card. In step 7312, an RFID device may be detected by the card and an RFID connection may be established between the card and the RFID device. RFID data may, for example, be transferred to an RFID chip on the card (e.g., as in step 7313) and the RFID data contained within an RFID chip on the card may, for example, be communicated via an RFID antenna on the card to the RFID device (e.g., as in step 7314). Once RFID data is communicated, RFID data contained within an RFID chip on the card may be erased so as to reduce a likelihood of skimming RFID data from the RFID chip on the card.

Step 7321 of sequence 7320 may, for example, include activating an RFID search within a mobile device. Accordingly, for example, a user interface (e.g., a GUI executing on a processor of the mobile device) may be associated with a communication feature on the mobile device, whereby interfacing with the GUI may activate an RFID communication channel between a detected RFID device and the mobile device (e.g., as in step 7322). In step 7323, RFID data may, for example, be transferred to an RFID chip on the mobile device and the RFID data contained within an RFID chip on the mobile device may, for example, be communicated via an RFID antenna on the mobile device to the RFID device (e.g., as in step 7324). Once RFID data is communicated, RFID data contained within an RFID chip on the mobile device may be erased so as to reduce a likelihood of skimming RFID data from the RFID chip on the mobile device.

Step 7331 of sequence 7330 may, for example, include transferring RFID data from a core processor to an RFID chip on a card or a mobile device in preparation for communicating the RFID data via an RFID antenna on the card or the mobile device. If a timeout period that may be set in step 7332 expires before the RFID data is communicated by the card or mobile device (e.g., as in step 7333), then RFID data previously transferred to the RFID chip may be erased from the RFID chip by the core processor.

Step 7341 of sequence 7340 may, for example, include transferring RFID data from a core processor to an RFID chip on a card or a mobile device in preparation for communicating the RFID data via two RFID antennas on the card or the mobile device. In step 7342, the same data may be transferred to both RFID antennas. Alternately, for example, different data may be transferred each RFID antenna. In step 7343, both RFID antennas may communicate data to an RFID reader. As per one example, the same data may be communicated by both RFID antennas so as to increase a reliability of data communication. As per another example, different data may be communicated by each RFID antenna in order to increase an efficiency of data communication. As per yet another example, different data may be communicated by each RFID antenna, where differences (e.g., phase, frequency, and/or amplitude) may be used to communicate multiple other data channels.

Persons skilled in the art will appreciate that the present invention is not limited to only the embodiments described. Instead, the present invention more generally involves mobile information and the exchange thereof. Persons skilled in the art will also appreciate that the apparatus of the present invention may be implemented in other ways than those described herein. All such modifications are within the scope of the present invention, which is limited only by the claims that follow.

Additional numbered statements - not claims
1. A method, comprising:
   accessing a network using a mobile device;
   selecting an object for purchase from said network using said mobile device;
   communicating payment information from a payment card to said mobile device using a contactless communication channel; and
   communicating said payment information from said mobile device to said network to complete a purchase transaction for said object.
2. A method, comprising:
   communicating source account information to a first mobile device using a first contactless communication channel;
   communicating target account information to a second mobile device using a second contactless communication channel;
   communicating said target account information from said second mobile device to said first mobile device; and
   coordinating a money transfer from said source account into said target account using said first mobile device.
3. The method of claim 1, wherein said mobile device is a laptop computer.
4. The method of claim 1, wherein said mobile device is a PDA.
5. The method of claim 1, wherein said mobile device is a phone.
6. The method of claim 1, wherein said contactless communication channel is an RFID communication channel.
7. The method of claim 1, wherein said mobile device and said payment card are brought within a proximity distance of up to two inches to establish said contactless communication channel.
8. The method of claim 1, wherein said payment card is a powered card.
9. The method of claim 1, wherein said payment card is a non-powered card.
10. The method of claim 1, wherein said payment card simulates a series of touches to a display of said mobile device to establish at least a portion of said contactless communication channel.
11. The method of claim 1, wherein said mobile device communicates an optical data stream to said payment card to establish at least a portion of said contactless communication channel.
12. The method of claim 2, wherein a powered card communicates said target account information.
13. The method of claim 2, wherein a non-powered card communicates said target account information.
14. The method of claim 2, wherein a powered card communicates said source account information.
15. The method of claim 2, wherein a non-powered card communicates said source account information.
16. The method of claim 2, wherein said first mobile device is a laptop computer.
17. The method of claim 2, wherein said first mobile device is a PDA.
18. The method of claim 2, wherein said first mobile device is a phone.
19. The method of claim 2, wherein said second mobile device is a laptop computer.
20. The method of claim 2, wherein said second mobile device is a PDA.
21. The method of claim 2, wherein said second mobile device is a phone.
22. A method, comprising:
   establishing a contactless communication channel between one or more physical cards and a mobile device;
   communicating information from said physical card to said mobile device using said contactless communication channel;
   creating a mobile wallet of virtual cards within a memory of said mobile device from said communicated information; and
   selecting one of said virtual cards to complete a purchase transaction using said mobile device.
23. The method of claim 22, wherein said mobile device is a laptop.
24. The method of claim 22, wherein said mobile device is a PDA.
25. The method of claim 22, wherein said mobile device is a phone.
26. The method of claim 22, wherein said mobile device is an MP3 device.
27. The method of claim 22, wherein said mobile device is a GPS device.
28. The method of claim 22, wherein said physical card is a non-powered card.
29. The method of claim 22, wherein said physical card is a powered card.
30. The method of claim 22, wherein said contactless communication channel is an RFID communication channel.
31. The method of claim 22, wherein said mobile device and said physical card are brought within a proximity distance of up to two inches to establish said contactless communication channel.
32. The method of claim 22, wherein said physical card simulates a series of touches to a display of said mobile device to establish at least a portion of said contactless communication channel.
33. The method of claim 22, wherein said mobile device communicates an optical data stream to said physical card to establish at least a portion of said contactless communication channel.
34. The method of claim 22, wherein establishing said contactless communication channel comprises entering a PIN associated with said physical card to authorize said communicated information.
35. The method of claim 22, wherein said communicated information is selected based on manual input entered into said physical card.
36. The method of claim 22, wherein said communicated information includes payment information associated with a first payment account selected by pressing a first button of said physical card.
37. The method of claim 22, wherein said virtual cards include gift cards.
38. The method of claim 22, wherein said mobile device includes a graphical user interface to modify a visual appearance of said virtual cards as displayed by said mobile device.
39. The method of claim 22, wherein said communicated information is used to create a visual appearance of said virtual cards as displayed by said mobile device.
40. The method of claim 22, wherein said virtual cards are sorted onto a display of said mobile device based on manual input selection received by a graphical user interface of said mobile device.
41. The method of claim 22, wherein completing said purchase transaction includes establishing a second contactless communication channel between said mobile device and a merchant terminal and communicating payment information associated with said selected virtual card to said merchant terminal via said second contactless communication channel.
42. A method, comprising:
   executing an application on a processor of a mobile device to perform a function;
   communicating information to said mobile device from a contactless device using a contactless communication channel;
   confirming said communicated information matches at least a portion of predetermined information; and
   executing said function from said mobile device based on said confirmation.
43. The method of claim 42, wherein said mobile device is a laptop.
44. The method of claim 42, wherein said mobile device is a PDA.
45. The method of claim 42, wherein said mobile device is a phone.
46. The method of claim 42, wherein said mobile device is an MP3 device.
47. The method of claim 42, wherein said mobile device is a GPS device.
48. The method of claim 42, wherein said contactless device is a non-powered card.
49. The method of claim 42, wherein said contactless device is a powered card.
50. The method of claim 42, wherein said contactless device is an automobile key.
51. The method of claim 42, wherein said contactless device is a home door key.
52. The method of claim 42, wherein said contactless device is a key to a safe deposit box.
53. The method of claim 42, wherein said contactless communication channel is an RFID communication channel.
54. The method of claim 42, wherein a camera of said mobile device establishes said contactless communication channel.
55. The method of claim 42, wherein said contactless device is a powered card, said mobile device and said powered card being brought within a proximity distance of up to two inches to establish said contactless communication channel.
56. The method of claim 42, wherein said contactless device is a powered card, said powered card simulating a series of touches to a display of said mobile device to establish at least a portion of said contactless communication channel.
57. The method of claim 42, wherein said contactless device is a powered card, said mobile device communicating an optical data stream to said powered card to establish at least a portion of said contactless communication channel.
58. The method of claim 42, wherein said predetermined information exists on a memory of said mobile device.
59. The method of claim 42, wherein said predetermined information exists on a memory of a remote authorization server.
60. The method of claim 42, wherein said contactless device is a non-powered card, said non-powered card providing said communicated information to authorize a purchase transaction based on payment account information associated with said non-powered card.
61. The method of claim 42, wherein said function is executed by a device external to said mobile device.
62. A card, comprising:
   a first board including a first RFID chip and a first RFID antenna; and
   a second board including a processor, wherein first data is transferred from said processor to said first RFID chip via conductive terminals between said first and second boards and wherein said first data is communicated from said first RFID chip to a first RFID communication channel via said first RFID antenna.
63. A card, comprising:
   a first board including a first RFID antenna; and
   a second board including a first RFID chip and a processor, wherein first data is transferred from said processor to said RFID chip and wherein said first data is communicated from said first RFID chip to a first RFID communication channel via said first RFID antenna.
64. The card of claim 62, further comprising a second RFID antenna, wherein second data is transferred from said processor to a second RFID chip via conductive terminals between said first and second boards and wherein said second data is communicated from said second RFID chip to a second RFID communication channel via said second RFID antenna, said first and second data being the same.
65. The card of claim 62, further comprising a second RFID antenna, wherein second data is transferred from said processor to a second RFID chip via conductive terminals between said first and second boards and wherein said second data is communicated from said second RFID chip to a second RFID communication channel via said second RFID antenna, said first and second data being different.
66. The card of claim 62, further comprising a second RFID antenna, wherein second data is transferred from said processor to a second RFID chip via conductive terminals between said first and second boards and wherein said second data is communicated from said second RFID chip to a second RFID communication channel via said second RFID antenna, wherein a difference between said first and second data forms information for a third RFID communication channel.
67. The card of claim 62, further comprising a second RFID antenna, wherein second data is transferred from said processor to a second RFID chip via conductive terminals between said first and second boards and wherein said second data is communicated from said second RFID chip to a second RFID communication channel via said second RFID antenna, wherein a first difference between said first and second data forms information for a third RFID communication channel and a second difference between said first and second data forms information for a fourth RFID communication channel.
68. The card of claim 62, wherein said first data is erased from said first RFID chip after said first data is communicated from said first RFID chip to said first RFID communication channel.
   8. The card of claim 1, wherein said first data is erased from said first RFID chip after a delay period has expired.
69. The card of claim 62, wherein said first and second boards are encapsulated, said encapsulation being laminated between first and second lamination layers.
70. The card of claim 62, further comprising a dynamic magnetic stripe communications device.
71. The card of claim 63, further comprising a second RFID antenna, wherein second data is transferred from said processor to a second RFID chip and wherein said second data is communicated from said second RFID chip to a second RFID communication channel via said second RFID antenna, said first and second data being the same.
72. The card of claim 63, further comprising a second RFID antenna, wherein second data is transferred from said processor to a second RFID chip and wherein said second data is communicated from said second RFID chip to a second RFID communication channel via said second RFID antenna, said first and second data being different.
73. The card of claim 63, further comprising a second RFID antenna, wherein second data is transferred from said processor to a second RFID chip and wherein said second data is communicated from said second RFID chip to a second RFID communication channel via said second RFID antenna, wherein a first difference between said first and second data forms information for a third RFID communication channel.
74. The card of claim 63, further comprising a second RFID antenna, wherein second data is transferred from said processor to a second RFID chip and wherein said second data is communicated from said second RFID chip to a second RFID communication channel via said second RFID antenna, wherein a first difference between said first and second data forms information for a third RFID communication channel and a second difference between said first and second data forms information for a fourth RFID communication channel.
75. The card of claim 63, wherein said first data is erased from said first RFID chip after said first data is communicated from said first RFID chip to said first RFID communication channel.
76. The card of claim 63, wherein said first data is erased from said first RFID chip after a delay period has expired.
77. The card of claim 63, wherein said first and second boards are encapsulated, said encapsulation being laminated between first and second lamination layers.
78. The card of claim 63, further comprising a dynamic magnetic stripe communications device.
79. A method comprising:
   communicating first data from a device to a reader via a first RFID communication channel;
   communicating second data from said device to said reader via a second RFID communication channel;
   receiving said first and second data via said reader; and
   avoiding collisions between said first and second data within said reader.
80. The method of claim 79, wherein said first and second data are different.
81. A system, comprising:
   means for accessing a network;
   means for selecting an object for purchase from said network;
   means for communicating payment information from a payment card to a mobile device; and
   means for communicating said payment information from said mobile device to a network to complete a purchase transaction for said object.
82. A system, comprising:
   means for communicating source account information to a first mobile device;
   means for communicating target account information to a second mobile device;
   means for communicating said target account information from said second mobile device to said first mobile device; and
   means for coordinating a money transfer from said source account into said target account.
83. A system, comprising:
   means for establishing a contactless communication channel between one or more physical cards and a mobile device;
   means for communicating information from said physical card to said mobile device using said contactless communication channel;
   means for creating a mobile wallet of virtual cards within a memory of said mobile device from said communicated information; and
   means for selecting one of said virtual cards to complete a purchase transaction using said mobile device.
84. A system, comprising:
   means for executing an application on a mobile device to perform a function;
   means for communicating information to said mobile device from a contactless device;
   means for confirming said communicated information matches at least a portion of predetermined information; and
   means for executing said function from said mobile device based on said confirmation.

## Claims

1. A mobile telephone apparatus **characterized by**:
antenna means for receiving telecommunications signals;
interactive display means for displaying graphical indicia and receiving manual inputs;
RFID antenna means for at least one of sending an RFID signal to a payment device means and receiving the RFID signal from the payment device means, said RFID signal being indicative of a payment transaction;
storage means for storing payment information for an outgoing RFID signal for transmission through said RFID antenna means, wherein said payment information is stored in said storage means from the payment device means, said payment information was extracted from said payment device means by said RFID antenna means when said payment device means was within the proximity of said mobile telephone apparatus, and said payment information extracted from said payment device means is stored in said storage means;
processor means for providing instructions to said storage means, wherein said processor processes said received RFID signal, said processor determines that said payment information is to be communicated through said RFID antenna, and said processor causes said RFID antenna to complete said payment transaction by sending said outgoing RFID signal through said RFID antenna.

2. The mobile telephone apparatus of claim 1, wherein said processor determines that a manual input is needed for said payment transaction, said processor causes said display to display a manual input prompt, said processor receives information from said display means indicative of received manual input, and said processor causes said RFID antenna to complete said payment transaction based on said received manual input by sending said outgoing RFID signal through said RFID antenna.

3. The mobile telephone apparatus of claim 2, further **characterized by** determination means for detecting the completion of a timeout period and erasing said payment information based on said determined timeout.

4. The mobile telephone apparatus of claim 2 or claim 3, further **characterized by** second storage means for storing said payment information, wherein a second manual input is received and causes said payment information to be stored in said storage means.

5. The mobile telephone apparatus of claim 4, wherein said received RFID signal is provided by a stationary, personal computer.

6. The mobile telephone apparatus of any preceding claim, wherein second payment information is stored on said storage means and said second payment information was extracted from a second payment device using said RFID antenna means.

7. The mobile telephone apparatus of claim 6, wherein second information associated with said second payment information is displayed on said interactive display means and a confirmation manual input prompt is displayed requesting confirmation of said second information.

8. The mobile telephone apparatus of claim 7, wherein said second information includes a card ID.

9. The mobile telephone apparatus of claim 7 or claim 8, wherein a manual selection is made on said interactive display means to select said payment information, from a group of payment information including said second payment information, for a purchase transaction.

10. The mobile telephone apparatus of claim 9, wherein a request is displayed on said display means before the completion of said purchase transaction to validate said payment information by requesting the application of said payment card means storing said payment information to be read by said RFID antenna means.
